# EUROPEAN PATENT APPLICATION

(11) **EP 2 796 904 A1**
(43) Date of publication of application: **29.10.2014**
(21) Application number: 12860646.4
(22) Date of filing: 19.12.2012
(51) Int. Cl.: G02B 5/08, F24J 2/10, G02B 7/182

(54) **FILM MIRROR FOR SOLAR LIGHT REFLECTION, AND REFLECTIVE DEVICE FOR SOLAR POWER GENERATION**

(30) Priority: 21.12.2011 JP 2011279516
(71) Applicant: Konica Minolta, Inc., Tokyo 100-7015 (JP)
(72) Inventor: KUMAGAI, Takenori, Tokyo 1000006 (JP)
(74) Representative: Green, Mark Charles
(86) International application number: PCT/JP2012/082903
(87) International publication number: WO 2013/094633

(57) **Abstract**

Provided is a film mirror for solar light reflection, which is so adapted that a protective layer containing a resin is arranged on the solar light incident side relative to a resin-film-like support and a silver reflective layer. The resin has a benzotriazole-type ultraviolet-ray-absorbing group and/or a triazine-type ultraviolet-ray-absorbing group.

## Description

### TECHNICAL FIELD

The present invention relates to a film mirror for solar light reflection and a reflective device for solar power generation.

### BACKGROUND ART

Global warming in recent years has developed into such a serious situation to threaten even the survival of mankind in the future. The main cause of global warming has been believed to be atmospheric carbon dioxide (CO₂) emitted from fossil fuels which have been used in large amounts as energy sources in the 20th century Accordingly, in the near future, it may be no longer possible to continue the use of fossil fuels at the current rate. At the same time, depletion of petroleum oil and natural gas, which were believed to be inexhaustible in the past, seems to become more likely due to increasing energy demand accompanied by the rapid economic growth of so-called developing countries such as China, India and Brazil.

The solar energy is considered to be natural energy source which is most stable as an alternative energy source of a fossil fuel and has much quantity. Especially, since the vast desert spreads out near the equator called Sun Belt Places in the world, the solar energy poured thereto is quite inexhaustible supply. If only several percent of the desert which spreads in the southwestern U.S. is used for this purpose, it is thought possible to acquire energy of as many as 7,000 GW. Moreover, if only several percent of the desert of Arabian Peninsula and North Africa is used, it is thought that all the energy that all mankind uses can be provided.

However, even though solar energy is considered as a very strong alternative energy, in terms of utilizing it in social activities, it has problems such that (1) energy density of solar energy is low and (2) storage and transfer of solar energy are difficult.

In order to resolve the problem that the energy density of solar energy is low, proposed is a reflective device which can collect solar energy.

Conventionally, a mirror formed by using glass as a substrate has been used for a reflective device. However, a mirror made of glass has a problem that it has high mass and a large volume, requires cost for transport, and is difficult to install and is easily broken. Accordingly, when a mirror made of a resin is used as a substitute for glass, not only light weight can be achieved but also problems such as fracture do not occur, and thus a film mirror, which is a mirror product prepared as a film, receives attention. Since the film mirror is a mirror in film form in which a resin is used, it is an excellent reflective mirror having flexibility as being lightweight and capable of allowing large area formation and mass production while suppressing the production cost.

However, a resin is generally vulnerable to ultraviolet rays, and thus when it is installed under sun light, there is a problem that the resin layer of a film mirror (in the present invention, a layer by resin-film-like support) is deteriorated to cause an occurrence of discoloration, film peeling, or a crack. With regard to such problems, a protective layer added with an ultraviolet-ray-absorbing agent or an antioxidant to protect the resin layer from ultraviolet rays is disclosed in Patent Literature 1. However, since a low molecular weight compound such as an ultraviolet-ray-absorbing agent or an antioxidant is added in the protective layer, once the resin is deteriorated as a result of contacting ultraviolet rays, an interaction between the low molecular weight compound and a resin material is weakened, and as a result, a problem of having bleed out of the low molecular weight compound, a problem of having a difficulty in maintaining weather resistance over 10 years or longer due to limited addition amount from the viewpoint of compatibility, and a critical problem of having lowered reflectance of the film mirror caused by bleed out occur. Further, as a result of intensive investigations, the inventors of the present invention found an intrinsic problem of a film mirror, that is, a problem that regular reflectance (regular reflectance) is lowered, since silver in a silver reflective layer is aggregated by the radicals to yield a gap in the silver reflective layer or cause a color change when radicals generated according to exposure of the resin to ultraviolet rays reach the silver reflective layer.

A problem also occurs in relation to location in which a film mirror is installed. For example, a desert environment in which a film mirror for solar light reflection is particularly preferably used has harsh conditions including a high variation in each of day temperature and humidity, rainstorm, sandstorm, long daylight hours, and high irradiation amount of ultraviolet rays.

The film mirror for solar light reflection has a silver reflective layer so that it strongly reflects some of ultraviolet rays included in solar light. Specifically, on a layer closer to the solar light incident side than the silver reflective layer, after solar light is directly irradiated thereto, it is reflected by the silver reflective layer and reaches again the same layer. In other words, in an area having a high irradiation amount of ultraviolet rays by solar light, being exposed twice to ultraviolet rays caused by reflection, a problem of bleed out or silver aggregation is more significant. Therefore, in the film mirror for solar light reflection, measures against ultraviolet rays are very important.

Meanwhile, although it is not aimed to use as a film mirror for solar light reflection, a protective layer made of an ultraviolet-ray-absorbing resin composition in which a polyester resin itself has an ultraviolet-ray-absorbing group is disclosed in Patent Literature 2.

The inventors of the present invention found that, in view of the techniques related to the film mirror for solar light reflection described in Patent Literature 2, bleed out of a material having an ultraviolet-ray-absorbing capability can be almost ignored or compatibility can be improved so that the protective layer can have more ultraviolet-ray-absorbing groups compared to a case in which an ultraviolet-ray-absorbing agent is added.

Meanwhile, in Patent Literature 2, there is no description indicating the use as a film mirror for solar light reflection, no description relating to the problem of having bleed out of a material having ultraviolet-ray-absorbing capability or the intrinsic problem of a film mirror, that is, a problem that reflectance is lowered accompanying the bleed out and silver is aggregated by the radicals which are generated from a resin, and no mention is included therein regarding the effect of having almost negligible bleed out of a material having ultraviolet-ray-absorbing capability or the effect of adding more ultraviolet-ray-absorbing groups to a resin of the protective layer compared to a case of adding an ultraviolet-ray-absorbing agent due to good compatibility.

The inventors of the present invention took notice that the film mirror for solar light reflection is used in an environment having a great ultraviolet irradiation amount like desert, a protective layer is irradiated twice with some of ultraviolet rays included in solar light due to having a silver reflective layer, and also in view of intrinsic problems of the film mirror for solar light reflection such as bleed out, compatibility, lowered reflectance accompanying bleed out, silver aggregation, discoloration, film peeling, a crack and the like, they conducted intensive studies, and as a result, found that the techniques of Patent Literature 2 can be referenced. It is strongly emphasized that applying the invention of Patent Literature 2, in which problems caused by being a film mirror having a silver reflective layer are not described, to the present invention having an object of having solar light reflection is a unique viewpoint of the present invention and it is not easy at all.

### CITATION LIST

### PATENT LITERATURE

Patent Literature 1: JP2011-150316A
Patent Literature 2: JP 2010-7027 A

### SUMMARY OF INVENTION

### TECHNICAL PROBLEM

An object of the present invention is to provide a film mirror for solar light reflection and a reflective device for solar power generation which can be desirably used even in an environment having a high ultraviolet irradiation amount like desert.

### SOLUTION TO PROBLEM

A film mirror for solar light reflection described in claim 1 is a film mirror for solar light reflection having a resin-film-like support, a silver reflective layer, and a protective layer. The protective layer is provided on a solar light incident side relative to the resin-film-like support and the silver reflective layer, the protective layer has a resin, and the resin has an ultraviolet-ray-absorbing group of (1) and/or (2).
(1) Benzotriazole-type ultraviolet-ray-absorbing group
(2) Triazine-type ultraviolet-ray-absorbing group

According to the above constitution, the film mirror for solar light reflection consists of a resin, and thus it is lightweight and has flexibility, and it is possible to have large area formation and mass production while suppressing the production cost. Further, since the protective layer is provided on a solar light incident side relative to the resin-film-like support, it is possible to prevent deterioration of the resin-film-like support. Further, since the protective layer has ultraviolet-ray-absorbing capability, it obviously has less discoloration, film peeling, or a crack of the resin-film-like support or the like compared to a film mirror having no protective layer. Particularly, since the group contained in a resin of the protective layer is a benzotriazole-type ultraviolet-ray-absorbing group and/or a triazine-type ultraviolet-ray-absorbing group, it has suitable resistance to ultraviolet rays against wavelength characteristics of solar light (ultraviolet-ray-absorbing capability or stability against ultraviolet rays). It is also possible to suppress ultraviolet ray-caused deterioration of each layer arranged on an opposite side to the solar light incident side relative to the protective layer and suppress the resin deterioration of the protective layer itself. Further, since the resin of the protective layer of the film mirror has an ultraviolet-ray-absorbing group, the resin itself becomes a polymer compound having an ultraviolet-ray-absorbing group. As a result, interaction between the resin and the ultraviolet-ray-absorbing group becomes stronger so that it is highly unlikely to have an occurrence of bleed out of the ultraviolet-ray-absorbing group. In addition, as the ultraviolet-ray-absorbing group is not added but contained in the resin, even more ultraviolet-ray-absorbing groups can be contained, compatibility is improved and resistance to ultraviolet rays is improved, and therefore very desirable. Further, since the film mirror is used in an environment with extremely high ultraviolet irradiation amount like desert and also has a silver reflective layer, the protective layer is irradiated twice with some of ultraviolet rays included in solar light so that the bleed out problem or silver aggregation problem becomes particularly significant. However, since the resin of the protective layer has, as a group, an ultraviolet-ray-absorbing group, it is unlikely to have an occurrence of bleed out, and compared to a case in which an ultraviolet-ray-absorbing agent is added, it is possible to have higher resistance to ultraviolet rays, and thus an occurrence of radicals caused by deterioration of resin can be prevented and high regular reflectance can be maintained without causing silver aggregation. Further, since the bleed out is almost negligible according to the aforementioned constitution, lowered reflectance accompanying the bleed out, which is a critical problem for a film mirror for solar light reflection, can be avoided so that high regular reflectance can be maintained.

The film mirror for solar light reflection described in claim 2 relates to the invention described in claim 1, characterized in that the above benzotriazole-type ultraviolet-ray-absorbing group has the composition of the following formula (1a) or (1b) and the above triazine-type ultraviolet-ray-absorbing group has the composition of the following formula (2). 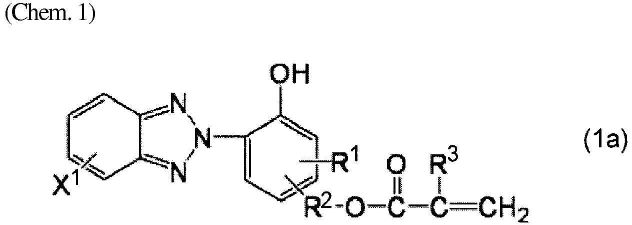 (in the formula, R¹ represents a hydrogen atom or an alkyl group having 1 to 8 carbon atoms, R² represents an alkylene group having 1 to 6 carbon atoms, R³ represents a hydrogen atom or a methyl group, X¹ represents a hydrogen atom, a halogen atom, an alkyl group having 1 to 8 carbon atoms, an alkoxy group having 1 to 6 carbon atoms, cyano group, or nitro group). 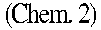 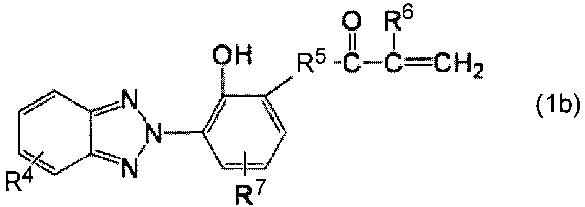 (in the formula, R⁴ represents a hydrogen atom, a halogen atom, an alkyl group having 1 to 8 carbon atoms, an alkoxy group having 1 to 4 carbon atoms, cyano group, or nitro group, R⁵ represents a group which has an element capable of forming a hydrogen bond, R⁶ represents a hydrogen atom or a methyl group, and R⁷ represents a hydrogen atom or an alkyl group having 1 to 12 carbon atoms). 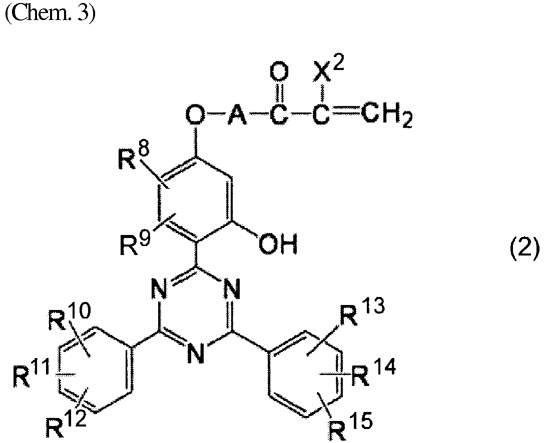 (in the formula, R⁸, R⁹, R¹⁰, R¹¹, R¹², R¹³, R¹⁴, and R¹⁵ each independently represent a hydrogen atom, an alkyl group having 1 to 10 carbon atoms, an alkenyl group having 2 to 10 carbon atoms, or an alkoxy group having 1 to 10 carbon atoms, X² represents a hydrogen atom or a methyl group, A represents - (CH₂CH₂O)ₚ-, -CH₂CH(OH)-CH₂O-, -(CH₂)ₚ-O-, -CH₂CH(CH₂₀R¹⁶)-O-, -CH₂CH(R¹⁶)-O-, or-CH₂(CH₂)_{q}COO-B-O-, R¹⁶ represents an alkyl group having 1 to 10 carbon atoms, B represents a methylene group, an ethylene group, or -CH₂CH(OH)CH₂-, p represents an integer of 1 to 20, and q represents 0 or 1).

The film mirror for solar light reflection described in claim 3 relates to the invention described in claim 1 or 2, characterized in that the above resin has an antioxidant group. According to the constitution, the resin for constituting the protective layer has an antioxidant group so that it can inactivate radicals, active oxygen or the like that are generated when the resin of the protective layer is exposed to ultraviolet rays. Further, when the ultraviolet-ray-absorbing agent or ultraviolet-ray-absorbing group is exposed to ultraviolet rays excessively and/or for a long period of time, polarity of the ultraviolet-ray-absorbing agent or ultraviolet-ray-absorbing group is changed, the ultraviolet-ray-absorbing agent or ultraviolet-ray-absorbing group itself is decomposed, and further radicals are generated. According to the constitution described in claim 3, a decrease in regular reflectance of the film mirror, which is caused by a gap in the silver reflective layer or discoloration due to aggregation of silver in the silver reflective layer as caused by radicals generated by degradation of the resin and/or the group contained in the resin, can be prevented since the resin has an antioxidant group. Since the resin has both groups of the ultraviolet-ray-absorbing group and the antioxidant group, a synergistic effect is obtained instead of an additive effect. By having an antioxidant group, deterioration of the ultraviolet-ray-absorbing group can be prevented, that is, stability against ultraviolet rays is provided, and thus it can contribute to long lifetime of a protective layer. Further, since the resin of the protective layer has an antioxidant group, the distance between the ultraviolet-ray-absorbing group and the antioxidant group is short so that it is easy to inactivate the radicals generated by ultraviolet rays. As a result, compared to a case in which an antioxidant is added, the protective layer has longer lifetime even in an environment with ultraviolet rays. Furthermore, since the resin of the protective layer has an antioxidant group, unlike the protective layer added with an antioxidant, bleed out of the antioxidant group itself hardly occurs with the same reason as the ultraviolet-ray-absorbing group, and also by having good compatibility, it can be contained in a large amount and an influence of lower regular reflectance caused by bleed out can be avoided.

The film mirror for solar light reflection described in claim 4 relates to the invention described in claim 3, characterized in that the antioxidant group is HALS. According to the constitution, since HALS as an antioxidant group binds to a resin skeleton, stability of the protective layer against ultraviolet rays is maintained particularly for a long period of time and therefore desirable.

The film mirror for solar light reflection described in claim 5 relates to the invention described in claim 4, characterized in that HALS is single side polymerization group-modifying type HALS. According to the constitution, HALS is single side polymerization group-modifying type HALS and thus it is desirable in terms of easy production and low cost.

The film mirror for solar light reflection described in claim 6 relates to the invention described in any one of claims 1 to 5, characterized in that the film mirror for solar light reflection has an acrylic layer and the acrylic layer is provided between the silver reflective layer and the protective layer. According to the constitution, the acrylic layer more easily yields irregularities than a resin such as polyethylene terephthalate, and thus the surface roughness of a mirror for solar light reflection increases due to the irregularities on a surface of the acrylic layer. As such, even when a roll-to-roll method for continuously forming a film as the film mirror is used, sticking like blocking can be prevented when the film mirror is wound in a roll shape. Further, when an acrylic resin is used as a resin of the protective layer and also the acrylic layer and the protective layer are closely arranged to each other, adhesiveness between the acrylic layer and the protective layer can be maintained at high level.

The film mirror for solar light reflection described in claim 7 relates to the invention described in claim 6, characterized in that no adhesive layer is present between the silver reflective layer and the protective layer. According to the constitution, since no adhesive layer is present between the silver reflective layer and the protective layer, an acrylic layer present between the silver reflective layer and the protective layer is formed by, for example, coating on the solar light incident side relative to the silver reflective layer. Further, as no adhesive layer is present between the silver reflective layer and the protective layer, the protective layer is also formed by coating on the solar light incident side relative to the acrylic layer. When an adhesive layer is not present, an acrylic layer or a protective layer is formed by coating or the like. However, as a large amount of coating liquid is used at that time, almost negligible penetration problem of the coating liquid of the acrylic layer or protective layer into the silver reflective layer occurs when a film is laminated. When the resin of the coating liquid of the acrylic layer or protective layer is exposed to ultraviolet rays, radicals are generated, and when the radicals reach the silver reflective layer, silver aggregation is caused, that is, a problem of silver aggregation becomes more significant when the acrylic layer or the protective layer is formed by coating. However, by having an ultraviolet-ray-absorbing group in the resin, a greater amount of ultraviolet-ray-absorbing group can be included compared to a case in which an ultraviolet-ray-absorbing agent is added, and therefore high resistance to ultraviolet rays can be obtained so that generation of radicals from the coating liquid of the acrylic layer or protective layer can be suppressed. Further, when the protective layer has an antioxidant group, radicals generated from the resin of the protective layer or acrylic layer or radicals generated not from the resin can be also inactivated and the aggregation of the silver reflective layer can be further prevented, and therefore desirable. Further, by not having an adhesive layer, it becomes possible to have a thinner film mirror. According to the constitution, as no adhesive layer is present between the silver reflective layer and the protective layer, the distance between the silver reflective layer and the protective layer is shortened, and thus the radicals generated in accordance with degradation of the resin of the protective layer or an ultraviolet-ray-absorbing group contained in the resin by ultraviolet rays can more easily reach the silver reflective layer. However, according to the above constitution, since the resin has an ultraviolet-ray-absorbing group, it is possible to have high resistance to ultraviolet rays and to suppress radical generation for a long period of time, and thus aggregation, loss, or discoloration of silver in the silver reflective layer can be prevented.

The film mirror for solar light reflection described in claim 8 relates to the invention described in any one of claims 1 to 5, characterized in that the film mirror for solar light reflection has an acrylic layer and the protective layer is provided between the silver reflective layer and the acrylic layer. According to the constitution, the acrylic layer more easily yields irregularities than a resin such as polyethylene terephthalate, and thus the surface roughness of a mirror for solar light reflection increases due to the irregularities on a surface of the acrylic layer. As such, even when a roll-to-roll method for continuously forming a film as the film mirror is used, sticking like blocking can be prevented when the film mirror is wound in a roll shape. Further, when an acrylic resin is used as a resin of the protective layer and also the acrylic layer and the protective layer are closely arranged to each other, adhesiveness between the acrylic layer and the protective layer can be maintained at high level.

The film mirror for solar light reflection described in claim 9 relates to the invention described in any one of claims 1 to 8, characterized in that a total film thickness from the surface on the solar light incident side of the silver reflective layer to the outermost surface on the solar light incident side of the film mirror for solar light reflection is 5 µm or more and 125 µm or less. According to the constitution, since the film thickness is thin for solar light to reach the silver reflective layer, that is, 5 µm or more and 125 µm, it is difficult to have intensity attenuation by a layer through which solar light passes until it reaches the silver reflective layer. Since penetration through the layer on a surface of the film mirror occurs again after reflection by the silver reflective layer, obviously, it is also difficult to have intensity attenuation with thin film thickness. Further, cost relating to materials can be reduced, transport efficiency is improved by having decreased weight, and manpower for production can be also reduced.

A reflective device for solar power generation described in claim 10 is characterized in that it has the film mirror for solar light reflection described in any one of claims 1 to 9 and a holding member.

### ADVANTAGEOUS EFFECTS OF INVENTION

According to the present invention, it is possible to provide a film mirror for solar light reflection and a reflective device for solar power generation, which can significantly reduce bleed out of a protective layer, lowered reflectance accompanying the bleed out, silver aggregation, discoloration, film peeling of a resin-film-like support or the like, a crack or the like and has high compatibility even when it is used in an environment with strong ultraviolet rays.

### BRIEF DESCRIPTION OF DRAWINGS

Fig. 1 is an explanatory diagram illustrating an example of the layer constitution of a film mirror for solar light reflection.
Fig. 2 is a perspective view illustrating a tower type solar power generation system using a reflective device for solar power generation.
Fig. 3 is a schematic view of the tower type solar power generation system as viewed from the side.
Fig. 4 is an explanatory diagram illustrating the layer structure of the film mirror for solar light reflection of an Example.
Fig. 5 is an explanatory diagram illustrating the layer structure of the film mirror for solar light reflection of other Examples.

### DESCRIPTION OF EMBODIMENTS

Hereinafter, details of a film mirror for solar light reflection according to the present invention are described. However, although the embodiments described below are given with various limitations that are technically desirable for carrying out the present invention, the scope of the present invention is not limited to the following embodiments and illustrated examples shown below.

Meanwhile, based on the finding that a film mirror for solar light reflection is used in an environment having a great ultraviolet irradiation amount like desert, a protective layer is irradiated twice with some of ultraviolet rays included in solar light due to having a silver reflective layer, and also there are intrinsic problems of the film mirror for solar light reflection such as bleed out, compatibility, lowered reflectance accompanying bleed out, lowered reflectance caused by silver aggregation, discoloration, film peeling, a crack or the like, the present invention is to provide a solution therefor.

### (1. Film mirror for solar light reflection)

The film mirror for solar light reflection indicates a film-like mirror having at least a resin-film-like support, a silver reflective layer, and a protective layer. Further, the protective layer is provided on the solar light incident side relative to the resin-film-like support and the silver reflective layer. The thickness of the film mirror is 20 to 600 µm, preferably 80 to 300 µm, more preferably 80 to 200 µm, and most preferably 80 to 170 µm. By having the film mirror thickness of 20 µm or more, the mirror is not bent and it becomes easy to obtain good reflectance when the film mirror is laminated onto a substrate or the like for holding the film mirror, and therefore desirable. Further, by having the film mirror thickness of 600 µm or less, handlability is improved, and therefore desirable. Since the film mirror has a planar characteristic, it can be produced by roll-to-roll, which is desirably used from the viewpoint of production cost. Further, due to the material used and having a thickness of 20 to 600 µm, it can be said that the film mirror has a very light weight. Further, unlike glass, the film mirror does not have a problem like fracture since the support is a resin film, and has flexibility. In other words, the film mirror is characterized in that it has a light weight and flexibility and is capable of large area formation and mass production while suppressing the production cost.

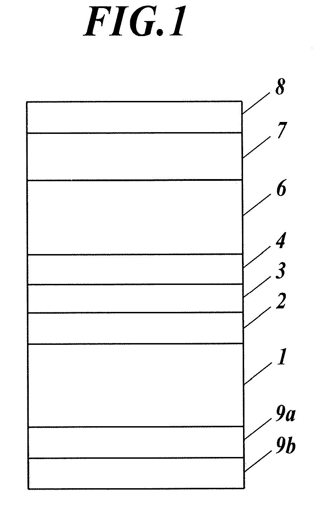

The film mirror for solar light reflection may have a layer other than the resin-film-like support, the silver reflective layer, and the protective layer. Preferably, it has any one of a hard coat layer, an acrylic layer, a resin coat layer, an anchor layer, and an adhesive layer, or several or all kinds of them. Meanwhile, when it has each layer described above, it preferably has a positional relationship that, from the solar light incident side, a hard coat layer 8, a protective layer 7, an acrylic layer 6, a resin coat layer 4, a silver reflective layer 3, an anchor layer 2, a resin-film-like support 1, an adhesive layer 9a, and a peeling layer 9b are present in order as illustrated in Fig. 1. When it has an acrylic layer, in particular, the acrylic layer is preferably formed between the silver reflective layer and the protective layer. However, it is possible to form a protective layer between the silver reflective layer and the acrylic layer. Obviously, it is also possible that other layer is arranged on the solar light incident side of any layer described above or on the opposite side thereof, and there may be a plurality of such other layers. Obviously, it is also possible that the respective layers described above are adjacent to each other.

Further, an adhesive layer may be formed between any layers. For example, an adhesive layer may be formed between the acrylic layer and the resin coat layer. Further, a layer formed of a peeling sheet (peeling layer) may be formed to cover the adhesive layer.

Meanwhile, the surface roughness of the film mirror (Ra) is preferably 0.01 µm or more and 0.1 µm or less, and more preferably 0.02 µm or more and 0.07 µm or less. When the surface roughness of the film mirror is 0.01 µm or more, it is possible to prevent reflection reduction which is caused by having finger printing due to the surface roughness when the surface is accidentally touched by a finger at transport, assembly, or adjustment of the film mirror for solar light reflection. Further, when the roll-to-roll method allowing continuous film forming is used at formation of a film mirror, sticking like blocking can be prevented by the surface roughness. When the surface roughness of the film mirror is 0.1 µm or less, scattering of solar light by the film mirror surface is not significant. In particular, if the surface roughness is 0.02 µm or more and 0.07 µm or less, the aforementioned effect becomes more significant. Meanwhile, the surface roughness is measured by a three-dimensional measurement device NH-3SP (Mitaka Kohki Co., Ltd.). Measurement conditions at that time include a measurement range of 2 mm, a measurement pitch of 2 µm, a 100x object lens, and a cut off value of 0.250 mm.

Hereinafter, details of the constitution of each layer, which are desirably possessed by the film mirror, are described.

### (2-1. Protective layer)

The protective layer is formed on the solar light incident side relative to the resin-film-like support and the silver reflective layer, and it has a resin. Further, the resin has an ultraviolet-ray-absorbing group of (1) and/or (2).
(1) Benzotriazole-type ultraviolet-ray-absorbing group
(2) Triazine-type ultraviolet-ray-absorbing group

The protective layer has a role of preventing ultraviolet ray-caused deterioration of a layer like the resin-film-like support or the silver reflective layer arranged on an opposite side to the solar light incident side relative to the protective layer. By having the protective layer, ultraviolet ray-caused deterioration of the resin-film-like support of the film mirror, in particular, does not occur so that discoloration, film peeling, a crack or the like is unlikely to occur. Further, since the group contained in the resin of the protective layer is a benzotriazole-type ultraviolet-ray-absorbing group and/or a triazine-type ultraviolet-ray-absorbing group, it has suitable resistance to ultraviolet rays against wavelength characteristics of solar light compared to other ultraviolet-ray-absorbing groups such as a benzophenone-type ultraviolet-ray-absorbing group. It is also possible to suppress ultraviolet ray-caused deterioration of a layer arranged on an opposite side to the solar light incident side relative to the protective layer and suppress the resin deterioration of the protective layer itself. Further, since the resin of the protective layer has an ultraviolet-ray-absorbing group, the resin becomes a polymer compound having an ultraviolet-ray-absorbing group, and thus bleed out is highly unlikely to occur. In addition, as the ultraviolet-ray-absorbing agent is not added to the resin but the resin has an ultraviolet-ray-absorbing group, even more ultraviolet-ray-absorbing groups can be contained and compatibility is improved compared to a case in which addition is made, and therefore very desirable. Further, since it is possible to have higher resistance to ultraviolet rays, an occurrence of radicals according to deterioration of a resin caused by ultraviolet rays can be prevented, and thus the intrinsic problem of a film mirror, that is, silver aggregation, can be prevented and high regular reflectance can be maintained. Moreover, because of the presence of the protective layer, the content of the ultraviolet-ray-absorbing agent in other layers can be reduced. Further, since the film mirror for solar light reflection is used in an environment with extremely high ultraviolet irradiation amount like desert and also has a silver reflective layer, even when the protective layer is irradiated twice with some of ultraviolet rays included in solar light, it is very unlikely to have an occurrence of bleed out, since the resin of the protective layer has an ultraviolet-ray-absorbing group. Further, since the bleed out is almost negligible in the protective layer, lowered reflectance accompanying the bleed out, which is a critical problem for a film mirror for solar light reflection, can be avoided so that high regular reflectance can be maintained.

Hereinafter, a case in which a resin of the protective layer has a benzotriazole-type ultraviolet-ray-absorbing property is described in detail. In general, those having a problem as ultraviolet rays included in solar light have a wavelength of about 400 nm or less, and the strength tends to increase as the wavelength gets closer to 400 nm. In this regard, the benzotriazole-type ultraviolet-ray-absorbing group has a maximum ultraviolet ray absorption wavelength of 345 nm or so. As the resin of the protective layer has a benzotriazole-type ultraviolet-ray-absorbing group, ultraviolet rays near 345 nm included in solar light can be absorbed in a large amount, and as a result, the ultraviolet ray irradiation amount on a layer opposite to the solar light incident side relative to the protective layer can be significantly reduced. Further, deterioration of the resin of the protective layer itself can be suppressed. Further, as an intrinsic problem of the film mirror for solar light reflection, some of ultraviolet rays not absorbed by the benzotriazole-type ultraviolet-ray-absorbing group are reflected by the silver reflective layer and irradiated again on the protective layer. However, instead of adding an ultraviolet-ray-absorbing agent, the resin has an ultraviolet-ray-absorbing group, and thus bleed out is almost negligible even in an environment with strong ultraviolet rays like desert. Further, if the resin having a benzotriazole-type ultraviolet-ray-absorbing group is adjacent to the silver reflective layer, it also functions as a corrosion inhibitor for preventing sulfation of silver.

Hereinafter, a case in which the resin of the protective layer has a triazine-type ultraviolet-ray-absorbing property is described in detail. The triazine-type ultraviolet-ray-absorbing group has a maximum ultraviolet ray absorption wavelength of 270 nm or so. As the resin of the protective layer has a triazine-type ultraviolet-ray-absorbing group, ultraviolet rays near 270 nm included in solar light can be absorbed in a large amount, and as a result, the ultraviolet ray irradiation amount on a layer opposite to the solar light incident side relative to the protective layer can be significantly reduced. Further, as an intrinsic problem of the film mirror for solar light reflection, some of ultraviolet rays not absorbed by the triazine-type ultraviolet-ray-absorbing group are reflected by the silver reflective layer and irradiated again on the protective layer. However, instead of adding an ultraviolet-ray-absorbing agent, the resin has an ultraviolet-ray-absorbing group, and thus bleed out is almost negligible even in an environment with strong ultraviolet rays like desert. Further, the triazine-type ultraviolet-ray-absorbing group has not only the ultraviolet-ray-absorbing capability near a wavelength of 270 nm but also a significantly less degradation by ultraviolet rays, that is, stability against ultraviolet rays, and thus it can contribute to additional long lifetime of the protective layer. Therefore, it is particularly suitable for use outdoors like desert.

Even when the ultraviolet-ray-absorbing group contained in the resin of the protective layer is just one of the benzotriazole-type ultraviolet-ray-absorbing group and triazine-type ultraviolet-ray-absorbing group, problems such as discoloration of the film mirror, film peeling, bleed out and generation of radicals in the protective layer can be lowered. However, it is more preferable for the resin to have both of the benzotriazole-type ultraviolet-ray-absorbing group and triazine-type ultraviolet-ray-absorbing group. When the resin of the protective layer has both ultraviolet-ray-absorbing groups, it is possible to sufficiently absorb ultraviolet rays even when modification degree by each is not so high. Further, since ultraviolet rays included in solar light can be absorbed over a wide range, lifetime of the protective layer is synergistically extended compared to a case in which each is used singly.

When the resin of the protective layer has an antioxidant group, radicals. active oxygen or the like that are generated when ultraviolet rays are irradiated onto the resin of the protective layer and/or the ultraviolet-ray-absorbing group contained in the resin and/or other solution can be inactivated, and thus further prevention of aggregation or discoloration of the silver reflective layer and a decrease in regular reflectance of the film mirror can be achieved. Further, a synergistic effect can be obtained by having both the ultraviolet-ray-absorbing group and the antioxidant group. With the antioxidant group, prevention of deterioration of the ultraviolet-ray-absorbing group, that is, stability against ultraviolet rays, can be obtained, and thus it can contribute to long lifetime of the protective layer. Further, as the resin of the protective layer has an antioxidant group, the distance between the ultraviolet-ray-absorbing group and the antioxidant group is short and the radicals generated by ultraviolet rays can be easily inactivated, and thus compared to a case of adding an anti-oxidizing agent, the protective layer has longer lifetime even in an environment with ultraviolet rays. Further, as the resin of the protective layer has an antioxidant group, unlike the protective layer added with an anti-oxidizing agent, bleed out of the antioxidant group itself hardly occurs, compatibility is high, and the influence of lowered regular reflectance caused by bleed out can be avoided.

In particular, the antioxidant group bound to the resin skeleton is preferably HALS. Single side polymerization group-modifying type HALS is preferred in terms of easy production and low cost. Two side polymerization group modifying-type HALS has very high stability against ultraviolet rays, since it can have higher modification degree of the resin by HALS. Further, the inventors of the present invention found that using the benzotriazole-type ultraviolet-ray-absorbing group as an ultraviolet-ray-absorbing group and HALS as an antioxidant group is preferred in that the lifetime of the protective layer is further extended due to synergistic effect.

The position of the protective layer in the film mirror for solar light reflection is not particularly limited as long as it is on the solar light incident side relative to the resin-film-like support or the silver reflective layer. Further, when the resin of the protective layer is an acrylic resin and is adjacent to the acrylic layer, interlayer adhesiveness between two layers is maintained at very high level so that film peeling is difficult to occur, and therefore desirable. Further, it is also possible to control the adhesiveness to the layer adjacent to the protective layer by adjusting the modification degree of the group contained in the resin of the protective layer.

Further, the thickness of the protective layer is 1 to 100 µm, and preferably 3 to 50 µm. When the thickness of the protective layer is 1 µm or more, it is easy to have high ultraviolet-ray-absorbing capability and when it is 100 µm or less, a decrease in the regular reflectance of the film mirror for solar light reflection is hardly caused and therefore desirable.

### (2-1-1. Resin used for protective layer)

As for the material of the resin used in the protective layer, conventionally known various resin films can be used. Examples thereof include a cellulose ester film, a polyester film, a polycarbonate film, a polyarylate film, a polysulphone (including polyether sulfone) film, a polyester film such as a polyethylene terephthalate film or a polyethylene naphthalate film, a polyethylene film, a polypropylene film, cellophane, a cellulose diacetate film, a cellulose triacetate film, a cellulose acetate propionate film, a cellulose acetate butyrate film, a polyvinylidene chloride film, a polyvinyl alcohol film, an ethylene vinyl alcohol film, a syndiotactic polystyrene film, a polycarbonate film, a norbornene resin film, a polymethylpentene film, a polyether ketone film, a polyether ketone imide film, a polyamide film, a fluororesin film, a nylon film, a polymethyl methacrylate film, and an acrylic film. Among them, preferred are a polycarbonate film, a polyester film such as a polyethylene terephthalate film, a norbornene resin film, a cellulose ester film, and an acrylic film. In particular, a polyester film such as a polyethylene terephthalate film or an acrylic film is preferably used, and it may be a film produced by film formation based on melt casting or solution casting. With regard to the preferred content of the resin in the protective layer, it is preferable to mix in an amount of 5 to 100% by mass in 100% by mass of the composition of the protective layer. Within this range, adhesiveness to a plastic substrate is improved. When the content is 5% by mass or more, interaction with an adjacent layer is high so that the adhesiveness is sufficiently maintained. Since the content is within 100% mass or less, sufficient weather resistance is obtained. More preferably, the content is 10 to 90% by mass, and even more preferably 10 to 50% by mass.

In the protective layer, other resins may be also included. Examples of other resins include a thermoplastic resin and a thermosetting resin which is cured by an action of the resin itself or by a curing agent. More specific examples include, in addition to the aforementioned resins, a thermoplastic resin such as a vinyl chloride resin, a polyester resin, an acrylic resin, or a silicone resin; a heat · ultraviolet rays · electronic beam curable resin of homocuring type such as a urethane resin, an aminoplast resin, a silicone resin, an epoxy resin, or an acrylic resin; and a thermosetting resin cured by a curing agent such as a polyester resin, an acrylic resin, or an epoxy resin. The type and use amount of other resins can be suitably determined according to the use or required characteristics of the protective layer of the present invention. With blending of an ultraviolet ray · electronic beam curable resin of homocuring type in the protective layer of the present invention, a protective layer with high hardness can be formed.

### (2-1-2. Benzotriazole-type ultraviolet-ray-absorbing group)

A functional group used for the benzotriazole-type ultraviolet-ray-absorbing group contained in the resin of the protective layer is described in detail below. Meanwhile, a compound is treated as a functional group in the following.

A preferred benzotriazole-type ultraviolet-ray-absorbing group is represented by the following formula (1a) or (1b). 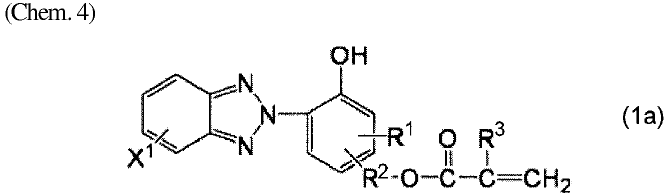 (in the formula, R¹ represents a hydrogen atom or an alkyl group having 1 to 8 carbon atoms, R² represents an alkylene group having 1 to 6 carbon atoms, R³ represents a hydrogen atom or a methyl group, and X¹ represents a hydrogen atom, a halogen atom, an alkyl group having 1 to 8 carbon atoms, an alkoxy group having 1 to 6 carbon atoms, a cyano group, or a nitro group). 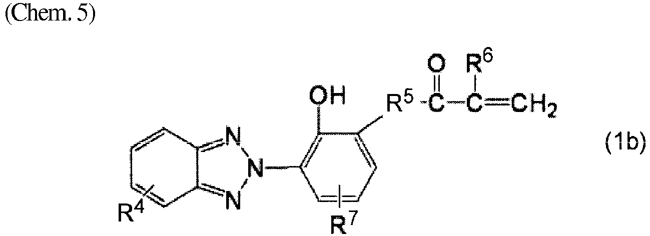 (in the formula, R⁴ represents a hydrogen atom, a halogen atom, an alkyl group having 1 to 8 carbon atoms, an alkoxy group having 1 to 4 carbon atoms, a cyano group, or a nitro group, R⁵ represents a group which has an element capable of forming a hydrogen bond, R⁶ represents a hydrogen atom or a methyl group, and R⁷ represents a hydrogen atom or an alkyl group having 1 to 12 carbon atoms).

In the above formula (1a), examples of the alkyl group having 1 to 8 carbon atoms represented by R¹ include a chain type alkyl group such as a methyl group, an ethyl group, a propyl group, an isopropyl group, a butyl group, an isobutyl group, a t-butyl group, a pentyl group, a hexyl group, a heptyl group, or an octyl group; an alicyclic alkyl group such as a cyclopropyl group, a cyclopentyl group, a cyclohexyl group, a cycloheptyl group, or a cyclooctyl group; and an aromatic alkyl group such as a phenyl group, a tolyl group, a xylyl group, a benzyl group, or a phenethyl group.

In the above formula (1a), examples of the alkylene group having 1 to 6 carbon atoms represented by R² include a linear alkylene group such as a methylene group, an ethylene group, a propylene group, a butylene group, a pentylene group, or a hexylene group; and a branched alkylene group such as an isopropylene group, an isobutylene group, a sec-butylene group, a t-butylene group, an isopentylene group, and a neopentylene group.

In the above formula (1a), examples of the halogen atom represented by X¹ include a fluorine atom, a chlorine atom, a bromine atom, and an iodine atom. Examples of the alkyl group having 1 to 8 carbon atoms represented by X¹ include a chain type alkyl group such as a methyl group, an ethyl group, a propyl group, an isopropyl group, a butyl group, an isobutyl group, a t-butyl group, a pentyl group, a hexyl group, a heptyl group, or an octyl group; an alicyclic alkyl group such as a cyclopropyl group, a cyclopentyl group, a cyclohexyl group, a cycloheptyl group, or a cycloocty group; and an aromatic alkyl group such as a phenyl group, a tolyl group, a xylyl group, a benzyl group, or a phenethyl group. Examples of the alkoxy group having 1 to 6 carbon atoms represented by X¹ include a methoxy group, an ethoxy group, a propoxy group, a butoxy group, a pentyloxy group, and a hexyloxy group.

Examples of the ultraviolet-ray-absorbing group represented by the above formula (1a) include, although not particularly limited, 2-[2'-hydroxy-5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-(methacryloyloxyethyl)phenyl]-2H-benzotriazole, 2-[2'-hydroxy-5'-(methacryloyloxyethyl)phenyl]-5-chloro-2H-benzotriazole, and 2-[2'-hydroxy-5'-(methacryloyloxyethyl)phenyl]-5-methoxy-2H-benzotriazole.

In the above formula (1b), examples of the halogen atom represented by R⁴ include a fluorine atom, a chlorine atom, a bromine atom, and an iodine atom. Examples of the alkyl group having 1 to 8 carbon atoms represented by R⁴ include a linear or branched alkyl group such as a methyl group, an ethyl group, a propyl group, an isopropyl group, a n-butyl group, an isobutyl group, a sec-butyl group, a t-butyl group, a n-pentyl group, an isopentyl group, a 2,2-dimethylpropyl group, a n-heptyl group, a n-octyl group, a 1,1,3,3-tetramethylbutyl group, or a 2-ethylhexyl group; and an alicyclic alkyl group such as a cyclohexyl group. Examples of the alkoxy group having 1 to 4 carbon atoms represented by R⁴ include a methoxy group, an ethoxy group, a propoxy group, and a butoxy group.

In the above formula (1b), examples of the group which has an element capable of forming a hydrogen bond represented by R⁵ include -NH-, -CH₂NH-, -OCH₂CH(OH)CH₂O-, and-CH₂CH₂COOCH₂CH(OH)CH₂O-. Among those groups, from the viewpoint of containing a nitrogen atom with active hydrogen, -NH- and -CH₂NH- are preferable and -CH₂NH- is particularly preferable.

In the above formula (1b), examples of the alkyl group having 1 to 12 carbon atoms represented by R⁷ include, in addition to the aforementioned substituent groups that are listed as an alkyl group having 1 to 8 carbon atoms represented by R⁵, a linear or branched alkyl group such as a nonyl group, a decyl group, an undecyl group, or a dodecyl group; and an aromatic alkyl group such as a phenyl group, a tolyl group, a xylyl group, a benzyl group, or a phenethyl group. Among these substituent groups, a linear or branched alkyl group having 4 to 12 carbon atoms is preferable. A branched alkyl group having a bulky group such as a 1,1,3,3-tetramethylbutyl group (or a group having it) is particularly preferable.

Examples of the ultraviolet-ray-absorbing group represented by the above formula (1b) include, although not particularly limited, 2-[2'-hydroxy-3'-(meth)acryloylaminophenyl]-2H-benzotriazole, 2-[2'-hydroxy-3'-(meth)acryloylaminomethylphenyl]-2H-benzotriazole, 2-[2'-hydroxy-3'-(meth)acryloylamino-5'-(1,1,3,3-tetramethylbutyl)phenyl]-2H-benzotriazole, and 2-[2'-hydroxy-3'-(meth)acryloylaminomethyl-5'-(1,1,3,3-tetramethylbutyl)phenyl]-2H-benzotriazole. Those ultraviolet-ray-absorbing groups may be used either singly or in combination of two or more types. Meanwhile, among those ultraviolet-ray-absorbing groups, 2-[2'-hydroxy-3'-(meth)acryloylamino-5'-(1,1,3,3-tetramethylbutyl)phenyl]-2H-benzotriazole and 2-[2'-hydroxy-3'-(meth)acryloylaminomethyl-5'-(1,1,3,3-tetramethylbutyl)phenyl]-2H-benzotriazole, in which a bulky substituent group R⁷ is bound at position 5, are preferable.

The benzotriazole-type ultraviolet-ray-absorbing group represented by the above formula (a) or (b) can be synthesized by a method of reacting corresponding benzotriazole (commercially available as an ultraviolet-ray-absorbing agent) with (meth)acrylic acid chloride or N-methylol acrylamide or alkyl ether thereof, or the like. For example, 2-[2'-hydroxy-3'-methacryloylamino-5'-(1,1,3,3-tetramethylbutyl)phenyl]-2H-benzotriazole can be obtained by reacting 2-[2'-hydroxy-3'-amino-5'-(1,1,3,3-tetramethylbutyl)phenyl]-benzotriazole with methacrylic acid chloride. Further, 2-[2'-hydroxy-3'-methacryloylaminomethyl-5'-(1,1,3,3-tetramethylbutyl)phenyl]-2H-benzotriazole can be obtained by reacting 2-[2'-hydroxy-5'-(1,1,3,3-tetramethylbutyl)phenyl]-benzotriazole (for example, CYASORB (registered trademark) UV-5411, manufactured by CYTEC) with N-methylol acrylamide (for example, manufactured by Nitto Chemical Co., Ltd.). Further, the compound used for those ultraviolet-ray-absorbing groups may be used either singly or in combination of two or more types. In particular, those having Tinuvin 234 (Ciba Japan K. K.) as a raw material can be preferably used.

### (2-1-3. Triazine-type ultraviolet-ray-absorbing group)

A functional group used for the triazine-type ultraviolet-ray-absorbing group contained in the resin of the protective layer is described in detail below. Meanwhile, a compound is treated as a functional group in the following.

A preferred triazine-type ultraviolet-ray-absorbing group is represented by the following formula (2). 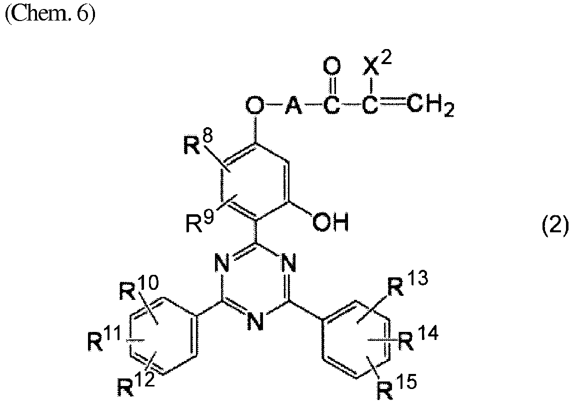 (in the formula, R⁸, R⁹, R¹⁰, R¹¹, R¹², R¹³, R¹⁴ and R¹⁵ represent, independently from each other, a hydrogen atom, an alkyl group having 1 to 10 carbon atoms, an alkenyl group having 2 to 10 carbon atoms, or an alkoxy group having 1 to 10 carbon atoms, X² represents a hydrogen atom or a methyl group, A represents -(CH₂CH₂O)ₚ-, -CH₂CH(OH)-CH₂O-, -(CH₂)ₚ-O-, -CH₂CH(CH₂OR¹⁶)-O-, -CH₂CH(R¹⁶)-O-, or-CH₂(CH₂)_{q}COO-B-O-, R¹⁶ represents an alkyl group having 1 to 10 carbon atoms, B represents a methylene group, an ethylene group, or -CH₂CH(OH)CH₂-, p represents an integer of 1 to 20, and q represents 0 or 1).

In the above formula (2), examples of the alkyl group having 1 to 10 carbon atoms represented by R⁸, R⁹, R¹⁰, R¹¹, R¹², R¹³, R¹⁴ or R¹⁵ include a linear or branched alkyl group such as a methyl group, an ethyl group, a propyl group, an isopropyl group, a n-butyl group, an isobutyl group, a sec-butyl group, a t-butyl group, a n-pentyl group, an isopentyl group, a 2,2-dimethylpropyl group, a n-heptyl group, a n-octyl group, a n-nonyl group, a n-decyl group, a 1,1,3,3-tetramethylbutyl group, or a 2-ethylhexyl group; and an alicyclic alky group such as a cyclohexyl group. Examples of the alkenyl group having 2 to 10 carbon atoms represented by R⁸, R⁹, R¹⁰, R¹¹, R¹², R¹³, R¹⁴ or R¹⁵ include a vinyl group, an all group, a 1-propenyl group, an isopropenyl group, a 1-butenyl group, a 2-butenyl group, a 2-pentenyl group, a 3-pentenyl group, a 4-hexenyl group, a 5-heptenyl group, a 4-methyl-3-pentenyl group, a 2,4-dimethyl-3-pentenyl group, a 6-methyl-5-heptenyl group, and a 2,6-dimethyl-5-heptenyl group. Examples of the alkoxy group having 1 to 10 carbon atoms represented by R⁸, R⁹, R¹⁰, R¹¹, R¹², R¹³, R¹⁴ or R¹⁵ include a methoxy group, an ethoxy group, a propoxy group, a butoxy group, a pentyloxy group, a hexyloxy group, a heptyloxy group, an octyloxy group, a nonyloxy group, and a decyloxy group.

In the above formula (2), examples of the alkyl group having 1 to 10 carbon atoms represented by R¹⁶ in A include the substituent groups that are listed above as an alkyl group having 1 to 10 carbon atoms represented by R⁸, R⁹, R¹⁰, R¹¹, R¹², R¹³, R¹⁴ or R¹⁵.

Examples of the ultraviolet-ray-absorbing group represented by the above formula (2) include, although not particularly limited, 2,4-diphenyl-6-[2-hydroxy-4-(2-acryloyloxy)phenyl]-1,3,5-triazine, 2,4-bis(2-methylphenyl)-6-[2-hydroxy-4-(2-acryloyloxyethoxy)phenyl]-1,3,5-triazine, 2,4-bis(2-methoxyphenyl)-6-[2-hydroxy-4-(2-acryloyloxyethoxy)phenyl]-1,3,5-triazine, 2,4-bis(2-ethylphenyl)-6-[2-hydroxy-4-(2-acryloyloxyethoxy)phenyl]-1,3,5-triazine, 2,4-bis(2-ethoxyphenyl)-6-[2-hydroxy-4-(2-acryloyloxyethoxy)phenyl]-1,3,5-triazine, 2,4-diphenyl-6-[2-hydroxy-4-(2-methacryloyloxyethoxy)phenyl]-1,3,5-triazine, 2,4-bis(2-methylphenyl)-6-[2-hydroxy-4-(2-methacryloyloxyethoxy)phenyl]-1,3,5-triazine, 2,4-bis(2-methoxyphenyl)-6-[2-hydroxy-4-(2-methacryloyloxyethoxy)phenyl]-1,3,5-triazine, 2,4-bis(2-ethylphenyl)-6-[2-hydroxy-4-(2-methacryloyloxyethoxy)phenyl]-1,3,5-triazine, 2,4-bis(2-ethoxyphenyl)-6-[2-hydroxy-4-(2-methacryloyloxyethoxy)phenyl]-1,3,5-triazine, 2,4-bis(2,4-dimethoxyphenyl)-6-[2-hydroxy-4-(2-acryloyloxyethoxy)phenyl]-1,3,5-triazine, 2,4-bis(2,4-dimethylphenyl)-6-[2-hydroxy-4-(2-acryloyloxyethoxy)phenyl]-1,3,5-triazine, 2,4-bis(2,4-diethoxyphenyl)-6-[2-hydroxy-4-(2-acryloyloxyethoxy)phenyl]-1,3,5-triazine, 2,4-bis(2,4-diethylphenyl)-6-[2-hydroxy-4-(2-acryloyloxyethoxy)phenyl]-1,3,5-triazine, 2-[2-hydroxy-4-(11-acryloyloxy-undecyloxy)phenyl]-4,6-diphenyl-1,3,5-triazine, 2-[2-hydroxy-4-(11-methacryloyloxy-undecyloxy)phenyl]-4,6-diphenyl-1,3,5-triazine, 2-[2-hydroxy-4-(2-methacryloyloxyethoxy)phenyl]-4,6-diphenyl-1,3,5-triazine, 2-[2-hydroxy-4-(11-acryloyloxy-undecyloxy)phenyl]-4,6-bis(2,4-dimethylphenyl)-1,3,5-triazine, 2,4-bis(2,4-dimethylphenyl)-6-[2-hydroxy-4-(11-methacroyloxyundecyloxy)phenyl]-1,3,5-triazine, and 2,4-bis(2,4-dimethylphenyl)-6-[2-hydroxy-4-(2-methacroyloxyethoxy)phenyl]-1,3,5-triazine. Those ultraviolet-ray-absorbing groups may be used either singly or in combination of two or more types. Among the ultraviolet-ray-absorbing groups, the ultraviolet-ray-absorbing group represented by the formula (2a), 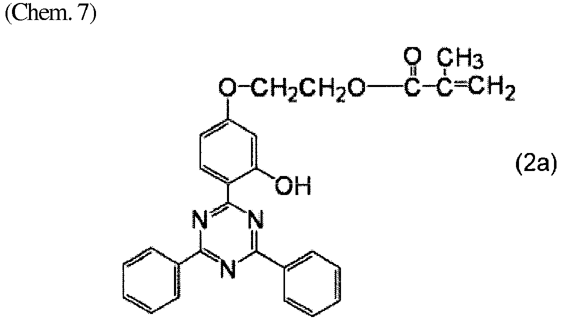 the ultraviolet-ray-absorbing group represented by the formula (2b), 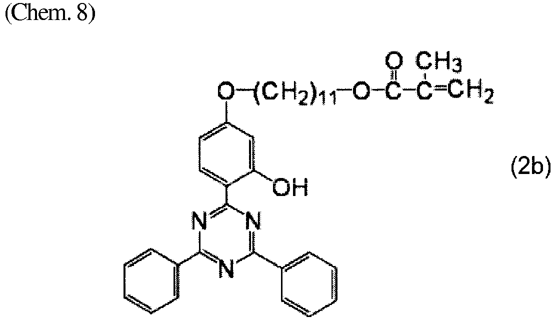 the ultraviolet-ray-absorbing group represented by the formula (2c), 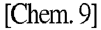 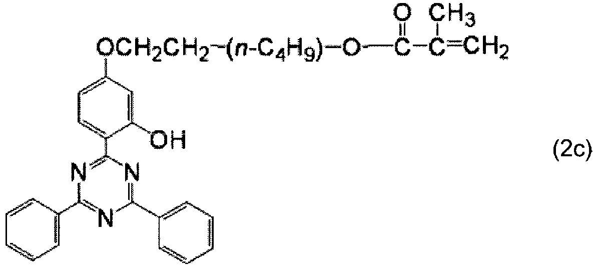 or those having Tinuvin 405 (Ciba Japan K. K.) or the like as a raw material can be preferably used.

The preferred content of the benzotriazole-type ultraviolet-ray-absorbing group with the composition (1a) or (1b) and/or the triazine-type ultraviolet-ray-absorbing group with the composition (2) in the protective layer is, in terms of total ultraviolet-ray-absorbing group in 100% by mass of the composition of the protective layer, preferably 5% by mass or more and 60% by mass or less, more preferably 7% by mass or more and 50% by mass or less, and even more preferably 10% by mass or more and 20% by mass or less. Within this range, ultraviolet-ray-absorbing capability of the protective layer becomes sufficient so that yellowing of the resin used in the film mirror can be suppressed for a long period of time. When the content of the ultraviolet-ray-absorbing group is 5% by mass or more, resistance to ultraviolet rays of the protective layer is enhanced, and therefore desirable. Further, the ratio between the benzotriazole-type ultraviolet-ray-absorbing group and the triazine-type ultraviolet-ray-absorbing group can be, in terms of % by mass, either 0 to 100 or 100 to 0. However, the ratio close to 50 to 50, specifically the ratio between 30 to 70 and 70 to 30 is preferred from the viewpoint of the resistance to ultraviolet rays. More preferably, it is between 40 to 60 and 60 to 40.

### (2-1-4. Antioxidant group)

A functional group used for the antioxidant group contained in the resin of the protective layer is described in detail below. Meanwhile, a compound is treated as a functional group in the following.

Preferred examples of the antioxidant group which may be applied in the present invention include a hindered amine type antioxidant group, a hindered phenol type antioxidant group, and a phosphorus type antioxidant group.

In particular, the hindered amine antioxidant group is generally referred to as HALS (hindered amine light stabilizer), also as a light-stable group, and preferably used. Specific examples of the HALS include bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(N-octoxy-2,2,6,6-tetramethyl-4-piperidyl)sebacate, bis(N-benzyloxy-2,2,6,6-tetramethyl-4-piperidyl)sebacate, bis(N-cyclohexyloxy-2,2,6,6-tetramethyl-4-piperidyl)sebacate, bis(1,2,2,6,6-pentamethyl-4-piperidyl)2-(3,5-di-t-butyl-4-hydroxybenzyl)-2-butyl malonate,bis(1-acroyl-2,2,6,6-tetramethyl-4-piperidyl)2,2-bis(3,5-di-t-butyl-4-hydroxybenzyl)-2-butyl malonate, bis(1,2,2,6,6-pentamethyl-4-piperidyl)decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butane tetracarboxylate, and tetrakis(1,2,2,6,6-pentamethyl-4-piperidyl) 1,2,3,4-butane tetracarboxylate.

It can be also an antioxidant group of a polymer type, and specific examples thereof include HALS with a high molecular weight in which plural piperidine rings are bound via a triazine skeleton such as N,N',N",N"'-tetrakis-[4,6-bis-[butyl-(N-methyl-2,2,6,6-tetramethylpiperidin-4-yl)amino]-triazine-2-yl]-4,7-diazadecane-1,10-diamine, apolycondensate of dibutylamine,1,3,5-triazine-N,N'-bis(2,2,6,6-tetramethyl-4-piperidyl)-1,6-hexamethylene diamine, and N-(2,2,6,6-tetramethyl-4-piperidyl)butylamine, a polycondensate of dibutylamine, 1,3,5-triazine, and N,N'-bis(2,2,6,6-tetramethyl-4-piperidyl)butylamine, poly[{1,1,3,3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}], apolycondensate of 1,6-hexane diamine-N,N'-bis(2,2,6,6-tetramethyl-4-piperidyl) and morpholine-2,4,6-trichloro-1,3,5-triazine, or poly[(6-morpholino-s-triazine-2,4-diyl)[(2,2,6,6,-tetramethyl-4-piperidyl)imino]-hexamethylene [(2,2,6,6-tetramethyl-4-piperidyl)imino]]; and an antioxidant group in which a piperidine ring is bound via an ester bond such as a polymer of dimethyl succinate and 4-hydroxy-2,2,6,6-tetramethyl-1-piperidine ethanol or a mixed esterified product of 1,2,3,4-butane tetracarboxylic acid,1,2,2,6,6-pentamethyl-4-piperidinol, and 3,9-bis(2-hydroxy-1,1-dimethylethyl)-2,4,8,10-tetraoxaspiro[5,5]undecane, but are not limited thereto.

Among them, those having a number average molecular weight (Mn) of 2,000 to 5,000 such as the polycondensate of dibutyl amine, 1,3,5-triazine, and N,N'-bis(2,2,6,6-tetramethyl-4-piperidyl)butylamine, poly[{(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], or a polymer of dimethyl succinate and 4-hydroxy-2,2,6,6-tetramethyl-1-piperidine ethanol are preferable.

Materials of the above types of the hindered amine antioxidant group are commercially available under the trade names of "TINUVIN 144" and "TINUVIN 770" from Ciba Japan K. K., and the trade name of "ADK STAB LA-52" from ADEKA Corporation, for example.

Specific examples of the hindered phenol type antioxidant group include n-octadecyl3-(3,5-di-t-butyl-4-hydroxyphenyl)-propionate, n-octadecyl3-(3,5-di-t-butyl-4-hydroxyphenyl)-acetate, n-octadecyl3,5-di-t-butyl-4-hydroxybenzoate, n-hexyl3,5-di-t-butyl-4-hydroxyphenylbenzoate, n-dodecyl3,5-di-t-butyl-4-hydroxyphenylbenzoate, neo-dodecyl3-(3,5-di-t-butyl-4-hydroxyphenyl)propionate, dodecyl β(3,5-di-t-butyl-4-hydroxyphenyl)propionate, ethyl α-(4-hydroxy-3,5-di-t-butylphenyl)isobutyrate, octadecyl α-(4-hydroxy-3,5-di-t-butylphenyl)isobutyrate, octadecyl α-(4-hydroxy-3,5-di-t-butyl-4-hydroxyphenyl)propionate, 2-(n-octylthio)ethyl3,5-di-t-butyl-4-hydroxy-benzoate, 2-(n-octylthio)ethyl3,5-di-t-butyl-4-hydroxy-phenylacetate, 2-(n-octadecylthio)ethyl3,5-di-t-butyl-4-hydroxyphenylacetate, 2-(n-octadecylthio)ethyl3,5-di-t-butyl-4-hydroxy-benzoate, 2-(2-hydroxyethylthio)ethyl3,5-di-t-butyl-4-hydroxybenzoate, diethyl glycol bis-(3,5-di-t-butyl-4-hydroxy-phenyl)propionate, 2-(n-octadecylthio)ethyl3-(3,5-di-t-butyl-4-hydroxyphenyl)propionate, stearamide N,N-bis-[ethylene 3-(3,5-di-t-butyl-4-hydroxyphenyl)propionate], n-butylimino N,N-bis-[ethylene 3-(3,5-di-t-butyl-4-hydroxyphenyl)propionate], 2-(2-stearoyloxyethylthio)ethyl3,5-di-t-butyl-4-hydroxybenzoate, 2-(2-stearoyloxyethylthio)ethyl7-(3-methyl-5-t-butyl-4-hydroxyphenyl)heptanoate, 1,2-propylene glycol bis-[3-(3,5-di-t-butyl-4-hydroxyphenyl)propionate], ethylene glycol bis-[3-(3,5-di-t-butyl-4-hydroxyphenyl)propionate], neopentyl glycol bis-[3-(3,5-di-t-butyl-4-hydroxyphenyl)propionate], ethylene glycol bis-(3,5-di-t-butyl-4-hydroxyphenylacetate), glycerin-1-n-octadecanoate-2,3-bis-(3,5-di-t-butyl-4-hydroxyphenylacetate), pentaerythritol tetrakis-[3-(3',5'-di-t-butyl-4'-hydroxyphenyl)propionate], 3,9-bis-{2-[3-(3-tert-butyl-4-hydroxy-5-methylphenyl)propionyloxy]-1,1-dimethylethyl}-2,4,8,10-tetraoxaspiro[5.5]undecane, 1,1,1-trimethylolethane-tris-[3-(3,5-di-t-butyl-4-hydroxyphenyl)propionate], sorbitol hexa-[3-(3,5-di-t-butyl-4-hydroxyphenyl)propionate], 2-hydroxyethyl7-(3-methyl-5-tbutyl-4-hydroxyphenyl)propionate, 2-stearoyloxyethyl7-(3-methyl-5-t-butyl-4-hydroxyphenyl)heptanoate,1,6-n-hexanediol-bis[(3',5'-di-t-butyl-4-hydroxyphenyl)propionate], and pentaerythritol tetrakis(3,5-di-t-butyl-4-hydroxyhydrocinnamate). For example, this type of the phenol antioxidant group is commercially available under the trade names of "IRGANOX 1076" and "IRGANOX 1010" from Ciba Japan K. K.

Specific examples of the phosphorus type antioxidant group include a monophosphite type antioxidant group such as triphenylphosphite, diphenylisodecylphosphite, phenyldiisodecylphosphite, tris(nonylphenyl)phosphite, tris(dinonylphenyl)phosphite, tris(2,4-di-tbutylphenyl)phosphite, 10-(3,5-di-t-butyl-4-hydroxybenzyl)-9,10-dihydro-9-oxa-10-phosphaphenathrene-10-oxide, 6-[3-(3-t-butyl-4-hydroxy-5-methylphenyl)propoxy]-2,4,8,10-tetra-t-butyldibenz [d,f] [1,3,2] dioxaphosphepine, or tridecylphosphite; a diphosphite type antioxidant group such as 4,4'-butylidene-bis(3-methyl-6-t-butylphenyl-di-tridecylphosphite), or 4,4'-isopropylidene-bis(phenyl-di-alkyl(C12 to C15)phosphite); a phosphonite type antioxidant group such as triphenylphosphonite, tetrakis(2,4-di-tert-butylphenyl)[1,1-biphenyl]-4,4'-diylbisphosphonite, or tetrakis(2,4-di-tert-butyl-5-methylphenyl)[1,1-biphenyl]-4,4'-diylbisphosphonite; a phosphinite type antioxidant group such as triphenyl phosphinite or 2,6-dimethylphenyldiphenyl phosphinite; a phosphine type antioxidant group such as triphenyl phosphine or tris(2,6-dimethoxyphenyl) phosphine; or the like.

The above types of phosphorus type antioxidant group are commercially available under the trade name of "Sumilizer GP" from Sumitomo Chemical Co., Ltd., the trade names of "ADK STAB PEP-24G", "ADK STAB PEP-36" and "ADK STAB 3010" from ADEKA Corporation, "IRGAFOS P-EPQ" from Ciba Japan K. K., and "GSY-P101" from Sakai Chemical Industry Co., Ltd., for example.

The preferred content of the antioxidant group in the protective layer is preferably 0.1% by mass or more and 60% by mass or less, more preferably 0.5% by mass or more and 40% by mass or less, and even more preferably 5% by mass or more and 20% by mass or less in 100% by mass of the composition of the protective layer in 100% by mass of the composition. Further, it is preferable that the ratio of the antioxidant group is substantially equal to the ratio of the total ultraviolet-ray-absorbing group. Specifically, the antioxidant group and the total ultraviolet-ray-absorbing group are, in terms of % by mass, preferably at a ratio between 30 to 70 and 70 to 30 from the viewpoint of resistance to ultraviolet rays, and more preferably at a ratio between 40 to 60 and 60 to 40.

### (2-1-5. Other additives or groups)

The protective layer of the present invention may be added with other compounds to the extent that bleed out does not occur. Further, the protective layer may have other groups.

Examples of the additives include a benzotriazole type, benzophenone type, triazine type or indole type organic ultraviolet-ray-absorbing agent, or an inorganic ultraviolet-ray-absorbing agent such as zinc oxide; an addition type ultraviolet ray stabilizing agent such as a sterically hindered piperidine compound (for example, "TINUVIN (registered trademark) 123", "TINUVIN 144", "TINUVIN 765" and the like manufactured by Chiba Specialty Chemicals); a leveling agent, an antioxidant, a filler such as talc, an anticorrosive agent, a fluorescent whitening agent, an antioxidant, a surfactant type, lithium type, or organoboron type anti-static agent, a pigment, a dye, a thickening agent, inorganic particles such as colloidal silica or alumina sol, and common additives in the field of coating materials such as polymethyl methacrylate type acrylic microparticles. When used, those additives are desirably used such that the content of the resin having an ultraviolet-ray-absorbing group of the present invention is preferably 50% by mass or more, more preferably 80% by mass or more, and even more preferably 90% by mass or more.

Further, as long as the protective layer of the present invention is a resin having a benzotriazole-type ultraviolet-ray-absorbing group or a triazine-type ultraviolet-ray-absorbing group, a sufficient effect is obtained. However, it is needless to say that it may consist of other compounds such as a solvent, an additive, or a resin. For producing a protective layer, each compound can be polymerized and added depending on the use and desired characteristics. For polymerization, conventionally known various polymerization methods may be used.

### (2-2. Hard coat layer)

The hard coat layer is formed for the purpose of providing a film mirror with anti-scratchiness to prevent a scratch on a surface of the film mirror and an anti-fouling property to prevent adhesion of dirt. When the film mirror has a hard coat layer and a protective layer, the layer such as the silver reflective layer or the resin-film-like support that is present below the protective layer is protected against an external environment of ultraviolet rays, dust mixed with sand, water drops or the like, and thus it can contribute to long lifetime of the film mirror. Since the film mirror for solar light reflection is mostly used in desert, it preferably has resistance to various external factors such as ultraviolet rays, heat, windstorm, and sandstorm. With the hard coat layer, corrosion of a metal used in the silver reflective layer by oxygen, water vapor, hydrogen sulfide or the like, deterioration of the resin-film-like support by ultraviolet rays, and discoloration or film peeling of the film mirror can be reduced. Further, with the hard coat layer, a scratch on a surface of the film mirror as caused by washing contaminations attached to the film mirror with a brush or the like can be reduced, and as a result, a decrease in reflection efficiency can be also prevented. With regard to the position of the hard coat layer, it is preferably formed on any one of the outermost layer, the second layer, and the third layer on the solar light incident side of the film mirror. It is also possible to form another thin layer (preferably with a thickness of 1 µm or less) on the hard coat layer. Meanwhile, the thickness of the hard coat layer is preferably 0.05 µm or more and 10 µm or less, more preferably 1 µm or more and 4 µm or less, and even more preferably 1.5 µm or more and 3 µm or less. When the thickness of the hard coat layer is 0.05 µm or more, sufficient anti-scratchiness can be obtained. Further, when the thickness of the hard coat layer is 10 µm or less, fracture of the hard coat layer as caused by excessively strong stress can be prevented. From the viewpoint of preventing static adhesion of contaminations such as dust mixed with sand, it is preferable to have low electric resistance, that is, the thickness of 10 µm or less.

With regard to the anti-scratchiness of the hard coat layer, it is preferable that pencil hardness is H or more and less than 6H and there are 30 or less scratches after a steel wool test with an application load of 500 g/cm². The pencil hardness is evaluated based on Pencil Hardness Test JIS-K5400 with 45° tilt and 1 Kg load on each sample. With regard to the anti-fouling property, the electric resistance of the outermost surface of the film mirror is preferably 1.0 x 10⁻³ to 1.0 × 10¹²Ω·. More preferably, it is 3.0 × 10⁹ to 2.0 × 10¹¹Ω·. The surface electric resistance is measured in accordance with the standard of JIS K 7194 with use of Hiresta manufactured by Mitsubishi Chemical Corporation, with the condition that, after being allowed to stand in an environment of a humidity of 50% and a temperature of 50°C for two hours or longer, the sample is placed on a conductive metal plate, and after applying a voltage of 500 V, the surface electric resistance of the sample after 30 seconds from starting the measurement was measured by using a probe. As an additional indicator of the anti-fouling property, if the falling angle of the hard coat layer is larger than 0° but equal to or less than 30°, water drops attached to the surface of the film mirror as caused by rain or dew condensation can easily fall, and therefore desirable. Meanwhile, the falling angle indicates the minimum measured angle allowing fall of a still water drop with a predetermined weight according to gradual increase of tilt angle of the mirror after dropping water drop on a horizontal mirror. Smaller the falling angle is, easier the water drop can fall from the surface, and thus it can be said that water drop is difficult to adhere onto that surface.

Meanwhile, for the steel wool test, steel wool (#0000) is applied as an abrasive to a reciprocating abrasion tester (HEIDON-14DR manufactured by Shinto Scientific Co., Ltd.) and it is rubbed ten times against the surface of each water repelling · anti-fouling article with the condition of a load of 500 g/cm² with a rate of 10 mm/sec to evaluate the number of scratches. Further, with regard to the falling angle, sliding method kit DM-SA01 is applied to a contact angle meter DM501 (Kyowa Interface Science Co., Ltd.), 50 µl of water is added dropwise thereto, and while tilting the support at 0.5°/second from a horizontal state, the angle at which the water drop starts to fall is measured as a falling angle. A smaller falling angle is preferred to have an excellent anti-fouling property as it allows easier falling of water drop.

A material for the hard coat layer is preferably those allowing obtainment of transparency, weather resistance, anti-scratchiness, and an anti-fouling property. The hard coat layer may be composed of an acrylic resin, a urethane resin, a melamine resin, an epoxy resin, an organic silicate compound, or a silicone resin. From the viewpoint of the anti-scratchiness, in particular, a silicone resin and an acrylic resin are preferable. Further, from the viewpoint of hardness, flexibility, and productivity, it preferably consists of an active energy ray curable acrylic resin or a thermosetting acrylic resin.

The active energy ray curable acrylic resin or the thermosetting acrylic resin indicates a composition containing polyfunctional acrylate as a polymerization curing component, acrylic oligomer, or a reactive diluent. In addition to them, those containing, if necessary, a photoinitiator, a photosensitizer, a thermal polymerization initiator, or a modifier can be also used.

As for the acrylic oligomer, not only one having an acrylic resin backbone bonded with a reactive acrylic group but also polyester acrylate, urethane acrylate, epoxy acrylate, and polyether acrylate, and one having a rigid backbone such as melamine and isocyanuric acid bonded with an acrylic group can be used.

Further, the reactive diluent functions both as a solvent, that is, a medium for a coating agent, in a coating process and as a copolymerizable component of a coating film as it has by itself a group capable of reacting with monofunctional or polyfunctional acrylic oligomers.

Examples of the commercially available polyfunctional acrylic curing coating material include products manufactured by Mitsubishi Rayon Co., Ltd. (trade name: "DIABEAM" (registered trademark) series), Nagase & Co., Ltd. (trade name: "DENACOL" (registered trademark) series), Shin-Nakamura Chemical Co., Ltd. (trade name: "NK ester" series), DIC Corporation (trade name: "UNIDIC" (registered trademark) series), TOAGOSEI CO., LTD. (trade name: "Aronix" (registered trademark) series), NOF Corporation (trade name: "BLEMMER" (registered trademark), Nippon Kayaku Co., Ltd. (trade name: "KAYARAD" (registered trademark) series), and Kyoeisha Chemical Co., Ltd. (trade name: "LIGHT ESTER" series and "LIGHT ACRYLATE" series).

More specifically, a resin which is cured by irradiation of electron beams or ultraviolet rays, a thermosetting resin or the like may be used. In particular, it is preferably a thermosetting silicon type hard coat composed of a partially hydrolyzed oligomer of an alkoxysilane compound, a hard coat composed of a thermosetting polysiloxane resin, an ultraviolet curing acrylic hard coat composed of an acrylic compound having an unsaturated group, or a thermosetting inorganic material. Moreover, as such materials usable for the hard coat layer, examples include an acrylic resin containing aqueous colloidal silica (JP 2005-66824 A), a polyurethane type resin composition (JP 2005-110918 A), a resin film using an aqueous silicone compound as a binder (JP 2004-142161 A), a silica film or alumina containing a photocatalytic oxide such as titanium oxide, or a photocatalyst film of titanium oxide or niobium oxide with a high aspect ratio (JP 2009-62216 A), fluorine resin coating containing a photocatalyst (Pialex Technologies Corp.), organic or inorganic polysilazane films; and organic or inorganic polysilazane films containing a hydrophilicity-accelerating agent (AZ Electronic Materials Ltd.).

For the thermosetting silicon type hard coat layer, a partially hydrolyzed oligomer of an alkoxysilane compound synthesized by a known method can be used. An example of a synthesis method thereof is as follows. First, tetramethoxysilane or tetraethoxysilane as the alkoxysilane compound is added with a predetermined amount of water under the presence of an acid catalyst such as hydrochloric acid or nitric acid, and is allowed to have a reaction at room temperature to 80°C while removing alcohol produced as a byproduct. According to this reaction, the alkoxysilane is hydrolyzed and further by a condensation reaction, a partially hydrolyzed oligomer of the alkoxysilane compound is obtained, in which two or more silanol groups or alkoxy groups are provided in one molecule and an average degree of polymerization is 4 to 8. Next, the oligomer is added with a curing catalyst such as acetic acid or maleic acid, and an obtained mixture is dissolved in an alcohol or glycol ester type organic solvent, whereby a thermosetting silicon type hard coat solution is obtained. Then, the solution is coated onto an outer surface of the film mirror or the like by a coating method used for a usual coating material and is heated and cured at a temperature of 80 to 140°C, whereby a hard coat layer is formed. Note that, in this case, it is premised that the curing temperature is set at a thermal deformation temperature of the film mirror or less. Meanwhile, it is possible to form a polysiloxane type hard coat layer in a similar way by using di(alkyl or aryl) dialkoxysilane and/or mono(alkyl or aryl) trialkoxysilane in place of the tetraalkoxysilane.

For the ultraviolet curing acrylic hard coat layer, as the acrylic compound having an unsaturated group, there can be used a polyfunctional (meth)acrylate mixture such as pentaerythritol di(meth)acrylate, diethylene glycol di(meth)acrylate, trimethylol propane tri(meth)acrylate, or tetramethylol tetra(meth)acrylate and the like. It is used after being blended with a photopolymerization initiator such as benzoin, benzoin methyl ether, or benzophenone. Then, this is coated onto the outer surface of the reflection film 10 or the like and is cured by ultraviolet rays, whereby the hard coat layer is formed.

Moreover, the hard coat layer may be subjected to a surface treatment. For example, there can be mentioned corona treatment (JP H11-172028 A), plasma surface treatment, ultraviolet/ozone treatment, and surface protrusion formation (JP 2009-226613 A), surface micro-processing treatment and the like.

As a preparation method of the hard coat layer, a conventionally known coating method such as a gravure coating method, a reverse coating method, or a die coating method can be used.

In the case where the hard coat layer is composed of an inorganic material, the hard coat layer can be formed by performing film formation with silicon oxide, aluminum oxide, silicon nitride, aluminum nitride, lanthanum oxide, lanthanum nitride and the like by vacuum film forming methods. As for the vacuum film forming methods, for example, there are a resistance heating vacuum deposition method, an electron beam heating vacuum deposition method, an ion plating method, an ion beam-assisted vacuum deposition method, a sputtering method and the like.

Moreover, in the case where the hard coat layer is composed of an inorganic material, preferably, the hard coat layer is composed of a film formed by coating a polysilazane and film-forming thereof, followed by heating and curing. In the case where a precursor of the hard coat contains polysilazane, a solution which is obtained by adding a catalyst according to needs into an organic solvent containing, for example, polysilazane represented by the following formula (3), is coated on the film mirror, and thereafter, the solvent is removed by being evaporated, whereby a polysilazane layer having a layer thickness of 0.05 to 3.0 µm is left on the film mirror. Then, preferably, there is adopted a method of forming a coating film of a glass-like transparent hard coat on the film mirror by locally heating the above-described polysilazane layer under the presence of oxygen, or active oxygen, or nitrogen according to the case in an atmosphere containing water vapor.

-(SiR¹⁷R¹⁸-NR¹⁹)ₙ- (3)

In the formula (3), R¹⁷, R¹⁸ and R¹⁹ are identical or different from one another, and each independently represent hydrogen or a substituted or non-substituted alkyl group, an aryl group, a vinyl group or a (trialkoxysilyl) alkyl group, and preferably, a group selected from the group consisting of hydrogen, methyl, ethyl, propyl, iso-propyl, butyl, iso-butyl, tert-butyl, phenyl, vinyl, 3-(triethoxysilyl)propyl and 3-(trimethoxysilylpropyl). In that case, n is an integer, and n is determined so that the polysilazane can have a number average molecular weight of 150 to 150,000 g/mol.

As for the catalyst, preferably, a basic catalyst is used, and particularly preferably, used is N,N-diethyl ethanolamine, N,N-dimethyl ethanolamine, triethanolamine, triethylamine, 3-morpholinopropylamine or an N-heterocyclic compound. When polysilazane is taken as a reference, a concentration of the catalyst is usually in a range from 0.1 to 10% by mol, and preferably in a range from 0.5 to 7% by mol.

As one of preferred aspects, there is used a solution containing perhydropolysilazane in which all of R¹⁷, R¹⁸ and R¹⁹ in the formula (3) represent hydrogen atoms.

Moreover, in another preferred aspect, the hard coat layer contains at least one type of polysilazane represented by the following formula (4).

-(SiR²⁰R²¹-NR²²)ₙ-(SiR²³R²⁴-NR²⁵)ₚ- (4)

In the formula (4), R²⁰, R²¹, R²², R²³, R²⁴ and R²⁵ each independently represent hydrogen, or a substituted or non-substituted alkyl group, an aryl group, a vinyl group or a (trialkoxysilyl)alkyl group. In that case, n and p are integers, and in particular, n is determined so that the polysilazane can have a number average molecular weight of 150 to 150,000 g/mol.

Particularly preferable ones are: a compound in which R²⁰, R²² and R²⁵ represent hydrogen and R²¹, R²³ and R²⁴ represent methyl; a compound in which R²⁰, R²² and R²⁵ represent hydrogen, R²¹ and R²³ represent methyl, and R²⁴ represents vinyl; and a compound in which R²⁰, R²², R²³ and R²⁵ represent hydrogen and R²¹ and R²⁴ represent methyl.

Furthermore, in still another preferred aspect, the hard coat layer contains at least one type of polysilazane represented by the following formula (5).

-(SiR²⁶R²⁷-NR²⁸)ₙ-(SiR²⁹R³⁰-NR³¹)ₚ-(SiR³²R³³-NR³⁴)_{q}- (5)

In the formula (5), R²⁶, R²⁷, R²⁸, R²⁹, R³⁰, R³¹, R³², R³³ and R³⁴ each independently represent hydrogen, or a substituted or non-substituted alkyl group, an aryl group, a vinyl group or a (trialkoxysilyl)alkyl group. In that case, n, p and q are integers, and in particular, n is determined so that the polysilazane can have a number average molecular weight of 150 to 150,000 g/mol.

A particularly preferable one is a compound in which R²⁶, R²⁸ and R³¹ represent hydrogen, R²⁷, R²⁹, R³⁰ and R³³ represent methyl, R³⁴ represents (triethoxysilyl)propyl, and R³² represents alkyl or hydrogen.

The ratio of the polysilazane in the solvent is generally 1 to 80% by mass, preferably 5 to 50% by mass, and particularly preferably 10 to 40% by mass.

Particularly suitably, the solvent is an organic solvent, which does not contain water and a reactive group (for example, a hydroxyl group or an amine group) and is inert to polysilazane, and preferably, is a non-protonic solvent. For example, it is aliphatic or aromatic hydrocarbon, halogenated hydrocarbon, ester such as ethyl acetate or butyl acetate, ketone such as acetone or methyl ethyl ketone, ether such as tetrahydrofuran and dibutyl ether, mono- and poly-alkylene glycol dialkyl ether (diglymes), or a mixture composed of these solvents.

As an additional component of such a polysilazane solution, another binder as conventionally used for producing a coating material can be used. For example, this is cellulose ether and cellulose ester such as ethyl cellulose, nitrocellulose, cellulose acetate and cellulose acetobutyrate, a natural resin such as rubber and rosin resin, or a synthetic resin such as a polymer resin and a condensation resin, which includes aminoplast, in particular, a urea resin and a melamine formaldehyde resin, an alkyd resin, an acrylic resin, polyester or modified polyester, epoxide, polyisocyanate or blocked polyisocyanate, or polysiloxane.

Moreover, as another component to be further added to this polysilazane mixture, for example, there can be used: an additive, which affects viscosity of the mixture, wettability of the base, a film forming property, a lubricating function or exhaust properties; or inorganic nanoparticles, for example, SiO₂, TiO₂, ZnO, ZrO₂ and Al₂O₃.

The hard coat layer of polysilazane formed as described above can also be used as an oxygen and water vapor barrier film.

Further, as one particularly preferred example of the hard coat layer, a hard coat layer containing a polyfunctional acrylic monomer and a silicone resin can be mentioned. The polyfunctional acrylic monomer is hereinafter described as the component "A" and the silicone resin is hereinafter described as the component "B".

### (2-2-1. Component "A")

The polyfunctional acrylic monomer as the component "A" preferably has an unsaturated group and particularly an active energy ray reactive unsaturated group. The active energy ray mentioned in the present specification preferably indicates an electron beam or ultraviolet ray. As the polyfunctional acrylic monomer having an active energy ray reactive unsaturated group, a radical polymerization type monomer is used, and, for example, a polyfunctional acrylate type or polyfunctional methacrylate type monomer which is a polyfunctional monomer with functionality of two or higher having α,β-unsaturated double bond in the molecule can be mentioned. In addition, it may have a vinyl type monomer, an allyl type monomer, or a monofunctional monomer. Further, the radical polymerization type monomer may be used alone, or two or more kinds of the radical polymerization type monomers may be used in combination in order to adjust crosslink density. As the component "A", in addition to the relatively low molecular weight compounds such as a monomer in the narrow sense whose molecular weight is less than 1000, oligomer or prepolymer having a relatively large molecular weight, for example, having a molecular weight of 1000 or more and less than 10000 may be used.

Specific examples of a monofunctional (meth)acrylate monomer include 2-(meth)acryloyloxyethyl phthalate, 2-(meth)acryloyloxyethyl-2-hydroxyethyl phthalate, 2-(meth)acryloyloxyethyl hexahydrophthalate, 2-(meth)acryloyloxypropyl phthalate, 2-ethylhexyl (meth)acrylate, 2-ethylhexylcarbitol (meth)acrylate, 2-hydroxybutyl (meth)acrylate, 2-hydroxyethyl (meth)acrylate, 2-hydroxypropyl (meth)acrylate, 2-methoxyethyl (meth)acrylate, 3-methoxybutyl (meth)acrylate, 4-hydroxybutyl (meth)acrylate, benzyl (meth)acrylate, butane diol mono(meth)acrylate, butoxyethyl (meth)acrylate, butyl (meth)acrylate, caprolactone (meth)acrylate, cetyl (meth)acrylate, cresol (meth)acrylate, cyclohexyl (meth)acrylate, dicyclopentanyl (meth)acrylate, dicyclopentenyl (meth)acrylate, dicyclopentenyloxyethyl (meth)acrylate, diethylene glycol monoethyl ether (meth)acrylate, dimethylaminoethyl (meth)acrylate, dipropylene glycol (meth)acrylate, phenyl (meth)acrylate, ethyl (meth)acrylate, isoamyl (meth)acrylate, isobornyl (meth)acrylate, isobutyl (meth)acrylate, isodecyl (meth)acrylate, isooctyl (meth)acrylate, isostearyl (meth)acrylate, isomyristyl (meth)acrylate, lauroxypolyethylene glycol (meth)acrylate, lauryl (meth)acrylate, methoxydipropylene glycol (meth)acrylate, methoxytripropylene glycol (meth)acrylate, methoxypolyethylene glycol (meth)acrylate, methoxytriethylene glycol (meth)acrylate, methyl (meth)acrylate, neopentylglycol benzoate (meth)acrylate, nonylphenoxy polyethylene glycol (meth)acrylate, nonylphenoxy polypropylene glycol (meth)acrylate, octafluoropentyl (meth)acrylate, octoxypolyethylene glycol-polypropylene glycol (meth)acrylate, octyl (meth)acrylate, paracumylphenoxyethylene glycol (meth)acrylate, perfluorooctylethyl (meth)acrylate, phenoxy (meth)acrylate, phenoxydiethylene glycol (meth)acrylate, phenoxyethyl (meth)acrylate, phenoxyhexaethylene glycol (meth)acrylate, phenoxytetraethylene glycol (meth)acrylate, polyethylene glycol (meth)acrylate, stearyl (meth)acrylate, succinic (meth)acrylate, t-butyl (meth)acrylate, t-butylcyclohexyl (meth)acrylate, tetrafluoropropyl (meth)acrylate, tetrahydrofurfuryl (meth)acrylate, tribromophenyl (meth)acrylate, tridecyl (meth)acrylate, trifluoroethyl (meth)acrylate, β-carboxyethyl (meth)acrylate, ω-carboxy-polycaprolactone (meth)acrylate, and derivatives and modified products of these monofunctional (meth)acrylate monomers.

Specific examples of a polyfunctional (meth)acrylate monomer include 1,3-butylene glycol di(meth)acrylate, 1,4-butanediol di(meth)acrylate, 1,6-hexanediol di(meth)acrylate, 1,9-nonanediol di(meth)acrylate, bisphenol A di(meth)acrylate, bisphenol F di(meth)acrylate, diethylene glycol di(meth)acrylate, hexahydrophthalic di(meth)acrylate, hydroxypyvalic neopentyl glycol di(meth)acrylate, neopentylglycol di(meth)acrylate, hydroxypyvalic ester neopentyl glycol di(meth)acrylate, pentaerythritol di(meth)acrylate, phthalic di(meth)acrylate, polyethylene glycol di(meth)acrylate, polypropylene glycol di(meth)acrylate, polytetramethylene glycol di(meth)acrylate, bisphenol A diglycidyl ether di(meth)acrylate, triethylene glycol di(meth)acrylate, tetraethylene glycol di(meth)acrylate, tricyclodecane dimethanol di(meth)acrylate, dimethylol dicyclopentane di(meth)acrylate, neopentyl glycol modified trimethylolpropane di(meth)acrylate, tripropylene glycol di(meth)acrylate, triglycerol di(meth)acrylate, dipropylene glycol di(meth)acrylate, glycerol tri(meth)acrylate, pentaerythritol tri(meth)acrylate, phosphoric tri(meth)acrylate, trimethylolpropane tri(meth)acrylate, trimethylolpropanebenzoate tri(meth)acrylate, tris((meth)acryloxyethyl)isocyanurate, di(meth)acrylic isocyanurate, dipentaerythritol hexa (meth)acrylate, dipentaerythritol hydroxypenta (meth)acrylate, ditrimethylolpropanetetra (meth)acrylate, pentaerythritol tetra (meth)acrylate, and derivatives and modified products of these polyfunctional (meth)acrylate monomers.

Examples of commercially available products of the component "A" as such a polymerizable organic compound include Aronix M-400, M-408, M-450, M-305, M-309, M-310, M-315, M-320, M-350, M-360, M-208, M-210, M-215, M-220, M-225, M-233, M-240, M-245, M-260, M-270, M-1100, M-1200, M-1210, M-1310, M-1600, M-221, M-203, TO-924, TO-1270, TO-1231, TO-595, TO-756, TO-1343, TO-902, TO-904, TO-905, and TO-1330 that are manufactured by TOAGOSEI CO., LTD., KAYARAD D-310, D-330, DPHA, DPCA-20, DPCA-30, DPCA-60, DPCA-120, DN-0075, DN-2475, SR-295, SR-355, SR-399E, SR-494, SR-9041, SR-368, SR-415, SR-444, SR-454, SR-492, SR-499, SR-502, SR-9020, SR-9035, SR-111, SR-212, SR-213, SR-230, SR-259, SR-268, SR-272, SR-344, SR-349, SR-601, SR-602, SR-610, SR-9003, PET-30, T-1420, GPO-303, TC-120S, HDDA, NPGDA, TPGDA, PEG400DA, MANDA, HX-220, HX-620, R-551, R-712, R-167, R-526, R-551, R-712, R-604, R-684, TMPTA, THE-330, TPA-320, TPA-330, KS-HDDA, KS-TPGDA, and KS-TMPTA that are manufactured by Nippon Kayaku Co., Ltd., and Light Acrylate PE-4A, DPE-6A, and DTMP-4A that are manufactured by Kyoeisha Chemical Co., Ltd.

From the viewpoint of enhancing the anti-fouling property or the light resistance, the polymerizable organic compound component "A" is preferably contained in an amount of 10 to 90% by weight, and more preferably 15 to 80% by weight, based on 100% by weight of the total composition of "A" + "B".

### (2-2-2. Component "B")

The silicone resin component "B" is preferably a silicone resin having an active energy ray reactive unsaturated group. The silicone resin contains polyorganosiloxane and is preferably a compound having a polyorganosiloxane chain which has an active energy ray curable unsaturated bond in the molecule. In particular, it is preferably an active energy ray curable resin composition which is a vinyl copolymer with a number average molecular weight of 5000 to 100000 obtained by reacting a polymer (α), which is obtained by polymerizing monomers including 1 to 50% by weight of a monomer (a) having a radical polymerizable double bond and a polyorganosiloxane chain, 10 to 95% by weight of a monomer (b) other than (a), which has a radical polymerizable double bond and a reactive functional group, and 0 to 89% by weight of a monomer (c) other than (a) and (b), which has a radical polymerizable double bond, with a compound (β) having a functional group capable of reacting with the reactive functional group and a radical polymerizable double bond.

Specific examples of the monomer (a) having a radical polymerizable double bond and a polyorganosiloxane chain include a polyorganosiloxane compound having a (meth)acryloxy group at one end such as Silaplane FM-0711, FM-0721, and FM-0725 manufactured by Chisso Corporation, AC-SQ SI-20 manufactured by TOAGOSEI CO., LTD., and an acrylate- or methacrylate-containing compound of POSS (Polyhedral Oligomeric Silsesquioxane) series produced by Hybrid Plastics Inc.

One kind of or a mixture of two or more kinds of the component "B" may be used according to required performance. The polymerization ratio is preferably 1 to 50% by weight based on the total weight of a monomer constituting a polymer, and more preferably 10 to 35% by weight. When the copolymerization ratio of the component "B" is less than 1% by weight, it is difficult to impart an anti-fouling property and weather resistance to an upper surface of a cured material, and when it is more than 50% by weight, scratch resistance is lowered and, in addition, it is difficult to obtain coating performance such as compatibility with other components contained in a radiation curable composition, adhesiveness with a substrate and toughness, and solubility in the solvent of a polymer. The above component may contain a suitable amount of polysiloxane and the durability is enhanced by adding polysiloxane according to the chemical structure and quantitative ratio of the component "B".

It is preferable that the hard coat layer has flexibility and does not have an occurrence of warpage. The hard coat layer on the outermost surface layer of the film mirror may form a dense cross-linked structure, and thus the film may be warped and bent, or a crack may be easily formed because of no flexibility, so that the handling is difficult. In such a case, it is preferable to design such that flexibility and flatness are obtained by adjusting an amount of an inorganic substance in a hard coat layer composition.

### (2-2-3. Additives)

The hard coat layer may contain various additives such as an ultraviolet-ray-absorbing agent or an antioxidant. Various additives are described below.

### (2-2-3(a). Ultraviolet-ray-absorbing agent)

The ultraviolet-ray-absorbing agent is not particularly limited, however, examples of an organic ultraviolet-ray-absorbing agent include a benzophenone-type ultraviolet-ray-absorbing agent, a benzotriazole-type ultraviolet-ray-absorbing agent, a phenyl salicylate-type ultraviolet-ray-absorbing agent, a triazine-type ultraviolet-ray-absorbing agent, and a benzoate-type ultraviolet-ray-absorbing agent. Further, examples of an inorganic ultraviolet-ray-absorbing agent include titanium oxide, zinc oxide, cerium oxide, and iron oxide. Meanwhile, in order to reduce the problem of bleed out when an ultraviolet-ray-absorbing agent is contained in a large amount, it is preferable to use a polymeric ultraviolet-ray-absorbing agent having a molecular weight of 1000 or more. Preferably, the molecular weight is 1000 or more and 3000 or less.

Examples of the benzophenone-type ultraviolet-ray-absorbing agent include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone.

Examples of the benzotriazole-type ultraviolet-ray-absorbing agent include 2-(2'-hydroxy-5-methylphenyl)benzotriazole, 2-(2'-hydroxy-3',5'-di-t-butylphenyl)benzotriazole, 2-(2'-hydroxy-3'-t-butyl-5'-methylphenyl)benzotriazole, 2,2'-methylenebis[6-(2H-benzotriazol-2-yl)-4-(1,1,3,3-tetramethylbutyl)phenol] (molecular weight 659; as a commercially available product, LA31 manufactured by ADEKA Corporation), and2-(2H-benzotriazol-2-yl)-4,6-bis(1-methyl-1-phenylethyl)phenol (molecular weight 447.6; as a commercially available product, TINUVIN 234 manufactured by Chiba Specialty Chemicals).

Examples of the phenyl salicylate-type ultraviolet-ray-absorbing agent include phenyl salicylate and 2-4-di-t-butylphenyl-3,5-di-t-butyl-4-hydroxybenzoate. Examples of the hindered amine-type ultraviolet-ray-absorbing agent include bis(2,2,6,6-tetramethylpiperidine-4-yl)sebacate.

Examples of the triazine-type ultraviolet-ray-absorbing agent include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, [2-(4,6-diphenyl-1,3,5-triazine-2-yl)-5-(hexyl)oxyphenol] (trade name: TINUVIN 1577FF, manufactured by Chiba Specialty Chemicals), and [2-[4,6-bis(2,4dimethylphenyl)-1,3,5-triazine-2-yl]-5-(octyloxy)phenol] (trade name: CYASORBUV-1164, manufactured by Cytec Industries Inc.).

Further, examples of the benzoate-type ultraviolet-ray-absorbing agent include 2,4-di-tert-butylphenyl-3,5-di-tert-butyl-4-hydroxybenzoate (molecular weight 438.7; as a commercially available product, Sumisorb 400 manufactured by Sumitomo Chemical Co., Ltd.).

In addition to the above ultraviolet-ray-absorbing agents, a compound having a function of converting the energy possessed by ultraviolet rays to vibrational energy in the molecule and then releasing the vibrational energy as heat energy or the like may be used. Furthermore, a compound which expresses an effect in combination with an antioxidant or a colorant, or a light stabilizer called a quencher which acts as a light energy conversion agent may be used in combination. However, for using the above-mentioned ultraviolet-ray-absorbing agent, it is necessary to select an ultraviolet-ray-absorbing agent in which an optical absorption wavelength of the ultraviolet-ray-absorbing agent does not overlap with the effective wavelength of a photopolymerization initiator. For using a general ultraviolet-ray-absorbing agent, it is effective to use a photopolymerization initiator that generates radicals by visible light.

Meanwhile, two or more types of each of the above ultraviolet-ray-absorbing agents can be used, if necessary. An ultraviolet-ray-absorbing agent other than the above ultraviolet-ray-absorbing agents, for example, salicylic acid derivatives, substituted acrylonitrile, a nickel complex or the like may be contained, if necessary.

In particular, the ultraviolet-ray-absorbing agent preferred for the hard coat layer containing a polyfunctional acrylic monomer and a silicone resin is a benzotriazole-type ultraviolet-ray-absorbing agent. By containing the benzotriazole-type ultraviolet-ray-absorbing agent in the hard coat layer, an excellent effect of further improving weather resistance and also further lowering falling angle can be obtained. In particular, when a compound represented by the following formula (6) is contained in the hard coat layer, the effect of lowering falling angle is significant.

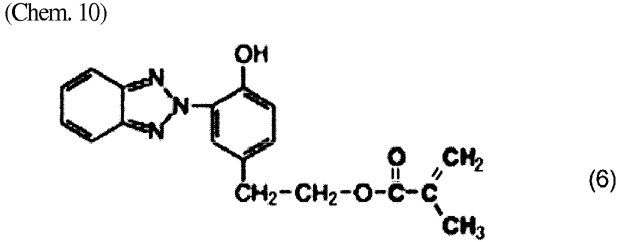

It is preferable that the use amount of the ultraviolet-ray-absorbing agent in the hard coat layer is 0.1 to 20% by mass in order to improve the weather resistance while maintaining good adhesiveness. It is more preferably 0.25 to 15% by mass, and even more preferably 0.5 to 10% by mass.

### (2-2-3(b). Antioxidant)

As an antioxidant, an organic type antioxidant such as a phenol type antioxidant, a hindered amine type antioxidant, a thiol type antioxidant and a phosphite type antioxidant is preferably used. The falling angle can be reduced also by allowing the organic type antioxidant to be contained in the hard coat layer. It is also possible to use an antioxidant and a light stabilizer in combination.

Examples of the phenol type antioxidant include 1,1,3-tris(2-methyl-4-hydroxy-5-t-butylphenyl)butane, 2,2'-methylene bis(4-ethyl-6-t-butylphenol), tetrakis-[methylene -3-(3',5'-di-t-butyl-4'-hydroxyphenyl)propionate]methane, 2,6-di-t-butyl-p-cresol, 4,4'-thiobis(3-methyl-6-t-butylphenol), 4,4'-butylidenebis(3-methyl-6-t-butylphenol), 1,3,5-tris(3',5'-di-t-butyl-4'-hydroxybenzyl)-S-triazine-2,4,6-(1H,3H,5H)trione, stearyl-β-(3,5-di-t-butyl-4-hydroxyphenyl)propionate, triethylene glycol bis[3-(3-t-butyl-5-methyl-4-hydroxyphenyl)propionate], 3,9-bis[1,1-di-methyl-2-[β-(3-t-butyl-4-hydroxy-5-methylphenyl)propionyloxy]ethyl]-2,4,8,10-tetraoxaspiro[5,5]undecane, and 1,3,5-trimethyl-2,4,6-tris(3,5-di-t-butyl-4-hydroxybenzyl)benzene. As for the phenol type antioxidant, those having a molecular weight of 550 or more are particularly preferred.

Examples of the hindered amine type antioxidant include bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-(3,5-di-t-butyl-4-hydroxybenzyl)-2-n-butyl malonate,1-methyl-8-(1,2,2,6,6-pentamethyl-4-piperidyl)-sebacate, 1-[2-[3-(3,5-di-t-butyl-4-hydroxyphenyl)propionyloxy]ethyl]-4-[3-(3,5-di-t-butyl-4-hydroxyphenyl)propionyloxy]-2,2,6,6-tetramethylpiperidine, 4-benzoyloxy-2,2,6,6-tetramethylpiperidine, tetrakis(2,2,6,6-tetramethyl-4-piperidyl)-1,2,3,4-butane-tetracarboxylate, triethylene diamine, and 8-acetyl-3-dodecyl-7,7,9,9-tetramethyl-1,3,8-triazaspiro[4,5]decane-2,4-dione.

As for the hindered amine type light stabilizer, a hindered amine type light stabilizer containing only a tertiary amine is particularly preferred, and specific examples thereof include bis(1,2,2,6,6-pentamethyl-4-piperidyl)-sebacate, and bis(1,2,2,6,6-pentamethyl-4-piperidyl)-2-(3,5-di-t-butyl-4-hydroxybenzyl)-2-n-butylmalonate. Further, a condensate of 1,2,2,6,6-pentamethyl-4-piperidinol/tridecylalcohol and 1,2,3,4-butanetetracarboxylic acid is also preferred.

Examples of the thiol type antioxidant include distearyl-3,3'-thiodipropionate and pentaerythritol-tetrakis-(β-lauryl-thiopropionate).

Examples of the phosphite type antioxidant include tris(2,4-di-t-butylphenyl)phosphite, distearylpentaerythritol diphosphite, di(2,6-di-t-butylphenyl)pentaerythritol diphosphite, bis-(2,6-di-t-butyl-4-methylphenyl)-pentaerythritol diphosphite, tetrakis(2,4-di-t-butylphenyl)4,4'-biphenylene-diphosphonite, and 2,2'-methylene bis(4,6-di-t-butylphenyl)octylphosphite.

Meanwhile, the above antioxidant and the following light stabilizer can be used in combination. As for the light stabilizer, a nickel-type ultraviolet stabilizer can be used and examples of the nickel-type ultraviolet stabilizer include [2,2'-thiobis(4-t-octylphenolate)]-2-ethylhexylamine nickel (II), nickel complex-3,5-di-t-butyl-4-hydroxybenzyl phosphoric acid monoethylate, and nickel dibutyl-dithiocarbamate.

### (2-2-3(c). Initiator)

The hard coat layer, in particular, the hard coat layer containing a polyfunctional acrylic monomer and a silicone resin, preferably contains an initiator for starting polymerization. A photopolymerization initiator of an active energy ray (such as ultraviolet light)-curable resin is preferably used as an initiator. Examples of the initiator include benzoin and a derivative thereof, acetophenone, benzophenone, hydroxybenzophenone, Michler's ketone, α-amyloxime ester, thioxanthone and their derivatives. The initiator may be used with a photosensitizer. The above initiator can also be used as a photosensitizer. Moreover, sensitizers such as n-butylamine, triethylamine and tri-n-butylphosphine can be used when an epoxy acrylate type initiator is used. The content of the initiator or the photosensitizer is 0.1 to 15 parts by mass, preferably 1 to 10 parts by mass, more preferably 2 to 5 parts by mass, based on 100 parts by mass of the composition. Two types of initiators may be used in combination, and especially when a radical initiator is used, at least two types of initiators may be used. Radical initiators absorbing different wavelengths are preferably used, and two types of initiators having different ultraviolet absorption wavelengths are more preferably used. For example, when only an initiator absorbing a shorter wavelength is used, there may be a case in which it is not possible to perform polymerization reaction of all monomers with the initiator. Meanwhile, when only an initiator absorbing a longer wavelength is used, although reactivity is improved, the initiator may be colored during long-term use. Thus, in order to have no coloration during long-term use, good weather resistance, and good polymerization reactivity, it is preferable to use radical initiators which absorb different wavelengths.

### (2-2-3(d). Other additives)

In the hard coat layer, various additives may be also added, if necessary. For example, a surfactant, a leveling agent, and an anti-static agent can be used.

The leveling agent is effective to reduce small irregularities on a surface. The preferred leveling agents are silicone leveling agents such as dimethylpolysiloxane-polyoxyalkylene copolymers (for example, SH190 manufactured by Dow Coming Toray Co., Ltd.).

The anti-static agent is effective for enhancing the anti-fouling property of the film mirror. As the hard coat layer has conductivity due to an anti-static agent, it becomes possible to lower the electric resistance of the film mirror surface. It is also possible to lower the electric resistance of the film mirror surface and improve the anti-fouling property by forming an anti-static layer as a layer adjacent to the hard coat layer or mediated by a very thin layer between it and the hard coat layer.

### (2-3. Anti-static layer)

The anti-static layer has a function of preventing charging of the outermost layer on the solar light incident side of the film mirror. Compared to a glass mirror or the like, since the film mirror has a resin-film-like support and often has a surface formed of a resin, it is readily charged to attract contaminations such as sand and dust. For such reasons, there is a problem in that reflection efficiency is lowered by adhesion of sand or dust. With the presence of an anti-static layer on a layer close to the outermost layer of the film mirror, charging of the surface of the film mirror can be inhibited so that adhesion of dirt contaminations such as sand and dust can be inhibited and high reflection efficiency can be maintained for a long period of time, and therefore desirable. The anti-static layer is preferably present as a layer adjacent to the outermost layer of the film mirror or mediated by a very thin layer between it and the outermost layer of the film mirror. It is also possible that another layer, for example, the protective layer, also functions as an anti-static layer.

As a technique for providing an anti-static layer with an anti-static property, there is a method of lowering electric resistance of an anti-static layer by allowing the anti-static layer to have conductivity.

Anti-static techniques include, for example, a method of containing a conductive filler as a conductive material in the anti-static layer by dispersing the conductive filler therein, a method of using a conductive polymer, a method of dispersing or surface-coating a metal compound, an internal addition method of employing an anionic compound such as an organic sulfonic acid or an organic phosphoric acid, a method of using a surfactant-type low-molecular anti-static agent, such as polyoxyethylene alkyleneamine, polyoxyethylene alkenylamine, glycerin fatty acid ester, and a method of dispersing conductive particulates such as carbon black. In particular, a method of containing conductive filler as a conductive material by dispersing the conductive filler is preferable.

Meanwhile, with regard to the electric resistance of an anti-static layer, resistance of a coating film can be broadly classified into internal resistance of particles and contact resistance. The internal resistance of particles is affected by doping amount of a heterogeneous metal · deficient amount of oxygen and crystallinity. Further, the contact resistance is affected by a particle diameter or shape, dispersability of microparticles in a coating material, and conductivity of a binder resin. A film with relatively high conductivity is believed to have a higher influence by contact resistance than internal resistance of particles, and thus it is important to form a conductive path by controlling the particle state.

The anti-static layer preferably has, by containing conductive filler, an anti-static property. As a conductive filler to be contained in an anti-static layer, there are conductive inorganic microparticles. Among them, metal microparticles or conductive inorganic oxide microparticles or the like can be used. In particular, inorganic oxide microparticles can be preferably used.

Examples of the metal microparticles include microparticles such as gold, silver, palladium, ruthenium, rhodium, osmium, iridium, tin, antimony, and indium.

Examples of the inorganic oxide microparticles include microparticles such as indium pentoxide antimony, tin oxide, zinc oxide, ITO (indium tin oxide), ATO (antimony tin oxide), or phosphorus-doped oxide. Among them, inorganic composite oxide microparticles such as phosphorus-doped oxide are preferable in that they have high conductivity and high weather resistance.

The primary particle diameter of a conductive filler is preferably 1 to 100 nm, and particularly preferably 1 to 50 nm so as not to lower the transparency of an anti-static layer when a conductive filler is dispersed in the anti-static layer. To ensure the conductivity, the particles need to be somewhat close to each other, and thus the particle diameter is preferably 1 nm or more. When the particle diameter is more than 100 nm, light is reflected to lower light transmission, and therefore undesirable.

As for the conductive inorganic oxide microparticles, commercially available ones can be used. Specific examples which may be used include CELNAX series (manufactured by Nissan Chemical Industries, Ltd.), P-30, P-32, P-35, P-45, P-120, and P-130 (all manufactured by JGC Catalysts and Chemicals Ltd.), and T-1 S-1, S-2000, and EP SP2 (all manufactured by Mitsubishi Materials Electronic Chemicals Co., Ltd.).

As for the anti-static layer, an organic binder or an inorganic binder may be used as a binder for maintaining the conductive filler. A resin may be used as an organic binder, and examples thereof include an acrylic resin, a cycloolefin resin, and a polycarbonate resin. Further, a hard coat may be employed as an organic binder, and an ultraviolet ray-curable polyfunctional acrylic resin, urethane acrylate, epoxy acrylate, an oxetane resin, and a polyfunctional oxetane resin may be used. Further, preferred examples of the inorganic binder include an inorganic oxide binder (it may be also an inorganic oxide binder using a sol-gel method) and a tetrafunctional inorganic binder. Preferred examples of the inorganic oxide binder include silicon dioxide, titanium oxide, aluminum oxide, and strontium oxide. Particularly preferred is silicon dioxide. Further, preferred examples of the tetrafunctional inorganic binder which can be used include polysilazane (for example, trade name: AQUAMICA manufactured by AZ Electric Materials Ltd.), a siloxane compound (for example, COLCOAT P (manufactured by Colcoat Co., Ltd.), FJ803, which is a mixture of alkylsilicate and metal alcoholate (manufactured by GRANDEX), and alumina sol (manufactured by Kawaken Fine Chemicals Co., Ltd.). Further, a sol-gel solution in which tetraethoxysilane is used as a main component and a catalyst is added can be also used as a tetrafunctional inorganic binder. As a material having both organic and inorganic properties, polyorganosiloxane, polysilazane or the like can be mentioned, and they can be referred to as an organic binder and also as an inorganic binder. A mixture of an inorganic binder and an organic binder may be used as a binder for the anti-static layer, but it is preferable that the entire amount of the binder is an inorganic binder. If the binder is an inorganic binder, high reflectivity can be maintained for a long period of time as it has weather resistance against ultraviolet rays even when it is used in an outdoor environment.

Further, when the hard coat layer is formed of polylorganosiloxane, which is one of preferred materials for the hard coat layer, adhesiveness between the anti-static layer and the hard coat layer is improved if the binder of the anti-static layer is an inorganic binder, enabling prevention of problems in that reflective performance is lowered by film peeling or the like, and therefore desirable. Further, although the inorganic binder may easily generate a crack compared to an organic binder, by forming the hard coat layer as a top layer over the anti-static layer, an effect of preventing a crack, loss, and scattering of loss is obtained and, it can be used without any problem even in a fragile inorganic binder, and thus the film mirror preferably has two layers, that is, the anti-static layer and the hard coat layer.

The anti-static layer can be formed using a conventionally known coating method such as a gravure coating method, a reverse coating method, or a die coating method.

Meanwhile, the film thickness of the anti-static layer is preferably 100 nm or more to 1 µm or less. When the film thickness of the anti-static layer is 1 µm or less, favorable light transmission can be obtained.

Further, the anti-static layer preferably contains a conductive filler (conductive inorganic microparticles) at a ratio of 75% or higher 95% or lower. When the content of the conductive filler is lower than 75%, it is not possible to ensure the conductivity. On the other hand, when the content of the conductive layer is more than 95%, light transmittance is deteriorated.

### (2-4. Acrylic layer)

The acrylic layer preferably has ultraviolet-ray-absorbing capability. If a resin of the layer adjacent to the acrylic layer is an acrylic resin, adhesiveness to such layer is maintained at high level, and therefore desirable. Further, since the acrylic layer more easily yields irregularities than a resin such as polyethylene terephthalate, the surface roughness of the film mirror for solar light reflection increases due to the irregularities on the surface of the acrylic layer. As such, even when a roll-to-roll method for continuously forming a film as the film mirror is used, sticking like blocking can be prevented when the film mirror is wound in a roll shape. Since the acrylic layer is hard, microparticles of a plasticizer may be included to obtain an acrylic layer which is soft and is difficult to be broken. Preferred examples of the microparticles of the plasticizer include microparticles of butyl rubber and butyl acrylate. The thickness of the acrylic layer is preferably 20 to 150 µm since it can provide the film mirror with suitable transmittance of incident light or surface roughness. More preferably, the thickness is 40 to 100 µm. An ultraviolet-ray-absorbing agent or an antioxidant may be also added to the acrylic layer.

The acrylic layer is preferably composed of a methacrylic resin as a substrate resin. The methacrylic resin is a polymer containing a methacrylate ester as a main component, which may be a homopolymer of a methacrylate ester or a copolymer of 50% by weight or more of a methacrylate ester and 50% by weight or less of any other monomers. Usually, an alkyl methacrylate ester is used herein as the methacrylate ester. Polymethyl methacrylate resin (PMMA) is particularly preferably used as the methacrylic resin.

The monomer composition of the methacrylic resin is preferably 50 to 100% by weight of a methacrylate ester, 0 to 50% by weight of an acrylic ester, and 0 to 49% by weight of any other monomers, and more preferably 50 to 99.9% by weight of a methacrylate ester, 0.1 to 50% by weight of an acrylic ester, and 0 to 49% by weight of any other monomers, with respect to the weight of all monomers.

Herein, examples of the alkyl methacrylate include methyl methacrylate, ethyl methacrylate, butyl methacrylate, and 2-ethylhexyl methacrylate, and the alkyl group generally has 1 to 8 carbon atoms, and preferably 1 to 4 carbon atoms. Among them, methyl methacrylate is preferably used.

Examples of the alky acrylate include methyl acrylate, ethyl acrylate, butyl acrylate, and 2-ethylhexyl acrylate, and the alkyl group generally has 1 to 8 carbon atoms, and preferably 1 to 4 carbon atoms.

The monomer other than the alkyl methacrylate and the alkyl acrylate may be a monofunctional monomer, specifically, a compound having one polymerizable carbon-carbon double bond in the molecule, or may be a polyfunctional monomer, specifically, a compound having at least two polymerizable carbon-carbon double bonds in the molecule. A monofunctional monomer is preferably used. Examples of such a monofunctional monomer include aromatic alkenyl compounds such as styrene, α-methylstyrene, or vinyl toluene; and alkenyl cyanides such as acrylonitrile or methacrylonitrile. Example of the polyfunctional monomer include polyhydric alcohol esters of unsaturated polycarboxylic acids such as ethylene glycol dimethacrylate, butanediol dimethacrylate and trimethylolpropane triacrylate; alkenyl esters of unsaturated carboxylic acids such as allyl acrylate, allyl methacrylate and allyl cinnamate; polyalkenyl esters of polybasic acids such as diallyl phthalate, diallyl maleate, triallyl cyanurate and triallyl isocyanurate; and aromatic polyalkenyl compounds such as divinyl benzene.

Meanwhile, if necessary, two or more kinds of each of the alkyl methacrylate, alkyl acrylate, and monomers other than them may be used.

In view of the heat resistance of the film mirror, the methacrylic resin preferably has a glass transition temperature of 40°C or higher and more preferably 60°C or higher. The glass transition temperature can be appropriately set by controlling the type or content of the monomers.

The methacrylic resin can be prepared by suspension polymerization, emulsion polymerization, bulk polymerization, or other types of polymerization of the monomer component. At that time, a chain transfer agent is preferably used during the polymerization so that an appropriate glass transition temperature can be obtained or so that an appropriate level of viscosity for appropriate film moldability can be obtained. The amount of the chain transfer agent may be determined as appropriate depending on the type or content of the monomers.

As for the ultraviolet-ray-absorbing agent to be added to the acrylic layer, those described above in (2-2-3(a). Ultraviolet-ray-absorbing agent) can be also used.

The addition amount of the ultraviolet-ray-absorbing agent in the acrylic layer is preferably 0.1 to 20% by mass, more preferably 1 to 15% by mass, and even more preferably 3 to 10% by mass. Further, as for the addition amount of the ultraviolet-ray-absorbing agent in the acrylic layer, the addition amount per unit area of the film is 0.17 to 2.28 g/m², and more preferably 0.4 to 2.28 g/m² or more. By having the addition amount within the range, contamination of a roll or the film mirror caused by bleed out of the ultraviolet-ray-absorbing agent can be prevented while the weather resistance is sufficiently exhibited.

As for the antioxidant to be added to the acrylic layer, those described in (2-2-3(b). Antioxidant) including the description related to a light stabilizer can be similarly used. By adding the antioxidant, deterioration of the acrylic layer during film forming by melting can be prevented. It is also possible to prevent deterioration of the acrylic layer by the antioxidant capturing radicals.

### (2-5. Adhesive layer)

The adhesive layer is not particularly limited as long as it has the function of increasing the adhesion between layers. It may be either adhesion or viscous adhesion. Preferably, it is a layer for attaching the protective layer or the acrylic layer to the acrylic layer, the resin coat layer, or the silver reflective layer. The adhesive layer preferably has adhesiveness for bonding the layers, heat resistance for withstanding heat during the formation of the silver reflective layer by a vacuum deposition method or the like, and smoothness for unleashing the original highly-reflective performance of the silver reflective layer.

The adhesive layer may be composed of a single layer or plural layers. In view of adhesiveness, smoothness, the reflectance of the reflective material, or other properties, the adhesive layer preferably has a thickness of 1 to 10 µm, and more preferably 3 to 8 µm.

When the adhesive layer is a resin, the resin is not particularly limited as long as it is capable of satisfying the above requirements for adhesiveness, heat resistance, and smoothness. A polyester resin, a urethane resin, an acrylic resin, a melamine resin, an epoxy resin, a polyamide resin, a vinyl chloride resin, a vinyl chloride-vinyl acetate copolymer resin or the like may be used alone, or a blend of any of these resins may be used. In view of weather resistance, a blend of the polyester resin and melamine resin or a blend of the polyester resin and urethane resin is preferred and more preferably, the blend is further mixed with a curing agent such as isocyanate in an acrylic resin to form a thermosetting resin composition. The adhesive layer can be formed using a conventionally known coating method such as a gravure coating method, a reverse coating method, or a die coating method.

Further, when the adhesive layer is metal oxide, the adhesive layer such as silicon oxide, aluminum oxide, silicon nitride, aluminum nitride, lanthanum oxide, lanthanum nitride can be formed by any of various vacuum film forming methods. Examples of the vacuum film forming methods include a resistance heating vacuum deposition method, an electron beam heating vacuum deposition method, an ion plating method, an ion beam-assisted vacuum deposition method, and a sputtering method.

In a case in which the film mirror has no adhesive layer, the acrylic layer or the protective layer is formed by coating or the like. However, in such case, the coating liquid permeates into other layer to reach easily the silver reflective layer or the coating liquid of protective layer is exposed to ultraviolet rays to generate radicals, which then reach silver of the silver reflective layer, and thus a possibility of having aggregation increases. However, according to the present invention, as the resin of the protective layer has an ultraviolet-ray-absorbing group, the ultraviolet-ray-absorbing group can be contained in a larger amount than a case in which the ultraviolet-ray-absorbing agent is added, and thus high resistance to ultraviolet rays can be obtained and generation of radicals from the coating liquid of the protective layer can be suppressed. Thus, the aforementioned problem is difficult to occur. Further, when the protective layer has an antioxidant group, radicals generated from a resin of the protective layer or acrylic layer or radicals generated not from the resin can be inactivated and aggregation of silver in the silver reflective layer can be further prevented, and therefore desirable. Further, due to the absence of an adhesive layer, it becomes possible to have a thinner film mirror. Further, when no adhesive layer is present between the silver reflective layer and the protective layer, the distance between the silver reflective layer or the acrylic layer or the protective layer is shortened so that the radicals generated by degradation of the resin of the acrylic layer or the protective layer or the ultraviolet-ray-absorbing group contained in the resin by ultraviolet rays, or the radicals generated according to the degradation can more easily reach the silver reflective layer. However, as the resin of the protective layer has an ultraviolet-ray-absorbing group, it can have high resistance to ultraviolet rays so that radical generation can be suppressed for a long period of time. Obviously, in a case in which the protective layer has an antioxidant group, the radicals generated from a resin of the protective layer or acrylic layer or the radicals generated not from the resin can be also inactivated and aggregation of silver in the silver reflective layer can be further prevented by the radicals, and therefore desirable.

### (2-6. Gas barrier layer)

A gas barrier layer may be provided on the solar light incident side relative to the silver reflective layer. In this case, it is preferable that the gas barrier layer is formed between the protective layer or acrylic layer and the silver reflective layer. Further, the gas barrier layer is preferably formed between the adhesive layer and the resin coat layer. Although the gas barrier layer is used for preventing deterioration of the resin-film-like support and each component layer and so on supported by the resin-film-like support due to fluctuation of humidity, particularly high humidity, the gas barrier layer may have special functions and applications and the gas barrier layer may be provided in various manners as long as it has the deterioration preventing function.

With regard to a moisture-proof property of the gas barrier layer, water vapor permeability at 40°C and 90% RH is preferably 1 g/m²·day or less, more preferably 0.5 g/m²·day or less, and still more preferably 0.2 g/m²·day or less. An oxygen transmission rate of the gas barrier layer is preferably 0.6 ml/m²/day/atm or less under conditions of a measurement temperature of 23°C and a humidity of 90% RH.

The gas barrier layer may be composed of a single layer or plural layers. The gas barrier layer preferably has a thickness of 10 to 500 nm, and more preferably 50 to 200 nm.

Examples of a method of forming a gas barrier layer include a method of forming an inorganic oxide using a vacuum deposition method, sputtering, an ion beam-assisted method and a chemical vapor deposition method, for example, and a method of coating a precursor of an inorganic oxide by a sol-gel method, then applying heat treatment and/or ultraviolet irradiation treatment to a coating film thus obtained to form an inorganic oxide film is preferably used.

### (2-6-1. Inorganic oxide)

The inorganic oxide is formed from a sol made of an organic metal compound as a raw material by localized heating. Examples thereof include an oxide of an element such as silicon (Si), aluminum (Al), zirconium (Zr), titanium (Ti), tantalum (Ta), zinc (Zn), barium (Ba), indium (In), tin (Sn), and niobium (Nb) contained in an organic metal compound. Such an inorganic oxide is, for example, silicon oxide, aluminum oxide, or zirconium oxide. Among them, silicon oxide is preferred.

As a method of forming an inorganic oxide, a so-called sol-gel method or a polysilazane method is preferably used. In the sol-gel method, an inorganic oxide is formed from an organic metal compound which is a precursor of the inorganic oxide. In the polysilazane method, an inorganic oxide is formed from polysilazane which is a precursor of the inorganic oxide.

### (2-6-2. Precursor of inorganic oxide)

The gas barrier layer can be formed by coating a precursor which can form an inorganic oxide by heating and applying heat with a common heating method. It is preferable that the gas barrier layer is formed by localized heating. The precursor is preferably an organic metal compound in the form of sol or polysilazane.

### (2-6-3. Organic metal compound)

An organic metal compound preferably contains at least one element selected from silicon, aluminum, lithium, zirconium, titanium, tantalum, zinc, barium, indium, tin, lanthanum, yttrium, and niobium. Particularly, it is preferable that the organic metal compound contains at least one element selected from silicon, aluminum, lithium, zirconium, titanium, zinc, and barium. It is more preferable that the organic metal compound contains at least one element selected from silicon, aluminum, and lithium.

Although the organic metal compound is not limited particularly as long as it can be hydrolyzed, preferred examples of the organic metal compound include a metal alkoxide. The metal alkoxide is represented by the following formula (8).

Mr³⁵ₘ(OR³⁶)ₙ₋ₘ (8)

In the above formula (8), M represents metal having an oxidation number of n. R³⁵ and R³⁶ each independently represent an alkyl group and m represents an integer of 0 to (n - 1). R³⁵ and R³⁶ may be identical or different from each other. R³⁵ and R³⁶ are each preferably an alkyl group having 4 or less carbon atoms, more preferably a lower alkyl group such as a methyl group CH₃ (hereinafter, it may be represented as Me), an ethyl group C₂H₅ (hereinafter, represented as Et), a propyl group C₃H₇ (hereinafter, it may be represented as Pr), an isopropyl group i-C₃H₇ (hereinafter, it may be represented as i-Pr), a butyl group C₄H₉ (hereinafter, it may be represented as Bu), and an isobutyl group i-C₄H₉ (hereinafter, it may be represented as i-Bu).

Preferred examples of metal alkoxide represented by the above formula (8) include lithium ethoxide LiOEt, niobium ethoxide Nb(OEt)₅, magnesium isopropoxide Mg(OPr-i)₂, aluminum isopropoxide Al(OPr-i)₃, zinc propoxide Zn(OPr)₂, tetraethoxysilane Si(OEt)₄, titanium isopropoxide Ti(OPr-i)₄, barium ethoxide Ba(OEt)₂, barium isopropoxide Ba(OPr-i)₂, triethoxyborane B(OEt)₃, zirconium propoxide Zn(OPr)₄, lanthanum propoxide La(OPr)₃, yttrium propoxide Y(OPr)₃, and lead isopropoxide Pb(OPr-i)₂. Those metal alkoxides are all commercially available and can be easily obtained. A metal alkoxide is also commercially available in the form of a low condensation product, which is produced through partial hydrolysis, and it can be also used as a raw material.

### (2-6-4. Sol-gel method)

A "sol-gel method" described herein refers to a process in which an organic metal compound is hydrolyzed to obtain a sol of an hydroxide, the sol is dehydrated to obtain a gel, and the gel is subjected to a heat treatment, whereby a metal oxide glass of a specific form (film form, particle form, fibrous form or the like) is prepared. A multi-component metal oxide glass can be obtained by, for example, a method of mixing a plurality of different sol solutions and a method of adding other metal ions. Specifically, it is preferable that an inorganic oxide is produced by a sol-gel method having the following steps.

Specifically, the sol-gel method includes a step of, in a reaction solution containing at least water and an organic solvent, subjecting an organic metal compound to hydrolysis and dehydration condensation to obtain a reaction product while controlling the pH in a range between 4.5 to 5.0 with halogen ions as a catalyst in the presence of boron ions, and a step of heating and vitrifying the reaction product at a temperature of 200°C or less. The method is particularly preferable because of the reason that the obtained inorganic oxide is free from an occurrence of pores and deterioration of a film caused by high-temperature heat treatment.

In the sol-gel method, although an organic metal compound used as a raw material is not limited particularly as long as it can be hydrolyzed, and preferred examples of an organic metal compound include the above metal alkoxide.

In the sol-gel method, although the organic metal compound may be used as it is in the reaction, it is preferable that the organic metal compound is diluted with a solvent and then used in order to facilitate control of the reaction. Any solvent for dilution may be used as long as it is a solvent which can dissolve the organic metal compound and can be uniformly mixed with water. Preferred examples of the diluting solvent include lower aliphatic alcohols such as methanol, ethanol, propanol, isopropanol, butanol, isobutanol, ethylene glycol and propylene glycol and a mixture thereof. Moreover, a mixed solvent of butanol, cellosolve and butyl cellosolve, or a mixed solvent of xylol, cellosolve acetate, methyl isobutyl ketone and cyclohexane may be used.

When the metal in the organic metal compound is calcium, magnesium aluminum or the like, an alcohol solution of triethanol amine is preferably added to the reaction solution as a masking agent since the metal reacts with water in the reaction solution to generate a hydroxide or generates a carbonate to cause deposition when carbonate ions CO₃²⁻ exist. The concentration of the organic metal compound when it is mixed and dissolved in the solvent is preferably 70% by mass or less. It is even more preferable for the organic metal compound to be diluted to a range of 5 to 70% by mass in use.

The reaction solution used in the sol-gel method contains at least water and an organic solvent. Any solvent may be used as the organic solvent as long as it forms a uniform solution with water, acid, and alkali. Usually, a solution similar to aliphatic lower alcohols used to dilute the organic metal compound may be preferably used. Among the aliphatic lower alcohols, preferred are propanol, isopropanol, butanol or isobutanol which has a larger carbon number than methanol and ethanol in view of stabilizing the growth of the metal oxide glass film to be produced. The concentration of water as the ratio of water in the reaction solution is preferably within a range from 0.2 to 50 mol/L.

In the sol-gel method, the organic metal compound is hydrolyzed in the reaction solution using halogen ions as a catalyst in the presence of boron ions. Trialkoxy borane B(OR)₃ is preferred as a compound providing boron ions B³⁺. Particularly, triethoxy borane B(OEt)₃ is more preferred. The B³⁺ ion concentration in the reaction solution is preferably within a range from 1.0 to 10.0 mol/L.

Fluorine ions and/or chlorine ions are preferred as halogen ions. Namely, fluorine ions and chlorine ions may be used singly or in mixture of them. Any compound may be used as long as it generates fluorine ions and/or chlorine ions in the reaction solution. Preferred examples of a fluorine ion source include compounds such as ammonium hydrogen fluoride NH₄HF·HF and sodium fluoride NaF. Preferred examples of a chlorine ion source include ammonium chloride NH₄Cl.

Although the concentration of the halogen ions in the reaction solution varies depending on the thickness of a film made of the inorganic composition having an inorganic matrix to be produced and other conditions, the concentration of the halogen ions is, in general, preferably in a range of 0.001 to 2 mol/kg, particularly 0.002 to 0.3 mol/kg, with respect to the total mass of the reaction solution containing a catalyst. When the concentration of halogen ions is lower than 0.001 mol/kg, it becomes difficult for hydrolysis of the organic metal compound to sufficiently progress, whereby film formation becomes difficult. When the concentration of halogen ions is more than 2 mol/kg, the inorganic matrix (metal oxide glass) to be produced tends to become non-uniform, therefore, neither case is preferable.

Regarding boron used in the reaction, when having the boron as a component of B₂O₃ be remained in a product as a designed composition of the obtained inorganic matrix, the product may be produced while adding the calculated amount of the organic boron compound corresponding to the content of the boron. When the boron is required to be removed, after film formation, the formed film is heated in the presence of methanol as a solvent or immersed in methanol and heated, so that the boron evaporates as methyl esters of boron and can be removed.

In a process of obtaining the reaction product by hydrolysis and dehydration condensation of the organic metal compound, a main solution in which a predetermined amount of the organic metal compound is dissolved in a mixed solvent containing a predetermined amount of water and an organic solvent and a predetermined amount of reaction solution containing a predetermined amount of halogen ions are mixed at a predetermined ratio and sufficiently stirred to obtain a uniform reaction solution. The reaction solution is then adjusted by acid or alkali to have a desired pH value and aged for several hours to thereby allow the reaction to progress to obtain the reaction product. A predetermined amount of the boron compound is previously mixed and dissolved in the main solution or the reaction solution. When alkoxy borane is used, it is advantageous to dissolve it in the main solution together with another organic metal compound.

The pH of the reaction solution is selected according to purposes. When the purpose is to form a film made of the inorganic composition having the inorganic matrix (metal oxide glass), it is preferable to adjust the pH to a range of 4.5 to 5 using an acid such as hydrochloric acid and then age the reaction solution. In this case, it is convenient to use, for example, a mixture of methyl red and bromo cresol green as an indicator.

Meanwhile, in the sol-gel method, while the main solution and the reaction solution (containing B³⁺ and halogen ions) having the same components and concentrations are mixed successively at the same rate while adjusting to have a predetermined pH value, whereby the reaction product can be easily and continuously produced. The concentration of the reaction solution can vary within a range of ±50% by mass, the concentration of water (containing acid or alkali) can vary within a range of ±30% by mass, and the concentration of halogen ions can vary within a range of ±30% by mass.

Next, the reaction product obtained in the previous step (the aged reaction solution) is heated to a temperature of 200°C or lower to be dried so as to be vitrified. In the heating, it is preferable that the temperature is gradually raised with paying special attention in a temperature range of 50 to 70°C for undergoing a preliminary drying (solvent vaporization) step and then the temperature is further raised. The preliminary drying step is important for forming a poreless film in the film formation. The temperature at which the reaction product is heated and dried after the preliminary drying step is preferably 70 to 150°C, and more preferably 80 to 130°C.

### (2-7. Resin coat layer)

The resin coat layer is preferably formed between the acrylic layer and the silver reflective layer. When the resin coat layer is adjacent to the silver reflective layer, a corrosion inhibitor is preferably added such that the resin coat layer can prevent corrosion of the silver reflective layer. The resin coat layer may have ultraviolet-ray-absorbing capability.

The resin coat layer may consist of a single layer or plural layers. The thickness of the resin coat layer is preferably 0.1 to 10 µm, and more preferably 2 to 8 µm.

As for a binder of the resin coat layer, the following resin can be preferably used, for example. Examples include cellulose ester, polyester, polycarbonate, polyarylate, polysulfone (including polyether sulfone), polyester such as polyethylene terephthalate or polyethylene naphthalate, polyethylene, polypropylene, cellophane, cellulose diacetate, cellulose triacetate, cellulose acetate propionate, cellulose acetate butyrate, polyvinylidene chloride, polyvinyl alcohol, ethylene vinyl alcohol, syndiotactic polystyrene, polycarbonate, norbornene, polymethylpentene, polyether ketone, polyether ketone imide, polyamide, fluororesin, nylon, polymethyl methacrylate, and an acrylic resin. Among them, an acrylic resin is preferable.

### (2-7-1. Corrosion inhibitor)

As for the corrosion inhibitor, those having an adsorbent group for metal as a main compositional material of the silver reflective layer are preferable. As described herein, the "corrosion" indicates a phenomenon where metal is chemically or electrochemically eroded or materially deteriorated by environmental materials surrounding the metal (see JIS Z0103-2004). Meanwhile, with regard to the addition amount of corrosion inhibitor, the optimum amount varies depending on a compound to be used. However, in general, it is preferably in a range of 0.1 to 1.0/m².

The corrosion inhibitor having the adsorptive group for metal is preferably at least one kind selected from amines and derivatives thereof, a compound having a pyrrole ring, a compound having a triazole ring such as benzotriazole, a compound having a pyrazole ring, a compound having a thiazole ring, a compound having an imidazole ring, a compound having an indazole ring, a copper chelate compound, thioureas, a compound having a mercapto group, and a naphthalene type compound, or a mixture of them. For a compound such as benzotriazole, the ultraviolet-ray-absorbing agent may also function as a corrosion inhibitor. It is also possible to use a silicone-modified resin. A silicone-modified resin is not limited particularly.

Examples of the amines and derivatives thereof include ethyl amine, lauryl amine, tri-n-butyl amine, o-toluidine, diphenyl amine, ethylene diamine, diethylene triamine, triethylene tetramine, tetraethylene pentamine, monoethanol amine, diethanol amine, triethanol amine, 2N-dimethylethanol amine, 2-amino-2-methyl-1,3-propane diol, acetamide, acrylamide, benzamide, p-ethoxychrysoidine, dicyclohexyl ammonium nitrite, dicyclohexyl ammonium salicylate, monoethanol amine benzoate, dicyclohexyl ammonium benzoate, diisopropyl ammonium benzoate, diisopropyl ammonium nitrite, cyclohexyl amine carbamate, nitronaphthalene ammonium nitrite, cyclohexyl amine benzoate, dicyclohexyl ammonium cyclohexane carboxylate, cyclohexyl amine cyclohexane carboxylate, dicyclohexyl ammonium acrylate, and cyclohexyl amine acrylate, and a mixture thereof.

Examples of the compound having a pyrrole ring include N-butyl-2,5-dimethyl pyrrole, N-phenyl-2,5dimethyl pyrrole, N-phenyl-3-formyl-2,5-dimethyl pyrrole, N-phenyl-3,4-diformyl-2,5-dimethyl pyrrole, and a mixture thereof.

Examples of the compound having a triazole ring include 1,2,3-triazole, 1,2,4-triazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolyltriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-tert-butylphenyl)benzotriazole, 2-(2'-hydroxy3'5'-di-tert-butylphenyl)benzotriazole, 2-(2'-hydroxy-4-octoxyphenyl)benzotriazole, 2-(2'-hydroxy-3'-t-butyl-5'-methylphenyl)benzotriazole, 2,2'-methylenebis[6-(2H-benzotriazol-2-yl)-4-(1,1,3,3-tetramethylbutyl)phenol] (molecular weight 659; as a commercially available product, LA31 manufactured by ADEKA Corporation), and 2-(2H-benzotriazol-2-yl)-4,6-bis(1-methyl-1-phenylethyl)phenol (molecular weight 447.6; as a commercially available product, TINUVIN 234 manufactured by Chiba Specialty Chemicals), and a mixture thereof.

Examples of the compound having a pyrazole ring include pyrazole, pyrazoline, pyrazolone, pyrazolidine, pyrazolidone, 3,5-dimethylpyrazole, 3-methyl-5-hydroxypyrazole, 4-aminopyrazole, and a mixture thereof.

Examples of the compound having a thiazole ring include thiazole, thiazoline, thiazolone, thiazolidine, thiazolodone, isothiazole, benzothiazole, 2-N,N-diethylthiobenzothiazole, p-dimethyl aminobenzalrhodanine, 2-mercaptobenzothiazole, and a mixture thereof.

Examples of the compound having an imidazole ring include imidazole, histidine, 2-heptadecyl imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 2-phenyl-4-methyl-5-hydromethyl imidazole, 2-phenyl-4,5dihydroxymethyl imidazole, 4-formyl imidazole, 2-methyl-4-formyl imidazole, 2-phenyl-4-formyl imidazole, 4-methyl-5-formyl imidazole, 2-ethyl-4-methyl-5-formyl imidazole, 2-phenyl-4-methyl-4-formyl imidazole, 2-mercaptobenz imidazole, and a mixture thereof.

Examples of the compound having an indazole ring include 4-chloroindazole, 4-nitroindazole, 5-nitroindazole, 4-chloro-5-nitroindazole, and a mixture thereof.

Examples of the copper chelate compounds include copper acetylacetone, copper ethylene diamine, copper phthalocyanine, copper ethylene diamine tetraacetate, copper hydroxyquinoline, and a mixture thereof.

Examples of the thioureas include thiourea, guanylthiourea and a mixture thereof.

Examples of the compound having a mercapto group include, when the above materials are included, mercaptoacetic acid, thiophenol, 1,2-ethanedithiol, 3-mercapto-1,2,4-triazole, 1-methyl-3-mercapto-1,2,4-triazole, 2-mercaptobenzothiazole, 2-mercaptobenzoimidazole, glycol dimercaptoacetate, 3-mercaptopropyltrimethoxysilane, and a mixture thereof.

Examples of a naphthalene type compound include thionalide.

### (2-8. Silver reflective layer)

The silver reflective layer is a layer composed of silver having a function of reflecting solar light. The surface reflectance of the silver reflective layer is preferably 80% or more, and more preferably 90% or more. The silver reflective layer may be present on a solar light incident side (surface side) or on an opposite side (rear surface side). However, for the purpose of preventing deterioration of the resin substrate by ultraviolet rays in solar light, it is preferably arranged on a solar light incident side. Further, when a layer between the silver reflective layer and the protective layer has a film thickness of 0 µm or more and 5 µm or less, radicals generated by degradation of the ultraviolet-ray-absorbing group in the resin by ultraviolet rays, or the radicals generated according to the degradation can more easily reach the silver reflective layer, and thus silver aggregation is easily caused. However, as the resin of the protective layer has an ultraviolet-ray-absorbing group, it is possible to have it with high resistance to ultraviolet rays and radical generation can be prevented for a long period of time, and thus it is not a problem. Further, since the layer between the protective layer and the silver reflective layer has a film thickness of 0 µm or more and 5 µm or less, it can contribute to slimming of the film mirror as a whole. Further, when the total film thickness from the surface on the solar light incident side of the silver reflective layer to the outermost surface on the solar light incident side of the film mirror for solar light reflection is 5 µm or more and 125 µm or less, the film thickness for solar right to reach the silver reflective layer is thin, that is, 5 µm or more and 125 µm, and thus it is difficult to have intensity attenuation by a layer through which solar light passes until it reaches the silver reflective layer. Since penetration through the layer on a surface of the film mirror occurs again after reflection by the silver reflective layer, obviously, it is also difficult to have intensity attenuation with a thin film thickness. Further, as it yields a thinner film mirror, cost relating to materials can be reduced, transport efficiency is improved by having decreased weight, and manpower for production can be also reduced.

The thickness of the silver reflective layer is, from the viewpoint of reflectance or the like, preferably 10 to 200 nm, and more preferably 30 to 150 nm. When the film thickness of the silver reflective layer is more than 10 nm, light transmission does not occur due to a sufficient film thickness and reflectance of the film mirror can be sufficiently maintained in a visible light range, and therefore desirable. Further, although the reflectance increases in proportion to the film thickness of up to 200 nm or so, it does not depend on the film thickness after it is 200 nm or more. A surface roughness (Ra) of the silver reflective layer is 0.01 µm or more and 0.1 µm or less and preferably 0.02 µm or more and 0.07 µm or less.

Since the silver reflective layer has high reflectance and corrosion resistance, it is suitable for a film mirror. Two or more of such silver layers may be formed. By doing so, reflectance of the film mirror from an infrared range to a visible light range is increased and dependency of the reflectance on incident angle can be reduced. The infrared range to the visible light range indicates a wavelength range of from 2500 to 400 nm. The incident angle means an angle relative to a line perpendicular to film surface (normal line).

The silver reflective layer can be formed by using any one of a wet method and a dry method. The wet method is a general name for plating, which is a method of forming a film by deposition of a metal from a solution. Specific examples thereof include a silver mirror reaction or the like.

The dry method is a general name for vacuum film forming methods, examples thereof include a resistance heating vacuum deposition method, an electron beam heating vacuum deposition method, an ion plating method, an ion beam-assisted vacuum deposition method, and a sputtering method. In particular, a vapor deposition method capable of allowing a roll-to-roll process for continuous film production is preferably used in the present invention. For a method for producing the film mirror for solar light reflection, for example, it is preferably a method including forming the silver reflective layer by vapor deposition.

Further, from the viewpoint of improving durability of the silver reflective layer, in addition to silver, an alloy can be prepared by selecting two or more kinds of a metal selected from an element group consisting of aluminum, silver, chrome, nickel, titanium, magnesium, rhodium, platinum, palladium, tin, gallium, indium, bismuth, and gold. Considering the reflectance, when the silver reflective layer is prepared as a film consisting of silver alloy, silver is preferably 90 to 99.8 atom% in total of silver and other metal (100 atom%) in the silver reflective layer. Further, other metal is preferably 0.2 to 10 atom% from the viewpoint of the durability. For such case, gold is particularly preferred as other metal from the viewpoint of moisture resistance at a high temperature and reflectance.

### (2-8-1. Silver complex compound having vaporizable or releasable ligand)

For forming the silver reflective layer of the present invention, in addition to a dry method or a wet method, the forming can be achieved by heating and calcining a coating film containing a silver complex compound having a vaporizable or releasable ligand.

The "silver complex compound having vaporizable or releasable ligand" indicates a silver complex compound which has a ligand for stable dissolution of silver in a solution but can have only the silver according to thermal decomposition of the ligand by removing the solvent and heating and calcining to yield CO² or low molecular weight amine compound followed by vaporization · release.

Examples of the complex are described in each of JP 2009-535661 A and JP 2010-500475 A, and it is preferably a silver complex compound obtained by a silver compound represented by the following formula (9) and an ammonium carbamate compound or an ammonium carbonate compound represented by the formulas (10) to (12).

Further, the silver complex compound is contained in a silver coating liquid composition, and by coating the composition, a coating film containing the complex of the present invention is formed on a support. Specifically, it is preferable that, after forming a coating film on a film by using a silver complex compound, the silver reflective layer is formed by heating and calcining the coating film at a temperature in a range of 80 to 250°C. More preferably, it is in a range of 100 to 220°C, and particularly preferably in a range of 120 to 200°C. A unit for heating and calcining is not particularly limited and any commonly used heating unit can be applied.

Hereinafter, the silver compound represented by the following formula (9) and the ammonium carbamate compound and the ammonium carbonate compound represented by the following formulas (10) to (12) are described.

AgₙX³ (9)

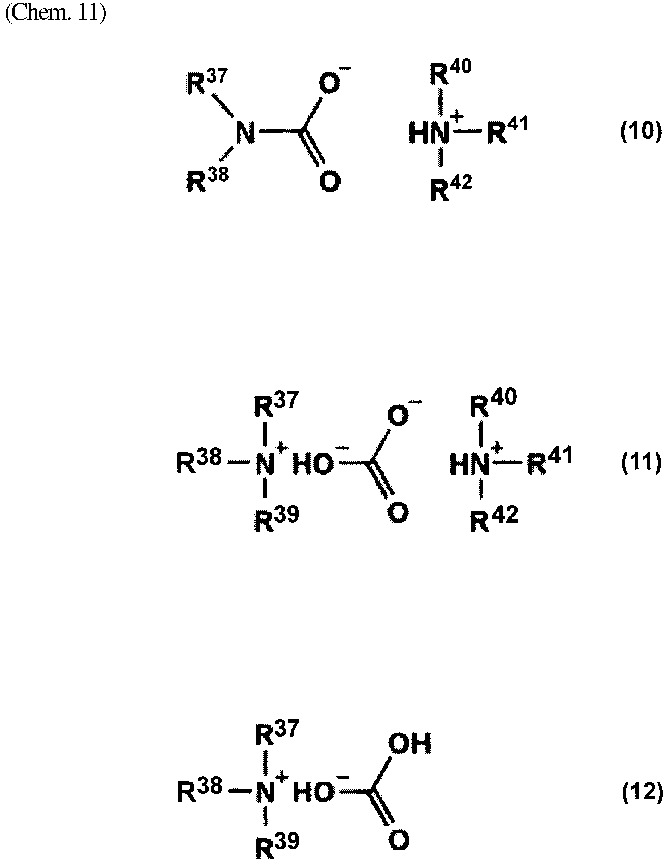

In the formulas (9) to (12), X³ represents at least one substituent group selected from oxygen, sulfur, halogen, cyano, cyanate, carbonate, nitrate, nitrite, sulfate, phosphate, thiocyanate, chlorate, perchlorate, tetrafluoroborate, acetylacetonate, carboxylate, and derivatives thereof, n represents an integer of 1 to 4, R³⁷ to R⁴² each independently represent at least one substituent group selected from hydrogen, a C₁ to C₃₀ aliphatic or alicyclic alkyl group, an aryl group or an aralkyl group, an alkyl group or an aryl group substituted with a functional group, a heterocyclic compound group, a polymer compound, and derivatives thereof.

Specific examples of the formula (9) include silver oxide, silver thiocyanate, silver sulfide, silver chloride, silver cyanide, silver cyanate, silver carbonate, silver nitrate, silver nitrite, silver sulfate, silver phosphate, silver perchlorate, silver tetrafluoroborate, silver acetylacetonate, silver acetate, silver lactate, silver oxalate, and derivatives thereof, but are not limited thereto.

Further, in the formulas (10) to (12), specific examples of R³⁷ to R⁴² include hydrogen, methyl, ethyl, propyl, isopropyl, butyl, isobutyl, amyl, hexyl, ethylhexyl, heptyl, octyl, isooctyl, nonyl, decyl, dodecyl, hexadecyl, octadecyl, docodecyl, cyclopropyl, cyclopentyl, cyclohexyl, aryl, hydroxy, methoxy, hydroxyethyl, methoxyethyl, 2-hydroxypropyl, methoxypropyl, cyanoethyl, ethoxy, butoxy, hexyloxy, methoxyethoxyethyl, methoxyethoxyethoxyethyl, hexamethylene imine, morpholine, piperidine, piperazine, ethylene diamine, propylenediamine, hexamethylene diamine, triethylene diamine, pyrrole, imidazole, pyridine, carboxymethyl, trimethoxysilylpropyl, triethoxysilylpropyl, phenyl, methoxyphenyl, cyanophenyl, phenoxy, tolyl, benzyl and derivatives thereof, and a polymer compound such as polyarylamine or polyethylene imine, and derivatives thereof, but are not limited thereto.

Examples of the compound of the formulas (10) to (12) include one kind selected from ammonium carbamate, ammonium carbonate, ammonium bicarbonate, ethyl ammonium ethyl carbamate, isopropyl ammonium isopropyl carbamate, n-butyl ammonium n-butyl carbamate, isobutyl ammonium isobutyl carbamate, t-butyl ammonium t-butyl carbamate, 2-ethylhexyl ammonium 2-ethylhexyl carbamate, octadecyl ammonium octadecyl carbamate, 2-methoxyethyl ammonium 2-methoxyethyl carbamate, 2-cyanoethyl ammonium 2-cyanoethyl carbamate, dibutyl ammonium dibutyl carbamate, dioctadecyl ammonium dioctadecyl carbamate, methyldecyl ammonium methyldecyl carbamate, hexamethylene imine ammonium hexamethylene imine carbamate, morpholinium morpholine carbamate, pyridium ethylhexyl carbamate, triethylene diaminium isopropyl bicarbamate, benzyl ammonium benzyl carbamate, triethoxysilylpropyl ammonium triethoxysilylpropyl carbamate, ethyl ammonium ethyl carbonate, isopropyl ammonium isopropyl carbonate, isopropyl ammonium bicarbonate, n-butyl ammonium n-butyl carbonate, isobutyl ammonium isobutyl carbonate, t-butyl ammonium t-butyl carbonate, t-butyl ammonium bicarbonate, 2-ethylhexyl ammonium 2-ethylhexyl carbonate, 2-ethylhexyl ammonium bicarbonate, 2-methoxyethyl ammonium 2-methoxyethyl carbonate, 2-methoxyethyl ammonium bicarbonate, 2-cyanoethyl ammonium 2-cyanoethyl carbonate, 2-cyanoethyl ammonium bicarbonate, octadecyl ammonium octadecyl carbonate, dibutyl ammonium dibutyl carbonate, dioctadecyl ammonium dioctadecyl carbonate, dioctadecyl ammonium bicarbonate, methyldecyl ammonium methyldecyl carbonate, hexamethylene imine ammonium hexamethylene imine carbonate, morpholine ammonium morpholine carbonate, benzyl ammonium benzyl carbonate, triethoxysilylpropyl ammonium triethoxysilylpropyl carbonate, pyridium bicarbonate, triethylene diaminium isopropyl carbonate, triethylene diaminium bicarbonate, and derivatives thereof, or a mixture of two or more kinds of them, but are not limited thereto.

Meantime, the types of the ammonium carbamate compounds or ammonium carbonate compounds and the methods of producing those compounds are not particularly limited. For example, US 4,542,214 discloses that ammonium carbamate compounds can be prepared from primary amine, secondary amine, tertiary amine or a mixture of at least one of those compounds and carbon dioxide. An ammonium carbonate compound can be prepared in the case where another 0.5 mol of water is added to 1 mol of amine, while an ammonium bicarbonate compound can be prepared in the case where 1 mol or more of water is added to 1 mol of amine. The preparation can be directly carried out without using an especial solvent under normal pressure or increased pressure. When a solvent is used, examples thereof include water; alcohols such as methanol, ethanol, isopropanol, and butanol; glycols such as ethylene glycol and glycerin; acetates such as ethyl acetate, butyl acetate, and carbitol acetate; ethers such as diethyl ether, tetrahydrofuran, and dioxane; ketones such as methyl ethyl ketone and acetone; hydrocarbons such as hexane and heptane; aromatic compounds such as benzene and toluene; halogen substituted solvents such as chloroform, methylene chloride, and carbon tetrachloride; or mixed solvents thereof. Carbon dioxide may be reacted in a gaseous state by bubbling or in a solid state dry ice as well as in a supercritical state. Any other known methods can be employed for the preparation of the ammonium carbamate or ammonium carbonate derivatives if the structure of the final compound is the same. In other words, the solvent, reaction temperature, concentration, or catalyst for production is not particularly required to be limited, and they do not have an influence on the production yield.

An organic silver complex compound can be manufactured by the reaction of an ammonium carbamate compound or an ammonium carbonate compound with a silver compound. For example, at least one or more silver compounds as shown in the formula (9) may be directly reacted with at least one or more of ammonium carbamate derivatives or ammonium carbonate derivatives as shown in the formulas (10) to (12) or a mixture thereof without using a solvent under normal pressure or increased pressure in nitrogen gas. When a solvent is used, examples thereof include water; alcohols such as methanol, ethanol, isopropanol and butanol; glycols such as ethylene glycol and glycerin; acetates such as ethyl acetate, butyl acetate and carbitol acetate; ethers such as diethyl ether, tetrahydrofuran and dioxane; ketones such as methyl ethyl ketone and acetone; hydrocarbons such as hexane and heptanes; aromatic solvents such as benzene and toluene; and halogen substituted solvents such as chloroform, methylene chloride, and carbon tetrachloride, and a mixture thereof.

For producing the silver complex compound, besides the above-described method, the silver complex compound can be also produced in such a manner that a mixed solution of the silver compound represented by the formula (9) and at least one or more amine compounds is prepared, and then reacted with carbon dioxide. As described above, either the direct reaction without a solvent or the reaction with a solvent can be conducted under normal pressure or increased pressure in nitrogen gas. Any known method can be employed if the structure of the final compound is the same. More specifically, the solvent, reaction temperature, concentration, or presence of absence of catalyst for production is not particularly required to be limited, and they do not have an influence on the production yield.

The method for producing the silver complex compound is described in JP 2008-530001, and it is recognized with the following formula (13).

Ag[C]ₘ (13)

(in the formula (13), C is a compound represented by the formulas (10) to (12) and m is 0.5 to 1.5).

The silver coating liquid composition used for forming the reflective surface with high reflectance and high gloss includes the silver complex compound, and, if necessary, can contain other additives such as a solvent, a stabilizer, a leveling agent, a thin film adjuvant, a reducing agent, and a pyrolysis promoter in the silver coating composition. An adjuvant, a reducing agent, and a pyrolysis promoter can be contained in the silver coating composition of the present invention.

Examples of the stabilizer include an amine compound such as primary amine, secondary amine, or tertiary amine, the above-described ammonium carbamate compound, the above-described ammonium carbonate compound, the above-described ammonium bicarbonate compound, or a phosphorus compound such as phosphine, phosphite, or phosphate, a sulfur compound such as thiol or sulfide, and a mixture of at least one or more of these compounds. Specific examples of the amine compound include an amine compound such as methylamine, ethylamine, n-propylamine, isopropylamine, n-butylamine, isobutylamine, isoamylamine, n-hexylamine, 2-ethylhexylamine, n-heptylamine, n-octylamine, isooctylamine, nonylamine, decylamine, dodecylamine, hexadecylamine, octadecylamine, docodecylamine, cyclopropylamine, cyclopentylamine, cyclohexylamine, arylamine, hydroxyamine, ammonium hydroxide, methoxyamine, 2-ethanolamine, methoxyethylamine, 2-hydroxypropylamine, 2-hydroxy-2-methylpropylamine, methoxypropylamine, cyanoethylamine, ethoxyamine, n-butoxyamine, 2-hexyloxyamine, methoxyethoxyethylamine, methoxyethoxyethoxyethylamine, dimethylamine, dipropylamine, diethanolamine, hexamethylene imine, morpholine, piperidine, piperazine, ethylene diamine, propylenediamine, hexamethylene diamine, triethylene diamine, 2,2-(ethylene dioxy) bisethylamine, triethylamine, triethanolamine, pyrrole, imidazole, pyridine, aminoacetaldehyde dimethylacetal, 3-aminopropyltrimethoxysilane, 3-aminopropyltriethoxysilane, aniline, anisidine, aminobenzonitrile, benzylamine, derivatives thereof, a polymer compound such as polyarylamine and polyethyleneimine, and derivatives thereof.

Specific examples of the ammonium carbamate, carbonate, and bicarbonate compound include ammonium carbamate, ammonium carbonate, ammonium bicarbonate, ethyl ammonium ethyl carbamate, isopropyl ammonium isopropyl carbamate, n-butyl ammonium n-butyl carbamate, isobutyl ammonium isobutyl carbamate, t-butyl ammonium t-butyl carbamate, 2-ethylhexyl ammonium 2-ethylhexyl carbamate, octadecyl ammonium octadecyl carbamate, 2-methoxyethyl ammonium 2-methoxyethyl carbamate, 2-cyanoethyl ammonium 2-cyanoethyl carbamate, dibutyl ammonium dibutyl carbamate, dioctadecyl ammonium dioctadecyl carbamate, methyldecyl ammonium methyldecyl carbamate, hexamethylene imine ammonium hexamethylene imine carbamate, morpholinium morpholine carbamate, pyridium ethylhexyl carbamate, triethylene diaminium isopropyl bicarbamate, benzyl ammonium benzyl carbamate, triethoxysilylpropyl ammonium triethoxysilylpropyl carbamate, ethyl ammonium ethyl carbonate, isopropyl ammonium isopropyl carbonate, isopropyl ammonium bicarbonate, n-butyl ammonium n-butyl carbonate, isobutyl ammonium isobutyl carbonate, t-butyl ammonium t-butyl carbonate, t-butyl ammonium bicarbonate, 2-ethylhexyl ammonium 2-ethylhexyl carbonate, 2-ethylhexyl ammonium bicarbonate, 2-methoxyethyl ammonium 2-methoxyethyl carbonate, 2-methoxyethyl ammonium bicarbonate, 2-cyanoethyl ammonium 2-cyanoethyl carbonate, 2-cyanoethyl ammonium bicarbonate, octadecyl ammonium octadecyl carbonate, dibutyl ammonium dibutyl carbonate, dioctadecyl ammonium dioctadecyl carbonate, dioctadecyl ammonium bicarbonate, methyldecyl ammonium methyldecyl carbonate, hexamethylene imine ammonium hexamethylene imine carbonate, morpholine ammonium morpholine carbonate, benzyl ammonium benzyl carbonate, triethoxysilylpropyl ammonium triethoxysilylpropyl carbonate, pyridium bicarbonate, triethylene diaminium isopropyl carbonate, triethylene diaminium bicarbonate, and derivatives thereof.

Furthermore, as for the phosphorous compound, a phosphorus represented by a formula R⁴³₃P, (RO)₃P, or (RO)₃PO, in which R⁴³ is an alkyl or aryl group having 1 to 20 carbon atoms, can be mentioned. Specific examples thereof include tributylphosphine, triphenylphosphine, triethyl phosphite, triphenyl phosphite, dibenzyl phosphate, and triethyl phosphate.

Specific examples of the sulfur compound include butanethiol, n-hexanethiol, diethyl sulfide, tetrahydrothiophene, aryl disulfide, 2-mercaptobenzothiazole, tetrahydrothiophene, and octyl thioglycolate.

The use amount of the stabilizer is not required to be limited particularly as long as it satisfies the ink characteristics of the present invention. However, the content is preferably 0.1 % to 90% in a molar ratio with respect to the silver compound.

Examples of the thin film adjuvant include an organic acid, an organic acid derivative, or a mixture of at least one or more of them. Specific examples include an organic acid such as acetic acid, butyric acid, valeric acid, pivalic acid, hexanoic acid, octanoic acid, 2-ethyl-hexanoic acid, neodecanoic acid, lauric acid, stearic acid, and naphthalic acid. Examples of the organic acid derivatives include ammonium salts of organic acids such as ammonium acetate, ammonium citrate, ammonium laurate, ammonium lactate, ammonium maleate, ammonium oxalate, and ammonium molibdate; and metal salts of organic acids, which include a metal such as gold, copper, zinc, nickel, cobalt, palladium, platinum, titanium, vanadium, manganese, iron, chrome, zirconium, niobium, molybdenum, tungsten, rubidium, cadmium, tantalum, rhenium, osmium, iridium, aluminum, gallium, germanium, indium, tin, antimony, lead, bismuth, samarium, europium, actinium, or thorium, for example, manganese oxalate, gold acetate, palladium oxalate, silver 2-ethylhexanoate, silver octanoate, silver neodecanoate, cobalt stearate, nickel naphthalate, and cobalt naphthalate. The use amount of the thin film adjuvant is preferably, but is not limited to, 0.1% to 25% in molar ratio with respect to the silver complex compound.

Examples of the reducing agent include Lewis acid and weak bronsted acid. Specific examples of the reducing agent include hydrazine, hydrazine monohydrate, acethydrazide, sodium borohydride or potassium borohydride, an amine compound such as dimethylamine borane or butylamine borane, a metal salt such as ferrous chloride or iron lactate; hydrogen; hydrogen iodide; carbon monoxide, an aldehyde compound such as formaldehyde, acetaldehyde, or glyoxal, a formate compound such as methyl formate, butyl formate, or triethyl-o-formate, a reducing organic compound such as glucose, ascorbic acid, or hydroquinone, and a mixture of at least one or more of these compounds.

Specific examples of the pyrolysis promoter include hydroxyalkylamines such as ethanolamine, methyldiethanolamine, triethanolamine, propanolamine, butanolamine, hexanolamine, and dimethylethanolamine; an amine compound such as piperidine, N-methylpiperidine, piperazine, N,N'-dimethylpiperazine, 1-amino-4-methylpiperazine, pyrrolidine, N-methylpyrrolidine, or morpholine; alkyl oximes such as acetone oxime, dimethylglyoxime, 2-butanone oxime, and 2,3-butadione monooxime; glycols such as ethylene glycol, diethylene glycol, and triethylene glycol; alkoxyalkylamines such as methoxyethylamine, ethoxyethylamine, and methoxypropylamine; alkoxyalkanols such as methoxyethanol, methoxypropanol, and ethoxyethanol; ketones such as acetone, methyl ethyl ketone, and methyl isobutyl ketone; ketone alcohols such as acetol and diacetone alcohol; a polyhydric phenol compound; a phenol resin; an alkyd resin; and a resin prepared by oxidative polymerization of monomers such as pyrrole or ethylenedioxythiophene (EDOT).

Meanwhile, a solvent may be necessary in some cases for viscosity control of the silver coating liquid composition or for smooth formation of a thin film. Examples of the solvent which may be used at that time include water; alcohols such as methanol, ethanol, isopropanol, 1-methoxypropanol, butanol, ethylhexyl alcohol, and terpineol, glycols such as ethylene glycol and glycerin; acetates such as ethyl acetate, butyl acetate, methoxypropyl acetate, carbitol acetate, and ethylcarbitol acetate; ethers such as methyl cellosolve, butyl cellosolve, diethyl ether, tetrahydrofuran, and dioxane; ketones such as methyl ethyl ketone, acetone, dimethylformamide, and 1-methyl-2-pyrrolidone; hydrocarbon solvents such as hexane, heptane, dodecane, paraffin oil, and mineral spirit; aromatic hydrocarbon solvents such as benzene, toluene and xylene; halogenated solvents such as chloroform, methylene chloride, and carbon tetrachloride; acetonitrile; dimethyl sulfoxide; and a mixed solvent thereof.

### (2-8-2. Nitrogen-containing cyclic compound in layer adjacent to silver reflective layer)

For forming the silver reflective layer, if the silver reflective layer is formed by heating and calcining a coating film containing a silver complex compound having a vaporizable · releasable ligand, it is preferable to contain a nitrogen-containing cyclic compound in a layer which is adjacent to the silver reflective layer. As for the nitrogen-containing cyclic compound, broadly classified, a corrosion inhibitor having a silver-adsorbing group and an antioxidant are preferably used.

With regard to the corrosion inhibitor having a silver-adsorbing group, a desired corrosion inhibiting effect can be obtained by using a nitrogen-containing cyclic compound. It is preferably selected from at least one of a compound having a pyrrol ring, a compound having a triazole ring, a compound having a pyrazole ring, a compound having an imidazole ring, and a compound having an indazole ring, or a mixture thereof, for example. With regard to a compound having a pyrrol ring, a compound having a triazole ring, a compound having a pyrazole ring, a compound having an imidazole ring, and a compound having an indazole ring, those described in (2-7-1. Corrosion inhibitor) can be preferably used.

As for the antioxidant, a phenol type antioxidant, a thiol type antioxidant, and a phosphate type antioxidant are preferably used. As for the phenol type antioxidant, the thiol type antioxidant, and the phosphate type antioxidant, those described in (2-2-3(b). Antioxidant) can be preferably used. Meanwhile, the antioxidant and the light stabilizer can be used in combination. As for the light stabilizer, a hindered amine type light stabilizer or a nickel type ultraviolet stabilizer is preferably used. As for the hindered amine type light stabilizer and the nickel type ultraviolet stabilizer, those described in (2-2-3(b). Antioxidant) can be preferably used.

### (2-9. Anchor layer)

An anchor layer is a layer having a resin, which is desirably formed for close adhesion between the film-like support and the silver reflective layer. Thus, the anchor layer is required to have adhesiveness for closely attaching the resin-film-like support to the silver reflective layer, heat resistance for withstanding heat even during the formation of the silver reflective layer by a vacuum deposition method or the like, and smoothness for unleashing the intrinsic highly-reflective performance of the silver reflective layer.

The resin used in the anchor layer is not particularly limited as long as it satisfies the requirements for adhesiveness, heat resistance, and smoothness. The resin used in the anchor layer may be a single resin such as a polyester resin, an acrylic resin, a melamine resin, an epoxy resin, a polyamide resin, a vinyl chloride resin, or a vinyl chloride-vinyl acetate copolymer resin, or a mixture resin of them. A mixture resin of a polyester resin and a melamine resin or a mixture resin of a polyester resin and an acrylic resin is preferred in view of weather resistance, and more preferably, such a mixture is mixed with a curing agent such as an isocyanate to form a thermosetting resin.

The anchor layer preferably has a thickness of 0.01 to 3 µm and more preferably 0.1 to 2 µm. By satisfying the above range, the anchor layer can cover the irregularities of the surface of the resin-film-like support while maintaining the adhesiveness so that smoothness can be improved and sufficient curing of the anchor layer can be achieved. As a result, it becomes possible to increase the reflectance of the film mirror.

Further, it is preferable to contain, in the anchor layer, the corrosion inhibitor described in (2-7-1. Corrosion inhibitor) described above.

Meanwhile, as for the method for forming the anchor layer, a conventionally known coating method such as a gravure coating method, a reverse coating method, or a die coating method can be used.

### (2-10. Resin-film-like support)

A variety of conventionally known resin films may be used as the resin-film-like support. Examples thereof include a cellulose ester film, a polyester film, a polycarbonate film, a polyarylate film, a polysulfone (including polyethersulfone) film, a polyester film such as a polyethylene terephthalate or polyethylene naphthalate film, a polyethylene film, a polypropylene film, cellophane, a cellulose diacetate film, a cellulose triacetate film, a cellulose acetate propionate film, a cellulose acetate butyrate film, a polyvinylidene chloride film, a polyvinyl alcohol film, an ethylene vinyl alcohol film, a syndiotactic polystyrene film, a polycarbonate film, a norbomene resin film, a polymethylpentene film, a polyether ketone film, a polyether ketone imide film, a polyamide film, a fluororesin film, a nylon film, a polymethyl methacrylate film, and an acrylic film. Among them, a polycarbonate film, a polyester film such as a polyethylene terephthalate film, a norbomene resin film, a cellulose ester film, and an acrylic film are preferred. Particularly, a polyester film such as a polyethylene terephthalate film and an acrylic film are preferably used, and it may be a film produced by film formation based on melt casting or solution casting.

Since the resin-film-like support is preferably far from the solar light incident side relative to the silver reflective layer, it is difficult for ultraviolet rays to reach the resin-film-like support. In particular, when there is a protective layer present on the solar light incident side relative to the resin-film-like support or the hard coat layer or acrylic layer added with an ultraviolet-ray-absorbing agent is arranged on the solar light incident side relative to the resin-film-like support, it is even more difficult for ultraviolet rays to reach the resin-film-like support. Accordingly, even a resin easily degradable by ultraviolet rays can be used for the resin-film-like support. From this point of view, it is possible to use a polyester film such as a polyethylene terephthalate film as the resin-film-like support.

The resin-film-like support has an appropriate thickness depending on the type of the resin, the intended purpose or the like. For example, the thickness is generally in a range of 10 to 250 µm, and preferably 20 to 200 µm.

### (2-11. Adhesive layer)

The adhesive layer of the film mirror is a layer for binding the film mirror to a substrate described below via the adhesive layer. Meanwhile, the film mirror may have a layer formed of a peeling sheet on an opposite side to the solar light incident side of the adhesive layer. When the film mirror has a layer formed of a peeling sheet, it is possible that, after peeling the peeling sheet from the adhesive layer, the film mirror is laminated onto a substrate via the adhesive layer.

The adhesive layer is not particularly limited, and any one of a dry laminating agent, a wet laminating agent, a sticky adhesive, a heat sealing agent, and a hot melt agent is used. Examples of the sticky adhesive which can be used include a polyester resin, a urethane resin, a polyvinyl acetate resin, an acrylic resin, and nitrile rubber. The method for laminating the adhesive layer and a substrate is not particularly limited, and from the viewpoint of economy and productivity, for example, a continuous roll lamination method is preferably performed. Further, from the viewpoint of adhesive effect, drying speed or the like, the adhesive layer preferably has a thickness in a range of 1 to 100 µm in general. When the thickness is more than 1 µm, a sufficient adhesive effect is obtained, and thus desirable. On the other hand, when the thickness is less than 100 µm, slow drying speed due to excessively thick adhesive layer does not occur, and therefore efficient. Further, the intrinsic adhesive force is obtained and problems such as remaining solvent or the like do not occur.

### (2-12. Peeling sheet (peeling layer))

The film mirror may have a layer formed of a peeling sheet on an opposite side to the solar light incident side of the adhesive layer. For example, at the time of shipping of the film mirror, it is shipped in a state in which the peeling sheet is attached to the adhesive layer, and after exposing the adhesive layer by peeling the peeling sheet, it can be laminated on a substrate.

As for the peeling sheet, it is sufficient to have those capable of giving a silver reflective layer-protecting property. As an example, a plastic film such as an acrylic film, a polycarbonate film, a polyarylate film, a polyethylene naphthalate film, a polyethylene terephthalate film, or a fluro-film, a resin film kneaded with titanium oxide, silica, aluminum powder, or copper powder, or a resin film coated with a resin kneaded with them or obtained by surface processing based on vapor deposition with a metal such as aluminum is used.

The thickness of the peeling sheet is not particularly limited, but preferably in a range of 12 to 250 µm in general. Further, when the surface roughness is given to the film mirror for solar light reflection or the silver reflective layer by the peeling sheet, the surface roughness Ra of the peeling layer is preferably 0.01 µm or more and 0.1 µm or less. Due to the surface roughness of the peeling layer, the surface of the film mirror for solar light reflection or the surface of the silver reflective layer is also roughened, and thus even in a case in which a roll-to-roll method for continuous film forming is used for production step of the film mirror, sticking like blocking can be prevented.

### (2-13. Substrate)

The film mirror for solar light reflection is preferably used after lamination on a substrate having a self-supporting property "Self-supporting" in the "substrate having a self-supporting property" means that, when cut to a size to be used as a substrate of the film mirror for solar light reflection, it has strength allowing support of the substrate by supporting an edge of the opposing end. As the substrate of the film mirror for solar light reflection has a self-supporting property, not only handlability is excellent for installing the film mirror for solar light reflection but also the holding member for holding the film mirror for solar light reflection can have a simple configuration, and thus the reflection device can have a light weight and power consumption during following sunlight can be suppressed. The substrate can be either a monolayer or have a shape of laminate with plural layers. The substrate may have a single structure or a multi-split type.

With regard to the shape of the substrate, those having a concave shape or capable of having a concave shape are preferable. It is possible to use a substrate capable of transforming from a planar shape to a concave shape or a substrate fixed to have a concave shape. The substrate capable of transforming to a concave shape allows free adjustment of the curvature of laminated film mirror by adjusting the curvature of the substrate. As such, high regular reflectance can be obtained by adjusting the reflection efficiency, and therefore desirable. Since the substrate fixed to have a concave shape needs not adjust the curvature, it is preferable in terms of cost related to adjustment.

Examples of a material of the substrate include a metal plate such as a steel plate, a copper plate, an aluminum plate, an aluminum-plated steel plate, an aluminum alloy-plated steel plate, a copper-plated steel plate, a tin-plated steel plate, a chrome-plated steel plate, or a stainless steel plate, a wooden plate such as a veneer plate (preferably, those with water-proof treatment), a fiber reinforced plastic (FRP) plate, and a resin plate. Among the aforementioned materials, use of a metal sheet is preferable from the viewpoint of having high thermal conductivity. It is more preferably a plated steel plate, a stainless steel plate, or an aluminum plate having not only high thermal conductivity but also good corrosion resistance. Most preferably, a steel plate in which a resin and a metal plate are combined is used.

Meanwhile, when most of the substrate consists of a resin, it preferably consists of a resin material having a hollow structure. This is because when a layer consisting of a resin material without a hollow structure is prepared, the thickness required for having strength enough to have self-supporting property is increased, and as a result, the mass of the substrate is increased. However, when a layer consisting of a resin material having a hollow structure is prepared, a light weight can be obtained while still maintaining the self-supporting property. Further, a function as a heat-insulating material is also obtained from the hollow structure, transfer of the temperature change occurring on an opposite surface to the solar light incident side to the film mirror is inhibited so that dew condensation can be prevented and deterioration caused by heat can be suppressed. When a layer with a resin material consisting of a hollow structure is prepared, it is preferable to form a resin film having a flat surface as a surface layer and use a resin material having a hollow structure as an intermediate layer, from the viewpoint of enhancing the reflection efficiency of the film mirror.

A variety of conventionally known resin films may be used as a material of the resin film as a surface layer. Examples thereof include a cellulose ester film, a polyester film, a polycarbonate film, a polyarylate film, a polysulfone (including polyethersulfone) film, a polyester films such as a polyethylene terephthalate or polyethylene naphthalate film, a polyethylene film, a polypropylene film, cellophane, a cellulose diacetate film, a cellulose triacetate film, a cellulose acetate propionate film, a cellulose acetate butyrate film, a polyvinylidene chloride film, a polyvinyl alcohol film, an ethylene vinyl alcohol film, a syndiotactic polystyrene film, a polycarbonate film, a norbomene resin film, a polymethylpentene film, a polyether ketone film, a polyether ketone imide film, a polyamide film, a fluororesin film, a nylon film, a polymethyl methacrylate film, and an acrylic film. Among them, a polycarbonate film, a polyester film such as a polyethylene terephthalate film, a norbomene resin film, a cellulose ester film, and an acrylic film are preferred. Particularly, a polyester film such as a polyethylene terephthalate film and an acrylic film are preferably used, and it may be a film produced by film formation based on melt casting or solution casting. The resin film has an appropriate thickness depending on the type of the resin, the intended purpose or the like. For example, the thickness is usually in a range of 10 to 250 µm, and preferably 20 to 200 µm.

As for the resin material to form a hollow structure, a foamed structure consisting of a foamed resin, a steric structure (for example, honeycomb structure) having a wall surface consisting of a resin material, or a resin material added with hollow microparticles can be used. The foamed structure of a foamed resin indicates those formed in foamed shape or porous shape obtained by fine dispersion of gas in a resin material. As for the material, a conventionally known foaming resin material can be used. However, a polyolefin resin, polyurethane, polyethylene, polystyrene or the like is preferably used. The honeycomb structure indicates a general steric structure in which the space consists of multiple small spaces that are surrounded by side walls. When a steric structure having a side wall consisting of a resin material is used as a hollow structure, a polyolefin as a homopolymer or a copolymer of olefins such as ethylene, propylene, butene, isoprene pentene, or methyl pentene (for example, polypropylene and high density polyethylene), polyamide, polystyrene, polyvinyl chloride, an acyl derivative such as polyacrylonitrile or an ethylene-ethyl acrylate copolymer, polycarbonate, a vinyl acetate copolymer such as an ethylene-vinyl acetate copolymer, an ionomer, a terpolymer such as ethylene-propylene-dienes, an ABS resin, and a thermoplastic resin such as polyolefin oxide, or polyacetal are preferably used as a resin material for forming the side wall. Meanwhile, it may be used either singly or as a mixture of two or more kinds. Among the thermoplastic resins, an olefin resin or a resin containing an olefin resin as a main component, and a polypropylene resin or a resin containing a polypropylene resin as a main component are preferred in that they have an excellent balance between mechanical strength and a molding property. The resin material may be added with additives. Examples of the additives include inorganic filler such as silica, mica, talc, calcium carbonate, glass fiber, or carbon fiber, a plasticizer, a stabilizer, a coloring agent, an anti-static agent, a flame retardant, and a foaming agent.

### (3. Reflective device for solar power generation)

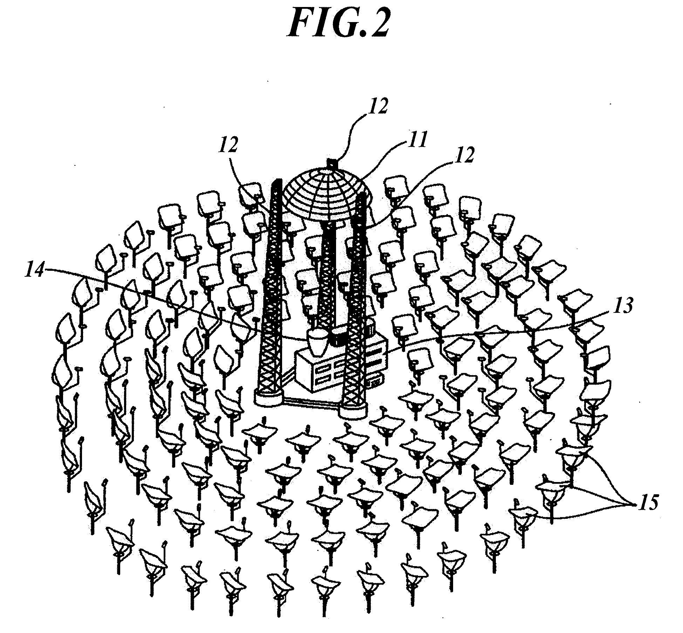

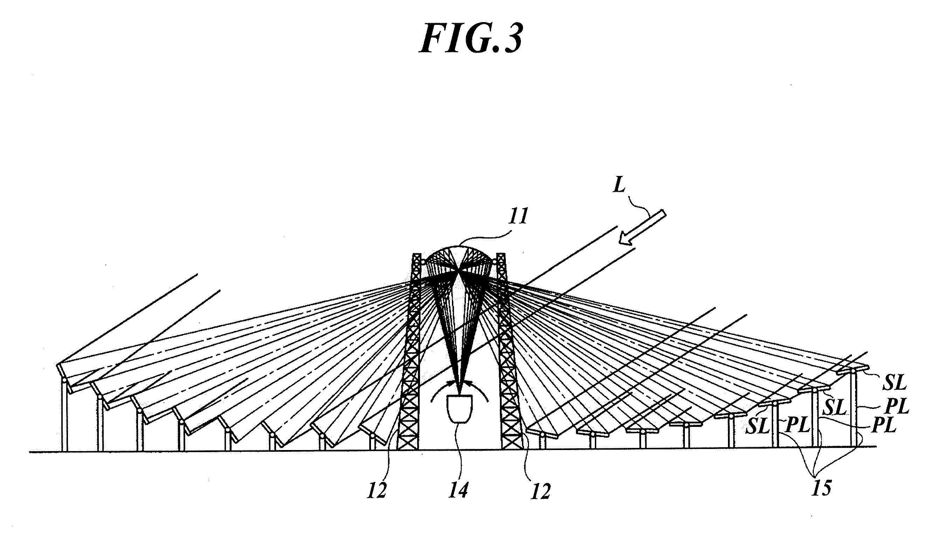

The reflective device for solar power generation has a film mirror for solar light reflection and a holding member for holding the film mirror for solar light reflection. When the reflective device for solar power generation is used, one embodiment includes a so-called trough type mode in which a cylindrical member filled with fluid therein is installed as a heat collecting section near the film mirror, the internal fluid is heated by reflecting solar light onto the cylindrical member, and power generation is achieved according to conversion of the heat energy. Further, as another embodiment, a so-called tower type mode illustrated in Fig. 2 and Fig. 3 can be mentioned. The tower type mode has at least one heat collecting section 14 and at least one light collector mirror 11 for reflecting solar light L and irradiating it to the heat collecting section 14, and power generation is achieved by actuating a turbine according to heating a liquid using the heat collected by the heat collecting section 14. Meanwhile, it is preferable that a plurality of the reflective devices for solar power generation 15 are installed near the heat collecting section 14. Further, each reflective device for solar power generation 15 is arranged in a concentric circle shape or a concentric fan shape as illustrated in Fig. 2. According to the tower type mode illustrated in Figs. 2 and 3, solar light L is reflected by the film mirror for solar light reflection (that is, reflective device for solar power generation 15), which is installed near a holding tower 12, onto the light collector mirror 11, reflected again by the light collector mirror 11, delivered to the heat collecting section 14, and then delivered to a heat exchange facility 13. In the present invention, any one of the trough type and the tower type can be used. It is needless to say that it can be used for other various solar power generation operations.

### (3-1. Holding member)

The reflective device for solar power generation has a holding member for holding the film mirror for solar light reflection. The holding member preferably holds the film mirror in a sun-following state. The shape of the holding member is not particularly limited. However, it preferably has a shape to hold multiple points by a pole-like holding member such that the film mirror for solar light reflection can maintain a desired shape. The holding member preferably has a configuration for maintaining the film mirror for solar light reflection while it is in a sun-following state. However, when following the sun, the operation can be made manually or it is possible to have a configuration for automatic sun-following by installing a separate driving device.

### EXAMPLE 1

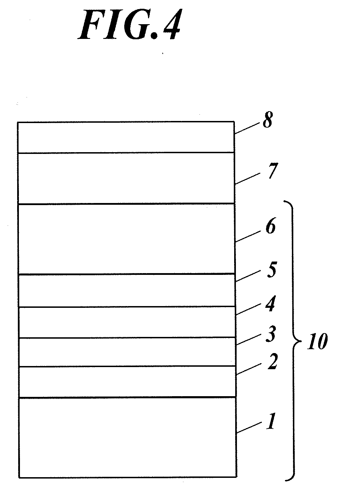

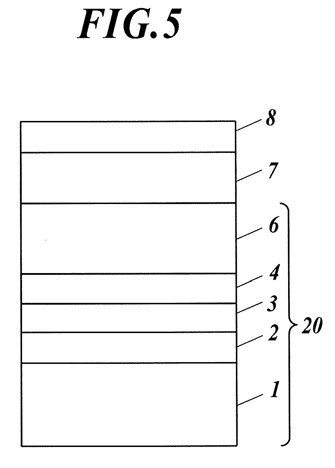

Hereinafter, the present invention is specifically described with reference to Examples and Comparative Examples. A film mirror of this Example corresponds to the embodiments illustrated in Fig. 4 and Fig. 5. However, the present invention is not limited thereto. In the following Examples and Comparative Examples, the term "part(s)" or "%" are used, and they represent "part(s) by mass" or "% by mass", unless specifically described otherwise.

### (Preparation of reflection film 10)

A biaxially-stretched polyester film (polyethylene terephthalate film, 25 µm in thickness) was used as the resin-film-like support 1. A polyester resin (Polyester SP-181, manufactured by The Nippon Synthetic Chemical Industry, Co., Ltd.) and a TDI (tolylene diisocyanate) type isocyanate (2,4-tolylene diisocyanate) were mixed at a resin solid matter ratio of 10 : 2, added with methyl ethyl ketone as a solvent, further mixed with glycol dimercaptoacetate (manufactured by Wako Pure Chemical Industries, Ltd.) in an amount to have 10% by mass as a corrosion inhibitor, and then coated on one side of the polyethylene terephthalate film by a gravure coating method to form the anchor layer 2 with a thickness of 60 nm.

Subsequently, the silver reflective layer 3 was formed into a film with a thickness of 80 nm on the anchor layer 2 by a vacuum deposition method.

Next, the resin coat layer 4 with a thickness of 60 nm was formed on the silver reflective layer 3 in the same manner as above except that TINUVIN 234 (manufactured by Ciba Japan K. K.) was used instead of glycol dimercaptoacetate of the anchor layer 2.

On the resin coat layer 4, the adhesive layer 5 was formed by coating the adhesive TSB-730 (manufactured by DIC Corporation) with a gravure coating method so as to have a thickness of 5 µm. Then, an acrylic resin Sumitomo Chemical S001 (75 µm) containing an ultraviolet-ray-absorbing agent was laminated thereon by a roll method to form the acrylic layer 6, thus producing the reflection film 10.

### (Preparation of reflection film 20)

A biaxially-stretched polyester film (polyethylene terephthalate film, 25 µm in thickness) was used as the resin-film-like support 1. A polyester resin (Polyester SP-181, manufactured by The Nippon Synthetic Chemical Industry, Co., Ltd.) and a TDI (tolylene diisocyanate) type isocyanate (2,4-tolylene diisocyanate) were mixed at a resin solid matter ratio of 10 : 2, added with methyl ethyl ketone as a solvent, further mixed with glycol dimercaptoacetate (manufactured by Wako Pure Chemical Industries, Ltd.) in an amount to have 10% by mass as a corrosion inhibitor, and then coated on one side of the polyester film by a gravure coating method to form the anchor layer 2 with a thickness of 60 nm.

Subsequently, the silver reflective layer 3 was formed into a film with a thickness of 80 nm on the anchor layer 2 by a vacuum deposition method.

Next, the resin coat layer 4 with a thickness of 60 nm was formed on the silver reflective layer 3 in the same manner as above except that TINUVIN 234 (manufactured by Ciba Japan K. K.) was used instead of glycol dimercaptoacetate of the anchor layer 2.

Further, on the resin coat layer 4, acrylic BR-95 (manufactured by Mitsubishi Rayon Co., Ltd.) dissolved in methyl ethyl ketone and prepared to have 15 parts by weight was coated using an applicator so as to have a film thickness of 75 µm. Accordingly, the acrylic layer 6 was formed and the reflection film 20 was produced.

By having the reflection film 10 or 20 prepared above as a base of the film mirror for solar light reflection of Examples and Comparative Examples and laminating the protective layer 7 and the hard coat layer 8 on the reflection film 10, as described below, Examples 7 to 13 were prepared, and Comparative Examples 18 to 20 were prepared by modifying the composition of the protective layer 7 to those different from the composition of the present invention. Further, as described below, Examples 1 to 6 were prepared by laminating the protective layer 7 and the hard coat layer 8 on the reflection film 20, and Comparative Examples 14 to 17 were prepared by modifying the composition of the protective layer 7 to those different from the composition of the present invention.

### (Production of film mirror for solar light reflection of Example No.1)

To a flask equipped with a stirrer, a dropping inlet, a thermometer, a condenser and an inlet for introducing nitrogen gas, 10 parts of a monomer 1 having a metacryloyl group as a polymerizable group in a chemical structure of Tinuvin 234 (manufactured by Ciba Japan K. K.) as a benzotriazole-type ultraviolet-ray-absorbing group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 1 was obtained.

By using the obtained ultraviolet-ray-absorbing group-containing polymer No. 1 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 1 was produced.

### (Production of film mirror for solar light reflection of Example No. 2)

To a flask equipped with a stirrer, a dropping inlet, a thermometer, a condenser, and an inlet for introducing nitrogen gas, 10 parts of a monomer 2 having a metacryloyl group as a polymerizable group in a chemical structure of Tinuvin 405 (manufactured by Ciba Japan K. K.) as a triazine-type ultraviolet-ray-absorbing group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 2 was obtained.

By using the obtained ultraviolet-ray-absorbing group-containing polymer No. 2 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 2 was produced.

### (Production of film mirror for solar light reflection of Example No. 3)

To a flask equipped with a stirrer, a dropping inlet, a thermometer, a condenser, and an inlet for introducing nitrogen gas, 10 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of the monomer 2 having a metacryloyl group as a polymerizable group in a chemical structure of Tinuvin 405 (manufactured by Ciba Japan K. K.) as a triazine-type ultraviolet-ray-absorbing group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 3 was obtained.

By using the obtained ultraviolet-ray-absorbing group-containing polymer No. 3 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 3 was produced.

### (Production of film mirror for solar light reflection of Example No. 4)

To a flask equipped with a stirrer, a dropping inlet, a thermometer, a condenser, and an inlet for introducing nitrogen gas, 10 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of a monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 4 was obtained.

By using the obtained ultraviolet-ray-absorbing group-containing polymer No. 4 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 4 was produced.

### (Production of film mirror for solar light reflection of Example No. 5)

To a flask equipped with a stirrer, a dropping inlet, a thermometer, a condenser, and an inlet for introducing nitrogen gas, 10 parts of the monomer 2 having a metacryloyl group as a polymerizable group in a chemical structure of Tinuvin 405 (manufactured by Ciba Japan K. K.) as a triazine-type ultraviolet-ray-absorbing group, 10 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 5 was obtained.

By using the obtained ultraviolet-ray-absorbing group-containing polymer No. 5 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 5 was produced.

### (Production of film mirror for solar light reflection of Example No. 6)

To a flask equipped with a stirrer, a dropping inlet, a thermometer, a condenser, and an inlet for introducing nitrogen gas, 5 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of the monomer 2 having a metacryloyl group as a polymerizable group in a chemical structure of Tinuvin 405 (manufactured by Ciba Japan K. K.) as a triazine-type ultraviolet-ray-absorbing group, 5 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 6 was obtained.

By using the obtained ultraviolet-ray-absorbing group-containing polymer No. 6 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 6 was produced.

### (Production of film mirror for solar light reflection of Example No. 7)

To a flask equipped with a stirrer, a dropping inlet, a thermometer, a condenser, and an inlet for introducing nitrogen gas, 10 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 7 was obtained.

By using the obtained ultraviolet-ray-absorbing group-containing polymer No. 7 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 7 was produced.

### (Production of film mirror for solar light reflection of Example No. 8)

To a flask equipped with a stirrer, a dropping inlet, a thermometer, a condenser, and an inlet for introducing nitrogen gas, 10 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 8 was obtained.

By using the obtained ultraviolet-ray-absorbing group-containing polymer No. 8 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 8 was produced.

### (Production of film mirror for solar light reflection of Example No. 9)

To a flask equipped with a stirrer, a dropping inlet, a thermometer, a condenser, and an inlet for introducing nitrogen gas, 5 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of the monomer 2 having a metacryloyl group as a polymerizable group in a chemical structure of Tinuvin 405 (manufactured by Ciba Japan K. K.) as a triazine-type ultraviolet-ray-absorbing group, 5 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 9 was obtained.

By using the obtained ultraviolet-ray-absorbing group-containing polymer No. 9 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 9 was produced.

### (Production of film mirror for solar light reflection of Example No. 10)

To a flask equipped with a stirrer, a dropping inlet, a thermometer, a condenser, and an inlet for introducing nitrogen gas, 15 parts of the monomer 2 having a metacryloyl group as a polymerizable group in a chemical structure of Tinuvin 1577 (manufactured by Ciba Japan K. K.) as a triazine-type ultraviolet-ray-absorbing group, 5 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 10 was obtained.

By using the obtained ultraviolet-ray-absorbing group-containing polymer No. 10 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 10 was produced.

### (Production of film mirror for solar light reflection of Example No. 11)

To a flask equipped with a stirrer, a dropping inlet, a thermometer, a condenser, and an inlet for introducing nitrogen gas, 5 parts of the monomer 1 having a metacryloyl group as a polymerizable group in a chemical structure of Tinuvin 213 (manufactured by Ciba Japan K. K.) as a benzotriazole-type ultraviolet-ray-absorbing group, 10 parts of the monomer 2 having a metacryloyl group as a polymerizable group in a chemical structure of Tinuvin 1577 (manufactured by Ciba Japan K. K.) as a triazine-type ultraviolet-ray-absorbing group, 5 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 11 was obtained.

By using the obtained ultraviolet-ray-absorbing group-containing polymer No. 11 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 11 was produced.

### (Production of film mirror for solar light reflection of Example No. 12)

To a flask equipped with a stirrer, a dropping inlet, a thermometer, a condenser, and an inlet for introducing nitrogen gas, 5 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of the monomer 2 having a metacryloyl group as a polymerizable group in a chemical structure of Tinuvin 405 (manufactured by Ciba Japan K. K.) as a triazine-type ultraviolet-ray-absorbing group, 5 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 12 was obtained.

By using the obtained ultraviolet-ray-absorbing group-containing polymer No. 12 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 12 was produced.

### (Production of film mirror for solar light reflection of Example No. 13)

To a flask equipped with a stirrer, a dropping inlet, a thermometer, a condenser, and an inlet for introducing nitrogen gas, 5 parts of the monomer 1 having a metacryloyl group as a polymerizable group in a chemical structure of Tinuvin 234 (manufactured by Ciba Japan K. K.) as a benzotriazole-type ultraviolet-ray-absorbing group, 10 parts of the monomer 2 having a metacryloyl group as a polymerizable group in a chemical structure of Tinuvin 477 (manufactured by Ciba Japan K. K.) as a triazine-type ultraviolet-ray-absorbing group, 5 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 13 was obtained.

By using the obtained ultraviolet-ray-absorbing group-containing polymer No. 13 and coating it on the reflection film 10 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Example No. 13 was produced.

### (Production of film mirror for solar light reflection of Comparative Example No. 14)

To a flask equipped with a stirrer, a dropping inlet, a thermometer, a condenser, and an inlet for introducing nitrogen gas, 10 parts of the monomer having a metacryloyl group as a polymerizable group in a chemical structure of CHIMASSORB 81 (manufactured by Ciba Japan K. K.) as a benzophenone-type ultraviolet ray-absorbing group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 14 was obtained.

By using the obtained ultraviolet-ray-absorbing group-containing polymer No. 14 and coating it on the reflection film 20 by using a wire bar followed by drying for 30 seconds at 80°C, a protective layer having a film thickness of 10 µm, in which the benzophenone-type ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 14 was produced.

### (Production of film mirror for solar light reflection of Comparative Example No. 15)

To a flask equipped with a stirrer, a dropping inlet, a thermometer, a condenser, and an inlet for introducing nitrogen gas, 10 parts of the monomer having a metacryloyl group as a polymerizable group in a chemical structure of CHIMASSORB 81 (manufactured by Ciba Japan K. K.) as a benzophenone-type ultraviolet-ray-absorbing group, 10 parts of the monomer 3 having a metacryloyl group as a polymerizable group in a chemical structure of LA 52 (manufactured by ADEKA Corporation) as a hindered amine type antioxidant group, 50 parts of methyl methacrylate (MMA) and 10 parts of n-butyl acrylate (BA) as other monomers, 10 parts of 2-hydroxyethyl methacrylate (HEMA) as a monomer containing a hydroxyl group, and 120 parts of ethyl acetate as a solvent were injected and, under stirring with introduction of nitrogen gas, they were heated to a reflux temperature. Meanwhile, to a dropping bath, a mixture of 10 parts of ethyl acetate and 1 part of 2,2'-azobis-(2-methylbutyronitrile) as a polymerization initiator was injected and added dropwise over two hours. The reflux reaction was continued even after completion of the dropwise addition. After six hours from starting the dropwise addition, it was cooled and diluted with ethyl acetate such that non-volatiles were 40%. Accordingly, a solution of the ultraviolet-ray-absorbing polymer No. 15 was obtained.

By using the obtained ultraviolet-ray-absorbing group-containing polymer No. 15 and coating it on the reflection film 20 by using a wire bar followed by drying for 30 seconds at 80°C, a protective layer having a film thickness of 10 µm, in which the ultraviolet-ray-absorbing group is contained in a resin, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 15 was produced.

### (Preparation of film mirror for solar light reflection of Comparative Example No. 16)

By dissolving 10 parts of Tinuvin 234 (manufactured by Ciba Japan K. K.) using 120 parts of ethyl acetate as a solvent and adding and stirring 50 parts of MMA, 10 parts of BA, and 10 parts of HEMA as an acrylic resin composition, an ultraviolet-ray-absorbing agent addition type resin composition No. 1 was produced.

By coating the obtained ultraviolet-ray-absorbing agent addition type resin composition No. 1 on the reflection film 20 by using a wire bar followed by drying for 30 seconds at 80°C, a protective layer having a film thickness of 10 µm, in which the ultraviolet-ray-absorbing agent is added, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 16 was produced.

### (Preparation of film mirror for solar light reflection of Comparative Example No. 17)

By dissolving 10 parts of Tinuvin 234 (manufactured by Ciba Japan K. K.) and 10 parts of LA 52 (manufactured by ADEKA Corporation) using 120 parts of ethyl acetate as a solvent and adding and stirring 50 parts of MMA, 10 parts of BA, and 10 parts of HEMA as an acrylic resin composition, an ultraviolet-ray-absorbing agent addition type resin composition No. 2 was produced.

By coating the obtained ultraviolet-ray-absorbing agent addition type resin composition No. 2 on the reflection film 20 by using a wire bar followed by drying for 30 seconds at 80°C, a protective layer having a film thickness of 10 µm, in which the ultraviolet-ray-absorbing agent is added, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 17 was produced.

### (Preparation of film mirror for solar light reflection of Comparative Example No. 18)

By dissolving 10 parts of Tinuvin 234 (manufactured by Ciba Japan K. K.) using 120 parts of ethyl acetate as a solvent and adding and stirring 50 parts of MMA, 10 parts of BA, and 10 parts of HEMA as an acrylic resin composition, an ultraviolet-ray-absorbing agent addition type resin composition No. 3 was produced.

By coating the obtained ultraviolet-ray-absorbing agent addition type resin composition No. 3 on the reflection film 10 by using a wire bar followed by drying for 30 seconds at 80°C, a protective layer having a film thickness of 10 µm, in which the ultraviolet-ray-absorbing agent is added, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 18 was produced.

### (Preparation of film mirror for solar light reflection of Comparative Example No. 19)

By dissolving 10 parts of Tinuvin 234 (manufactured by Ciba Japan K. K.) and 10 parts of LA 52 (manufactured by ADEKA Corporation) using 120 parts of ethyl acetate as a solvent and adding and stirring 50 parts of MMA, 10 parts of BA, and 10 parts of HEMA as an acrylic resin composition, an ultraviolet-ray-absorbing agent addition type resin composition No. 4 was produced.

By coating the obtained ultraviolet-ray-absorbing agent addition type resin composition No. 4 on the reflection film 10 by using a wire bar followed by drying for 30 seconds at 80°C, a protective layer having a film thickness of 10 µm, in which the ultraviolet-ray-absorbing agent is added, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 19 was produced.

### (Preparation of film mirror for solar light reflection of Comparative Example No. 20)

By dissolving 5 parts of Tinuvin 234 (manufactured by Ciba Japan K. K.), 10 parts of Tinuvin 405 (manufactured by Ciba Japan K. K.), and 5 parts of LA 52 (manufactured by ADEKA Corporation) using 120 parts of ethyl acetate as a solvent and adding and stirring 50 parts of MMA, 10 parts of BA, and 10 parts of HEMA as an acrylic resin composition, an ultraviolet-ray-absorbing agent addition type resin composition No. 5 was produced.

By coating the obtained ultraviolet-ray-absorbing agent addition type resin composition No. 5 on the reflection film 10 by using a wire bar followed by drying for 30 seconds at 80°C, a protective layer having a film thickness of 10 µm, in which the ultraviolet-ray-absorbing agent is added, was formed. After that, coating of the hard coating liquid Perma-New 6000 (manufactured by California Hardcoating Company) was performed by using a wire bar. After drying for 60 seconds at 80°C and performing a heating treatment for 48 hours at 70°C, the hard coat layer with a dry film thickness of 3 µm was formed. Accordingly, the film mirror of Comparative Example No. 20 was produced.

### (Evaluation of film mirror for solar light reflection)

The film mirror for solar light reflection (Examples 1 to 13 and Comparative Examples 14 to 20) prepared as described above was subjected to measurement and evaluation of regular reflectance, transmittance, and adhesiveness before and after the ultraviolet irradiation test. The obtained characteristics of each film mirror for solar light reflection are shown in Tables 1A to 1D.

### (Measurement of transmittance and regular reflectance)

By using the spectrophotometer "U-4100" manufactured by Shimadzu Corporation, transmittance of the sample was measured as average reflectance from 250 nm to 2500 nm. With regard to the regular reflectance, the regular reflectance was measured by using an exclusively reserved jig when an incident angle of incident light is 5° with respect to a normal line of a reflecting surface. With regard to the evaluation, measurement was also made as average reflectance from 250 nm to 2500 nm.

### (Cross-cut tape peeling test)

As a method for measuring adhesiveness of a film, with reference to JIS K 5600, 100 cuts were made by making cross-cut shape scratches on the sample using a cutter. After attaching a cellophane tape on the cuts, pulling was made in 45° direction, and by measuring the number of cuts having a coating film not peeled after the peeling, the adhesiveness was evaluated.

### (Ultraviolet irradiation test)

Each film mirror for solar light reflection produced above was irradiated with ultraviolet rays of 150 mW/ for 600 hours using an EYE SUPER UV TESTER (manufactured by IWASAKI ELECTRIC CO., LTD.) in an environment of 65°C. Thereafter, the resistance to ultraviolet rays was evaluated.

(Table 1A)

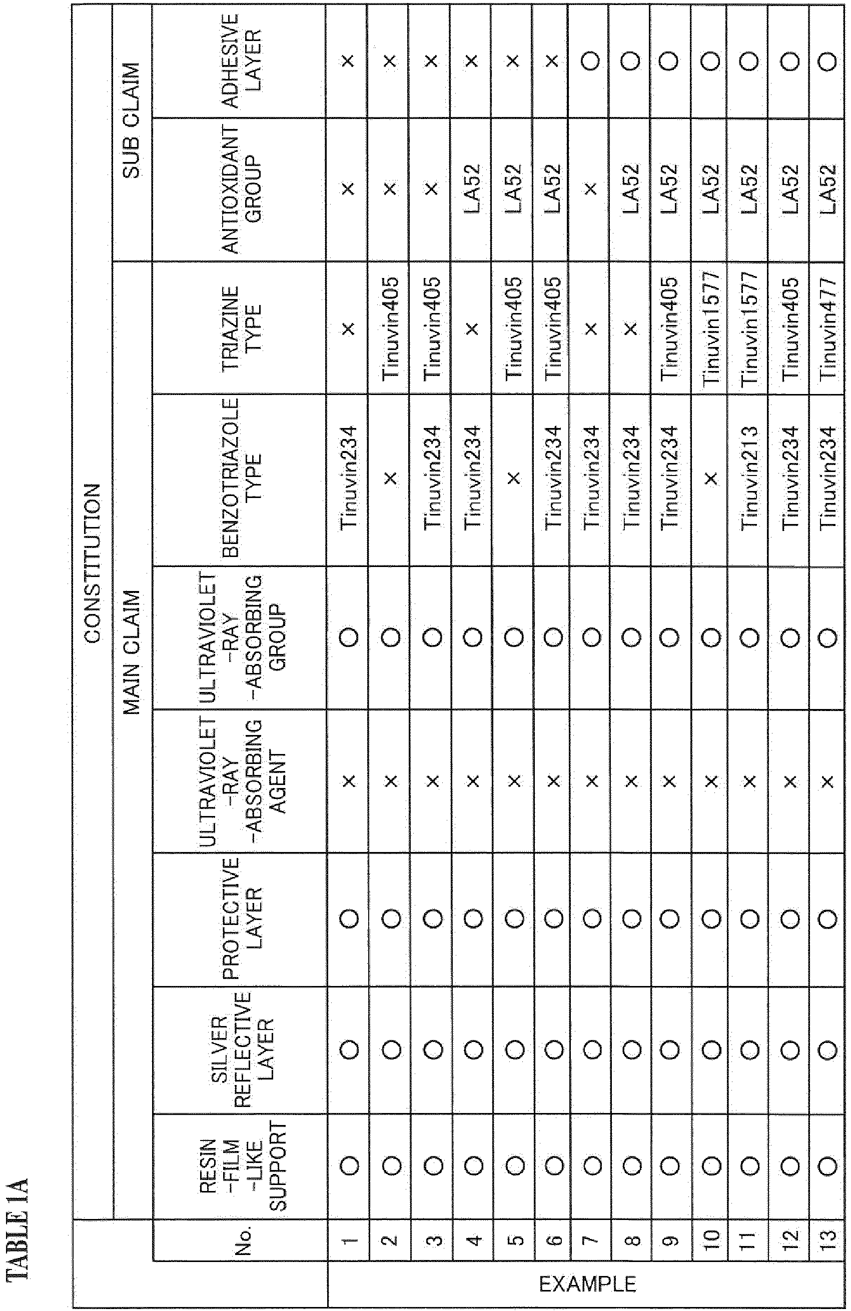

(Table 1B)

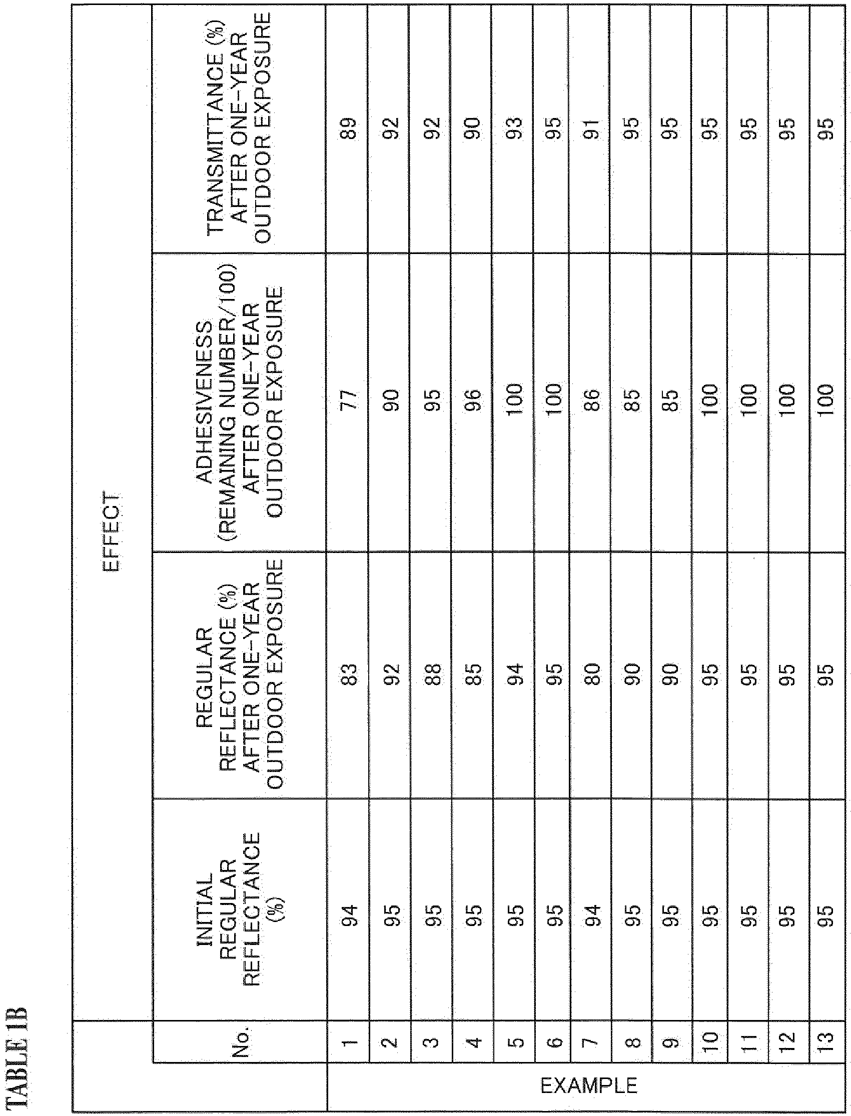

(Table 1C)

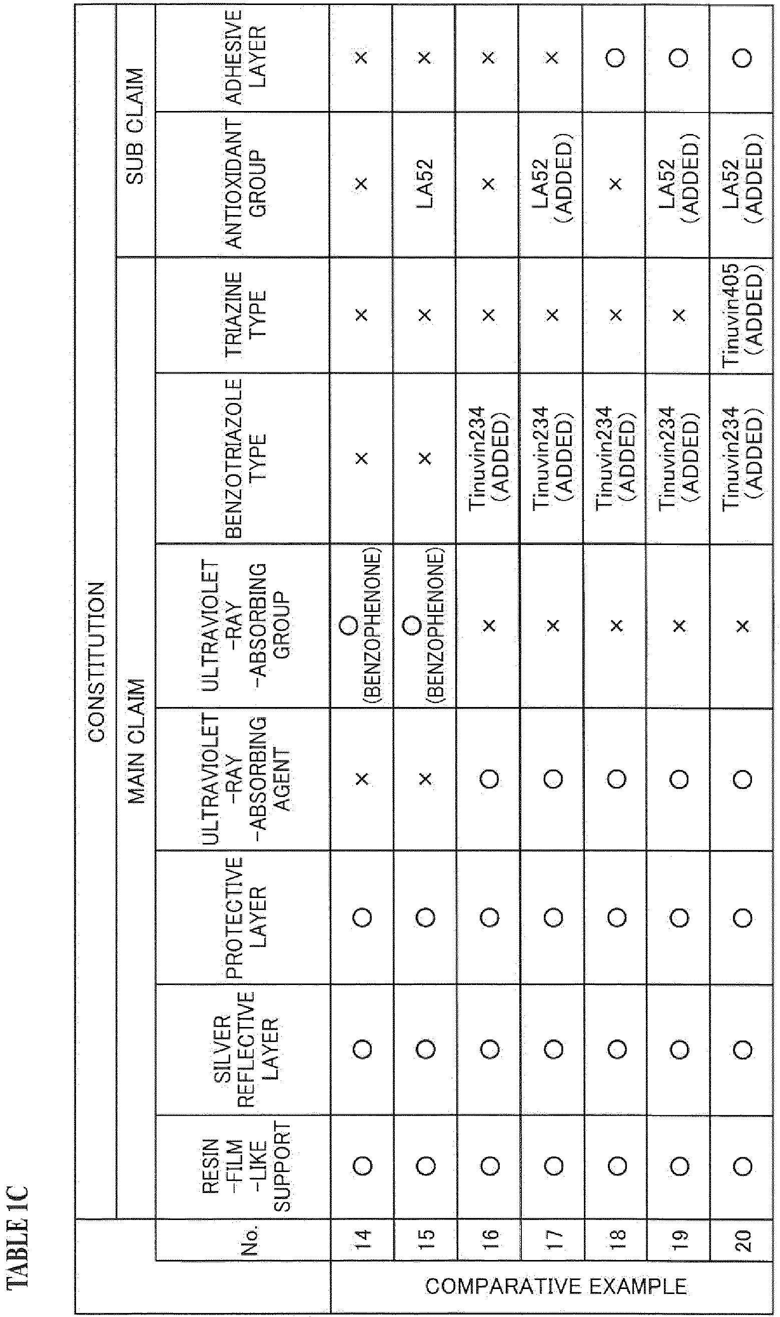

(Table 1D)

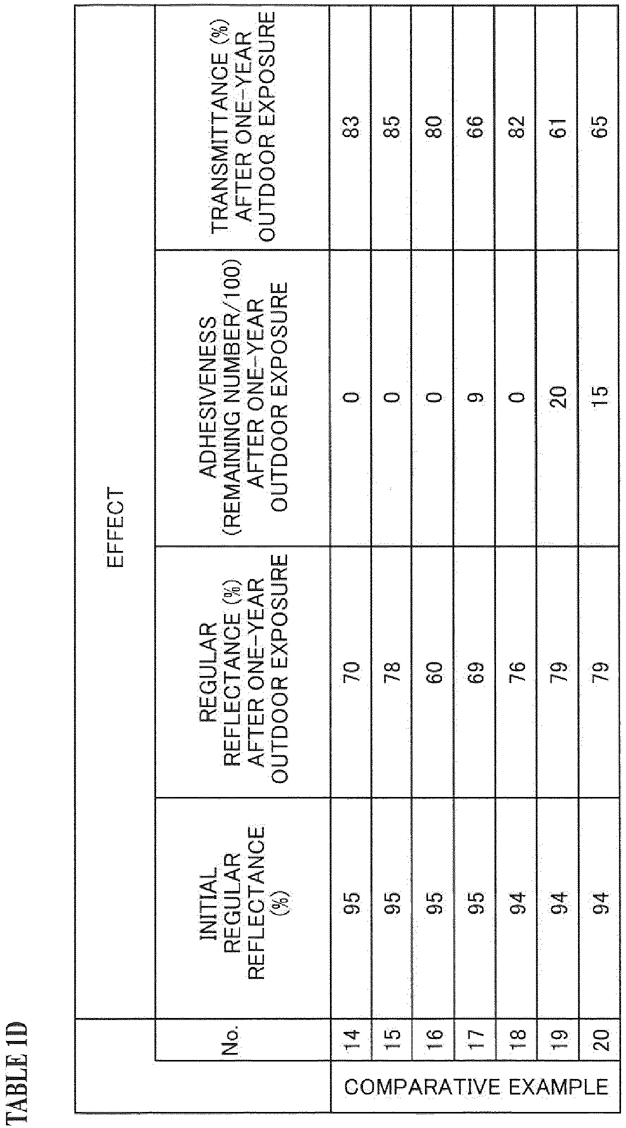

As it has been clearly shown in the evaluation results of Tables 1A, 1B, 1C, and 1D, the regular reflectance, adhesiveness, and transmittance are lowered due to degradation of an ultraviolet-ray-absorbing group or an antioxidant group or deterioration of an acrylic resin in Comparative Examples 14 to 20. However, in Examples 1 to 13 specifically exemplifying the film mirror according to the present invention, it is found that the regular reflectance, adhesiveness, and transmittance are maintained at higher level compared to Comparative Examples 14 to 20.

In Examples 1 to 13 and Comparative Examples 14 and 15 in which the resin has an ultraviolet-ray-absorbing group, bleed out did not occur. However, in Comparative Examples 16 to 20 in which an ultraviolet-ray-absorbing agent was added, bleed out was confirmed. It is believed that no occurrence of bleed out in Examples 1 to 13 and Comparative Examples 14 and 15 is based on the fact that the resin has a functional group as a group. On the other hand, it is believed that bleed out has occurred in Comparative Examples 16 to 20 since an ultraviolet-ray-absorbing agent is added. Consequently, it is believed that the regular reflectance, adhesiveness, and transmittance are also significantly lowered in Comparative Examples 16 to 20 after the ultraviolet irradiation test. Among them, since the decrease in adhesiveness caused by bleed out is particularly significant, it can be said that prevention of bleed out is very important in the film mirror for solar light reflection.

Further, in Examples 1 to 13 and Comparative Examples 16 to 20, aggregation, loss, or discoloration of silver did not occur. However, in Comparative Examples 14 and 15 in which a resin having an ultraviolet-ray-absorbing group of benzophenone type, which does not have sufficient resistance to ultraviolet rays, is used exhibited insufficient regular reflectance, adhesiveness, or transmittance. Further, in Comparative Examples 16 and 17 in which an acrylic layer is formed by coating using a solution added with an ultraviolet-ray-absorbing agent exhibited not only bleed out but also aggregation, loss, or discoloration of silver. It seems to be based on the reason that radicals can easily reach the silver reflective layer due to permeation of the coating liquid into the protective layer and the acrylic layer and also radicals can be easily generated due to low resistance to ultraviolet rays as caused by use of additives.

According to the present invention, it is possible to provide a film mirror for solar light reflection and a reflective device for solar power generation, which are capable of solving intrinsic problems of a film mirror for solar light reflection such as bleed out, compatibility, lowered reflectance accompanying bleed out, lowered reflectance caused by aggregation of silver, discoloration, film peeling, or a crack even in an environment with a very significant amount of ultraviolet irradiation like desert or double irradiation by some of ultraviolet rays contained in solar light due to having a silver reflective layer.

### INDUSTRIALAPPLICABILITY

By having the aforementioned constitution, the present invention can be used as a film mirror for solar light reflection and a reflective device for solar power generation.

### REFERENCE SIGNS LIST

- 1: Resin-film-like support
- 2: Anchor layer
- 3: Silver reflective layer
- 4: Resin coat layer
- 5: Adhesive layer
- 6: Acrylic layer
- 7: Protective layer
- 8: Hard coat layer
- 11: Light collector mirror
- 12: Holding tower
- 13: Thermal exchange facility
- 14: Heat collecting section
- 15: Reflective device for solar power generation

## Claims

1. A film mirror for solar light reflection comprising a resin-film-like support, a silver reflective layer, and a protective layer,
wherein the protective layer is provided on a solar light incident side relative to the resin-film-like support and the silver reflective layer, and
the protective layer comprises a resin and the resin comprises an ultraviolet-ray-absorbing group of (1) and/or (2);
(1) Benzotriazole-type ultraviolet-ray-absorbing group
(2) Triazine-type ultraviolet-ray absorbing group.

2. The film mirror for solar light reflection according to claim 1, wherein the benzotriazole-type ultraviolet-ray-absorbing group has a composition of a following formula (1a) or (1b) and the triazine-type ultraviolet-ray-absorbing group has a composition of a following formula (2), 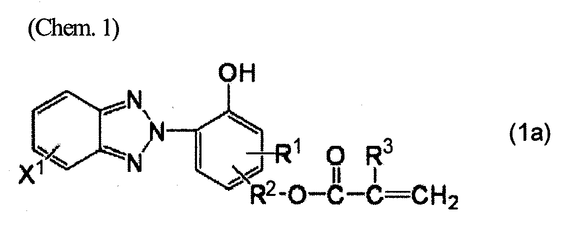 (in the formula, R¹ represents a hydrogen atom or an alkyl group having 1 to 8 carbon atoms, R² represents an alkylene group having 1 to 6 carbon atoms, R³ represents a hydrogen atom or a methyl group, X¹ represents a hydrogen atom, a halogen atom, an alkyl group having 1 to 8 carbon atoms, an alkoxy group having 1 to 6 carbon atoms, a cyano group, or a nitro group), 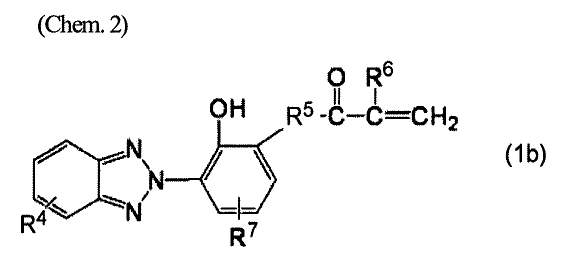 (in the formula, R⁴ represents a hydrogen atom, a halogen atom, an alkyl group having 1 to 8 carbon atoms, an alkoxy group having 1 to 4 carbon atoms, a cyano group, or a nitro group, R⁵ represents a group which has an element capable of forming a hydrogen bond, R⁶ represents a hydrogen atom or a methyl group, and R⁷ represents a hydrogen atom or an alkyl group having 1 to 12 carbon atoms), and 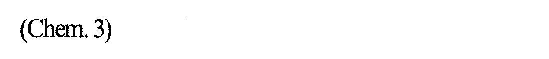 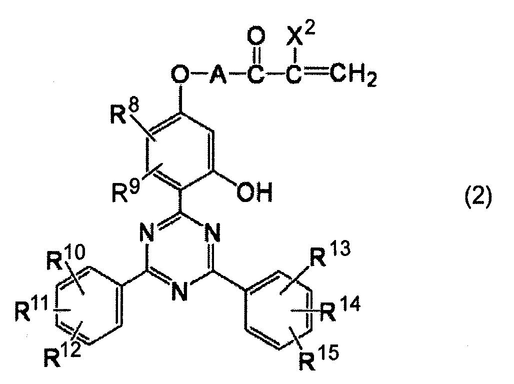 (in the formula, R⁸, R⁹, R¹⁰, R¹¹, R¹², R¹³, R¹⁴, and R¹⁵ each independently represent a hydrogen atom, an alkyl group having 1 to 10 carbon atoms, an alkenyl group having 2 to 10 carbon atoms, or an alkoxy group having 1 to 10 carbon atoms, X² represents a hydrogen atom or a methyl group, A represents-(CH₂CH₂O)ₚ-, -CH₂CH(OH)-CH₂O-, -(CH₂)ₚ-O-, -CH₂CH(CH₂OR¹⁶)-O-, -CH₂CH(R¹⁶)-O-, or-CH₂(CH₂)_{q}COO-B-O-, R¹⁶ represents an alkyl group having 1 to 10 carbon atoms, B represents a methylene group, an ethylene group, or -CH₂CH(OH)CH₂-, p represents an integer of 1 to 20, and q represents 0 or 1).

3. The film mirror for solar light reflection according to claim 1 or 2, wherein the resin comprises an antioxidant group.

4. The film mirror for solar light reflection according to claim 3, wherein the antioxidant group is a HALS.

5. The film mirror for solar light reflection according to claim 4, wherein the HALS is a single side polymerization group-modifying type HALS.

6. The film mirror for solar light reflection according to any one of claims 1 to 5,
wherein the film mirror for solar light reflection comprises an acrylic layer and the acrylic layer is provided between the silver reflective layer and the protective layer.

7. The film mirror for solar light reflection according to claim 6, wherein no adhesive layer is provided between the silver reflective layer and the protective layer.

8. The film mirror for solar light reflection according to any one of claims 1 to 5, wherein the film mirror for solar light reflection comprises an acrylic layer and the protective layer is provided between the silver reflective layer and the acrylic layer.

9. The film mirror for solar light reflection according to any one of claims 1 to 8, wherein a total film thickness from a surface on the solar light incident side of the silver reflective layer to the outermost surface on the solar light incident side of the film mirror for solar light reflection is 5 µm or more and 125 µm or less.

10. A reflective device for solar power generation comprising the film mirror for solar light reflection according to any one of claims 1 to 9 and a holding member.
